# EUROPÄISCHE PATENTANMELDUNG

(11) **EP 3 646 922 A2**
(43) Veröffentlichungstag der Anmeldung: **06.05.2020**
(21) Anmeldenummer: 19205391.6
(22) Anmeldetag: 25.10.2019
(51) Int. Cl.: A62C 2/06, A62C 3/16, F16L 5/04, H02G 3/08

(54) **BRANDSCHUTZAUFBAU ODER BRANDSCHUTZSYSTEM ZUM UMHÜLLEN EINES KABELS ODER EINER LEITUNG UND ENTSPRECHENDE VERWENDUNGEN**

(30) Priorität: 29.10.2018 DE 102018127001; 03.06.2019 DE 102019114773
(71) Anmelder: Elze, Martin, 70173 Stuttgart (DE)
(72) Erfinder: Elze, Martin, 70173 Stuttgart (DE)
(74) Vertreter: Kuhnen & Wacker Patent- und Rechtsanwaltsbüro PartG mbB

(57) **Zusammenfassung**

Beansprucht wird ein Brandschutzaufbau, wenigstens aufweisend oder bestehend aus: eine erste Hülle, welche einen Innenraum umgibt oder umschließt, wobei der Innenraum geeignet ist, ein Kabel, eine Leitung oder ein Rohr oder Teilabschnitte derselben aufzunehmen; wobei die erste Hülle wenigstens ein Material enthält oder aus diesem besteht, wobei das wenigstens eine Material ausgewählt ist aus einer Gruppe, bestehend aus: einem Polyurethan-Schaum (PUR-Schaum), einem Polyisocyanurat-Schaum (PIR-Schaum), einem Polyurethan-/Polyisocyanurat-Schaum (PUR/PIR-Schaum), einem Elastomerschaum (FEF), einem Schaumstoff auf Basis eines synthetischen Kautschuks, einem Korkmaterial, und einem Aerogel; und eine zweite Hülle, welche die erste Hülle umgibt oder umschließt; wobei die zweite Hülle ein bei Wärmeeinwirkung expandierbares Material enthält oder aus diesem besteht.

## Beschreibung

### Technisches Gebiet und Aufgabe der Erfindung

Die vorliegende Erfindung betrifft einen Brandschutzaufbau bzw. ein Brandschutzsystem zum Umhüllen eines Kabels, einer Leitung oder eines Rohres (vorwiegend insbesondere Mobilfunk-, Telefon-, Hochfrequenz-, Daten-, Stromkabel, Fluidleitungen), wobei der Brandschutzaufbau die Gestalt einer Mehrzahl von Hüllen aufweist.

Im Rahmen der vorliegenden Erfindung wird unter einem Brandschutzmaterial ein Material verstanden, das geeignet ist, einen damit einlagig (oder mehrlagig) und vollständig umwickelten oder verpackten Gegenstand, wie beispielsweise ein Kabel, eine Leitung oder ein Konstruktionsteil eines Gebäudes, derart zu schützen, dass nach einer 90 oder vorzugsweise 120 minütigen Flammen- oder Hitzeeinwirkung (= Wärmeeinwirkung) von außen mit einer Temperatur von ca. 1.100 °C die Temperatur innerhalb des vom Brandschutzmaterial umgebenen Raums auf höchstens 180 °C, vorzugsweise höchstens 120 °C, vorzugsweise höchstens 100 °C, insbesondere höchstens 90 °C, ansteigt. Damit können die Bedingungen der DIN-Normen DIN 4102 Teil 11 und/oder DIN 4102 Teil 21 und/oder nach UL 1724/ASTM und/oder nach IEC 60331-21 vom erfindungsgemäßen Brandschutzmaterial erfüllt werden. Dabei erfüllt das erfindungsgemäße Brandschutzmaterial selbst dann die genannten Normen, wenn der mit dem erfindungsgemäßen Brandschutzmaterial zu schützende Gegenstand frei im Raum und nicht in einer Wand oder Decke verlegt oder angeordnet ist, so dass der zu schützende Gegenstand ohne Brandschutzmaßnahmen, wie das Einhüllen in das erfindungsgemäße Brandschutzmaterial, im Brandfall unmittelbar einer Flammeinwirkung ausgesetzt wäre.

Dasselbe, wie vorstehend für das erfindungsgemäße Brandschutzmaterial erläutert, gilt auch für den erfindungsgemäßen Brandschutzaufbau, das erfindungsgemäße Brandschutzsystem und die erfindungsgemäße Brandschutzkonstruktion oder Brandschutzfolie.

Im Rahmen der vorliegenden Erfindung wird unter "Hitzeeinwirkung" und "Wärmeeinwirkung" eine derartige Einwirkung einer Wärmequelle (z.B. Brand, Flammen, IR-Strahlung) auf ein Objekt (z.B. erfindungsgemäßer Brandschutzaufbau, erfindungsgemäßes Brandschutzsystem, erfindungsgemäße Brandschutzkonstruktion oder Brandschutzfolie) verstanden, dass die Oberflächentemperatur des Objekts auf wenigstens 800 °C, insbesondere wenigstens 1.000 °C ansteigt (bei Beflammung nach Temperaturkurve IEC, ETK (Einheitstemperaturzeitkurve, nach DIN 4102) oder UL 1724 (Outline of Investigation for Fire Tests for Electrical Circuit Protective Systems).

Erfindungsgemäß bedeutet der Begriff "Aufblähen" oder "Aufschäumen" des ersten Beschichtungsmaterials bei Hitzeeinwirkung eine Volumenzunahme von wenigstens 20 %, vorzugsweise wenigstens 50 %, insbesondere wenigstens 200 %, gegenüber dem Ausgangszustand (ersten Beschichtungsmaterial bei Raumtemperatur und vor der Hitzeeinwirkung) verstanden.

### Stand der Technik

Herkömmliche Brandschutzaufbauten zum Schutz von Kabeln oder Leitungen sind in Bezug auf die verschiedensten Anforderungen verbesserungswürdig. So weisen diese bisweilen keine ausreichenden Brandschutz, ausgedrückt in der unter vordefinierten Brandbedingungen und nach einer vorgegebenen Zeit maximal erreichten Oberflächentemperatur des zu schützenden Kabels oder der Leitung, welche/s vom Brandschutzaufbau geschützt werden soll, auf, insbesondere, wenn die maximal erreichte Oberflächentemperatur 120 °C nicht überschreiten darf. Darüber hinaus weisen herkömmliche Brandschutzaufbauten oftmals ein hohes Eigengewicht und ein großes Volumen auf, und sind kostenträchtig, schwierig zu montieren und sind oft nicht formfolgend.

### Aufgabe der Erfindung

Aufgabe der vorliegenden Erfindung ist es daher, einen verbesserten Brandschutzaufbau bereitzustellen, wobei der Brandschutzaufbau dem Schutz eines Kabels oder einer Leitung (insbesondere Mobilfunk-, Telefon-, Daten-, Strom-, Telekommunikations-, Starkstrom-, Schwachstrom-, Hochfrequenz-Kabel, Fluid-, Klima-Split-, Glasfaserhüllleitungen (mit Mehrfachbelegung), Kunststoffrohre), welches bzw. welche davon umhüllt ist, geeignet ist. Dabei umfasst der Schutz insbesondere Brandschutz bzw. den Schutz bei der Einwirkung erhöhter Temperaturen bzw. entsprechender Strahlung von außen.

### Zusammenfassung der Erfindung

Der offenbarte Brandschutzaufbau besteht aus einer Anordnung von Hüllen. Diese Hüllen sind jeweils vorzugsweise schlauchförmig ausgebildet und erstrecken sich jeweils vorzugsweise durchgehend (oder überlappend) entlang oder im Wesentlichen entlang einer Längsachse des Brandschutzaufbaus.

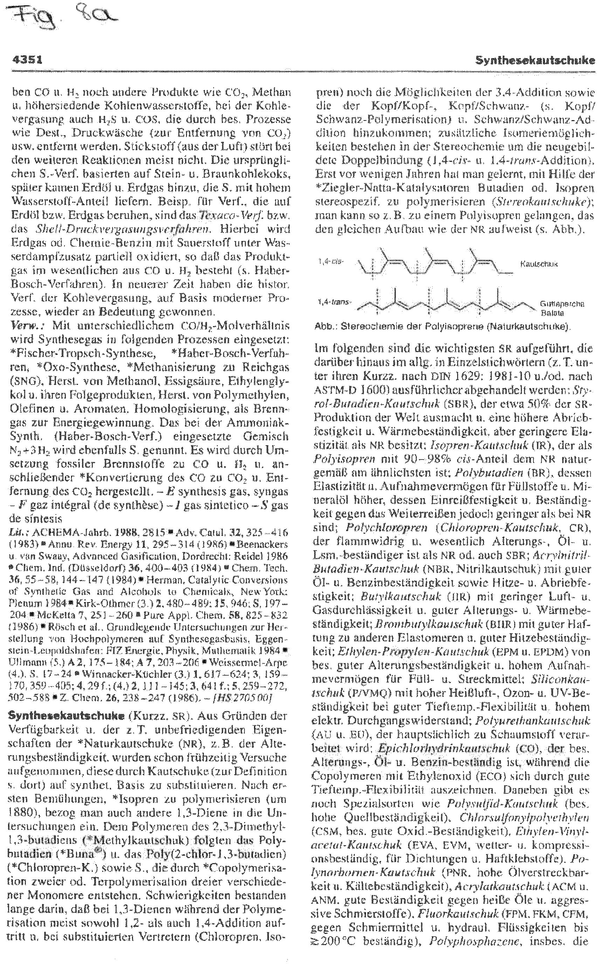

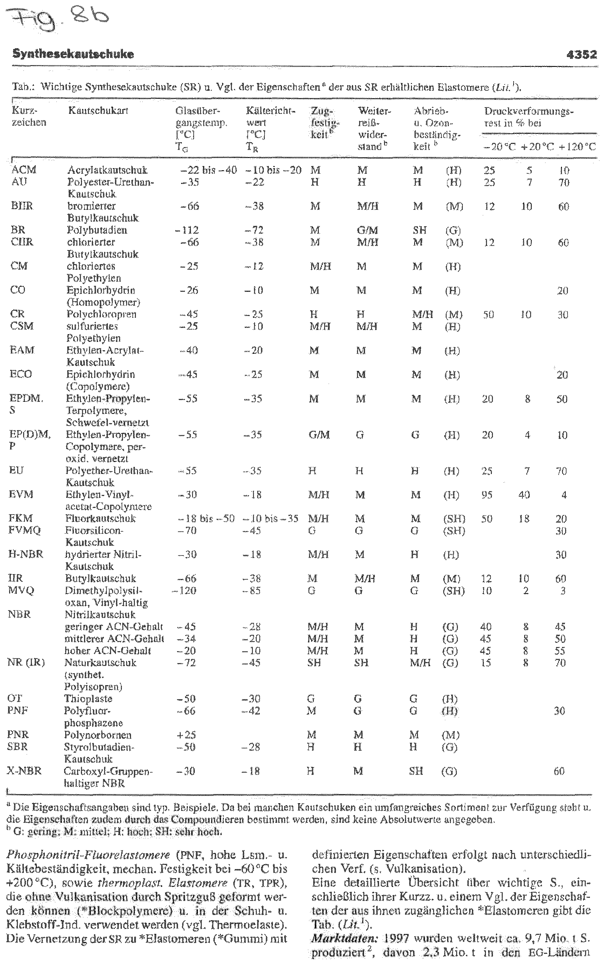

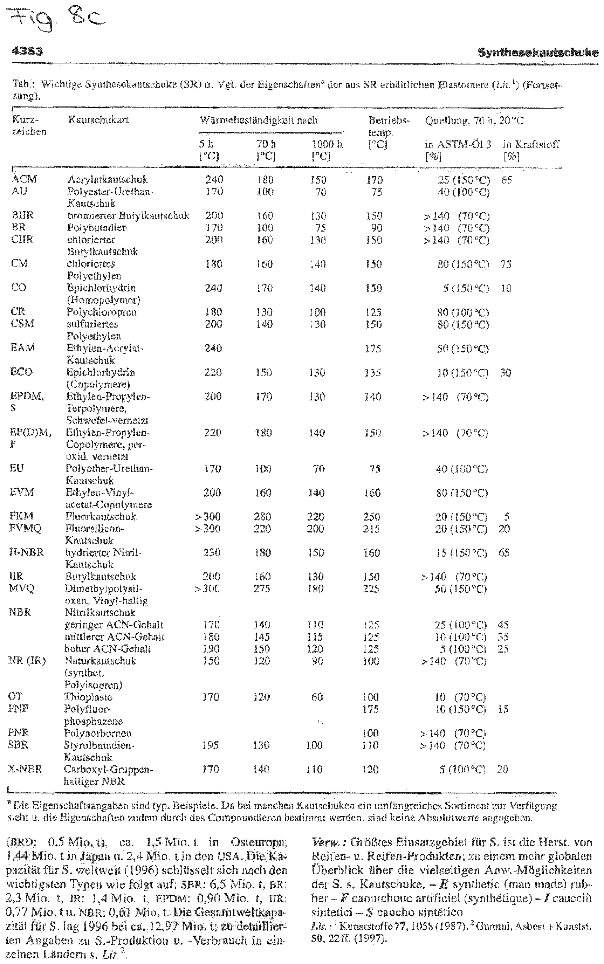

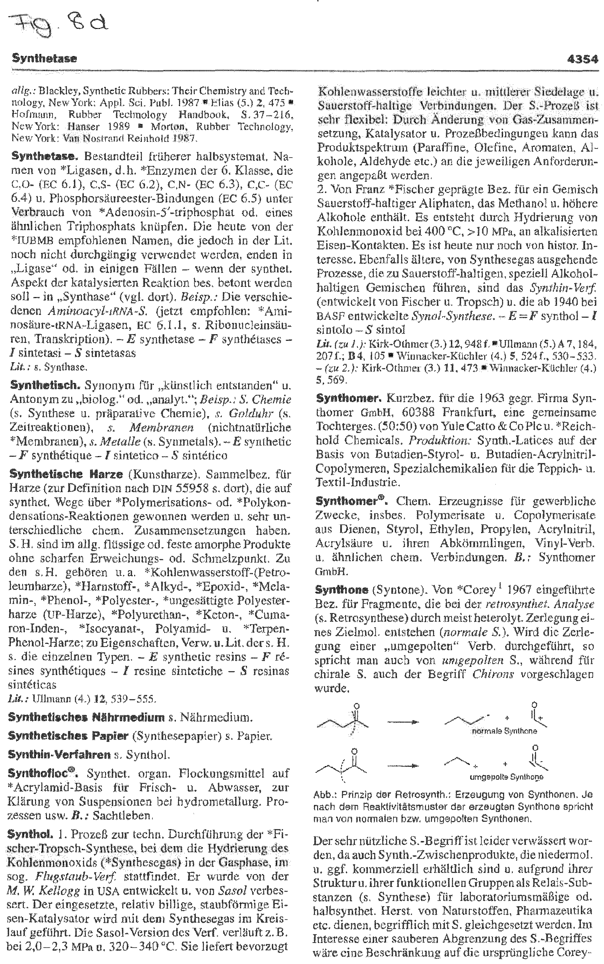

Der Grundaufbau des Brandschutzaufbaus ist dabei wie folgt: Eine erste Hülle (auch Isolierkern I genannt), d.h., eine erste Hülle von innen, umgibt bzw. umschließt einen Innenraum bzw. Hohlraum. Der Innenraum ist geeignet, ein Kabel, eine Leitung, ein Rohr oder dergleichen als das zu schützende Gut aufzunehmen. Der Brandschutzaufbau kann erfindungsgemäß auch die Gestalt eines Brandschutzformteils zum Umhüllen beliebiger Körper aufweisen. Der Innenraum weist vorzugsweise einen Durchmesser von 10 bis 100 mm, vorzugsweise 10 bis 80 mm, vorzugsweise 15 bis 50 mm, insbesondere 20 bis 35 mm, auf. Die erste Hülle enthält ein Material oder besteht aus diesem, wobei das Material ausgewählt ist aus einer Gruppe, bestehend aus: einem Polyurethan-Schaum (PUR-Schaum), vorzugsweise ein Polyurethan-Schaum gemäß DIN EN 13165, einem Polyisocyanurat-Schaum (PIR-Schaum), einem Polyurethan-/Polyisocyanurat-Schaum (PUR/PIR-Schaum), einem Elastomerschaum (FEF), einem Schaumstoff auf Basis eines synthetischen Kautschuks (= Synthesekautschuk; umfasst sind erfindungsgemäß wenigstens alle Kautschuke, welche in der Tabelle und im Artikel zum Stichwort "Synthesekautschuke" des Römpp Lexikons Chemie, Georg Thieme Verlag Stuttgart, 10. Auflage, 1998, Band 5, Seiten 4351 bis 4354, offenbart sind; vgl. Fig. 8a, 8b, 8c, und 8d), vorzugsweise einem geschlossenzelliger und/oder feinporiger Schaumstoff auf Basis eines synthetischen Kautschuks, bspw. Polybutadienkautschuk, einem Korkmaterial und einem Aerogel.

Definition Korkmaterial: Das erfindungsgemäße Korkmaterial enthält oder besteht aus Kork, vorzugsweise Naturkork oder ein verarbeiteter Kork, vorzugsweise ein (geblähtes) Korkgranulat (bspw. zu Rohrhülsen oder Halbschalen geformt), wobei jedoch vorzugsweise seine Eigenschaften der erfindungsgemäßen Anwendung als Material im erfindungsgemäßen Brandschutzaufbau nicht entgegenstehen. Dabei ist Kork (Phellem) ist ein sekundäres Abschlußgewebe an älteren Sproßachsen und Wurzeln, aber auch Wundverschluß beim Blattfall und lebenden Grundgewebe. Der Kork ist ein Gewebe von geschichtetem Bau, das aus regelmäßigen radial angeordneten Zellreihen besteht. Erscheinungsformen sind dünne, graue oder braune und glatte Korkhäute oder dicke, außen rissige Korkkrusten. Die Korkzellen dichten ihre Zellwände durch Auflagerung einer Suberin-Schicht (Suberin, Verkorkung) für den Wasser- und damit auch für den Gasdurchtritt (Transpiration) völlig ab. Um den Gasaustausch des Organinnern dennoch zu gewährleisten, werden im Korkgewebe einzelne, den Kork radial durchziehende Bereiche als Korkwarzen (Lenticellen) ausgebildet. Der Kork hat auch pilz- und bakterienabweisende Eigenschaften durch die in den Korkzellen gebildeten Gerbstoffderivate (Phlobaphene), die dem Kork auch die Braunfärbung verleihen. Aufgrund seiner Eigenschaften wird er zu Flaschenstopfen ("Korken"), Schwimmgürteln, Schwimmern für Netze, Isoliermaterial für Wärme und Schall und Zwischenlagen in Schuhen verarbeitet. Kork ist sehr haltbar, dehnbar, gas- und flüssigkeitsdicht und schlecht leitend für Schall und Wärme sowie vibrationsdämmend.

Definition Aerogel: Erfindungsgemäß wird unter einem Aerogel ein Festkörper verstanden, dessen Volumen zwischen 80 und 99,98 %, vorzugsweise zwischen 90 und 99,98 %, aus Poren besteht. Dabei enthält das Aerogel ein Metalloxid oder ein Halbmetalloxid, vorzugsweise ein Silikat, Siliciumdioxid und/oder Titandioxid, insbesondere ein Silikat oder Siliciumdioxid, oder besteht daraus. Beispielsweise kann das Aerogel nach dem Silicat-Aerogel-Verfahren nach Kistler, nach dem Sol-Gel-Prozess nach Teichner oder einem anderen bekannten Verfahren hergestellt werden. Ein Beispiel für ein erfindungsgemäßes Aerogel wird auch unter der Bezeichnung "ArmaGel HT" von der Fa. Armacell GmbH, Münster/Deutschland, vertrieben. Alternative Anbieter von geeigneten Aerogelen sind Aspen Aerogels, Inc., Northborough, MA/USA (z.B. Pyrogel XTE oder Pyrogel HPS), Stadur Produktions GmbH & Co. KG, Hammah/Deutschland oder Stadur-Süd GmbH, Pliezhausen/Deutschland (z.B. Pyrogel oder Spaceloft).

Die erste Hülle weist vorzugsweise eine Dicke von wenigstens 5 mm, vorzugsweise wenigstens 8 mm, vorzugsweise wenigstens 10 mm, vorzugsweise wenigstens 12 mm, vorzugsweise wenigstens 15 mm, insbesondere wenigstens 20 mm, und vorzugsweise höchstens 30 mm, auf.

Eine zweite Hülle (auch Isolierkern II genannt) d.h., eine zweite Hülle von innen, umgibt bzw. umschließt die erste Hülle (Isolierkern I). Die zweite Hülle enthält ein bei Wärmeeinwirkung expandierbares Material oder besteht aus diesem Material. Erfindungsgemäß kann das bei Wärmeeinwirkung expandierbare Material vorzugsweise ein intumeszentes Material, insbesondere ein intumeszenter Baustoff, oder ein Dämmschichtbildner sein. Alternativ bzw. als besondere Ausführungsform der Erfindung kann die zweite Hülle in Gestalt einer Beschichtung der ersten Hülle ausgebildet sein. Das bei Wärmeeinwirkung expandierbare Material kann vorzugsweise Blähgraphit oder vorzugsweise eine Kombination aus einem ersten Beschichtungsmaterial und einem Primer, oder vorzugsweise eine Kombination aus einem ersten Beschichtungsmaterial und einem zweiten Beschichtungsmaterial und einem Primer sein. Hierbei ist das erste Beschichtungsmaterial identisch mit dem ersten Beschichtungsmaterial, welches in der deutschen Patentanmeldung Nr. 10 2017 108 976.4 bzw. nachstehend im Anhang dieser Anmeldung offenbart ist. Ferner ist das zweite Beschichtungsmaterial identisch mit dem zweiten Beschichtungsmaterial, welches in der deutschen Patentanmeldung Nr. 10 2017 108 976.4 bzw. nachstehend im Anhang dieser Anmeldung offenbart ist. Ferner ist der Primer identisch mit dem Primer, welcher in der deutschen Patentanmeldung Nr. 10 2017 108 976.4 bzw. nachstehend im Anhang dieser Anmeldung offenbart ist. Die vollständige Offenbarung der deutschen Patentanmeldung Nr. 10 2017 108 976.4 ist nachstehend wiedergegeben. Die Dicke der zweiten Hülle kann vorzugsweise nach den Erfordernissen der Wärmedämmverordnung gewählt werden. Als ein beispielhaftes Verfahren zur Herstellung des erfindungsgemäßen Brandschutzaufbaus, insbesondere ein Aufbring- oder Beschichtungsverfahren, kann das in der deutschen Patentanmeldung Nr. 10 2017 108 976.4 beschriebene "Verfahren zur Herstellung eines Brandschutzmaterials" (insb. dortige Ansprüche 5 und 6 und zugehörige Beschreibung) und seiner vorteilhaften Ausführungsformen eingesetzt werden, wobei die vorstehend beschriebene erste Hülle dem Trägermaterial im Verfahren entspricht.

In einer besonders bevorzugten Ausführungsform der Erfindung enthält die erste Hülle ein Aerogel oder besteht daraus. Ferner kann hierbei die zweite Hülle in Gestalt einer Beschichtung der ersten Hülle (außen) ausgebildet. Hierbei kann die zweite Hülle vorzugsweise eine Kombination aus dem ersten Beschichtungsmaterial und dem Primer, oder eine Kombination aus dem ersten Beschichtungsmaterial und dem zweiten Beschichtungsmaterial und dem Primer wie vorstehend definiert, sein. Der besondere Vorteil dieser Ausführungsform ist, dass die zweite Hülle nicht als eigenständige Hülle ausgebildet sein muss, aber kann, sondern herstellungsseitig mit der ersten Hülle fest verbunden werden kann. Hierdurch ist die Anzahl der montageseitig zu handhabenden Teile bei der Installation des erfindungsgemäßen Brandschutzaufbaus verringert und Fehler bei der Montage werden vermieden. Als ein beispielhaftes Verfahren zur Herstellung dieser Ausführungsform kann das in der deutschen Patentanmeldung Nr. 10 2017 108 976.4 beschriebene "Verfahren zur Herstellung eines Brandschutzmaterials" (insb. dortiger Anspruch 6 und zugehörige Beschreibung), wobei die vorstehend beschriebene erste Hülle dem Trägermaterial im Verfahren entspricht.

In einer weiteren vorteilhaften und besonders bevorzugten Abwandlung der vorstehend beschriebenen Ausführungsform ist die erste Hülle, welche ein Aerogel oder besteht daraus, nicht nur auf der Außenseite, sondern zudem auch auf deren Innenseite mit dem Material der zweiten Hülle (eine Kombination aus dem ersten Beschichtungsmaterial und dem Primer, oder eine Kombination aus dem ersten Beschichtungsmaterial und dem zweiten Beschichtungsmaterial und dem Primer wie vorstehend definiert) beschichtet. Die beidseitige Beschichtung hat zu einem eine nochmals verbesserte Brandschutzwirkung auf das innenliegende, zu schützende Gut zur Folge. Zu anderen wird eine mögliche Freisetzung von Partikeln (Staub) aus dem Aerogel durch die beidseitige Beschichtung erfolgreich vermieden. Hierdurch wird die Verarbeitbarkeit verbessert und die Arbeitssicherheit und der Gesundheitsschutz erhöht. Des Weiteren kann durch die beschriebene Innenbeschichtung des Aerogels ein im Innenraum des Brandschutzaufbaus befindliches, brennendes Kabel oder eine im Innenraum brennende Leitung durch das Aufblähen des Materials der Innenbeschichtung eingedämmt oder sogar gelöscht werden. Das ein- (innen oder außen) oder beidseitige (innen und außen) Aufbringen des Materials der zweiten Hülle auf die Innen- und/oder Außenseite der ersten Hülle kann insbesondere mit dem in der deutschen Patentanmeldung Nr. 10 2017 108 976.4 beschriebenen "Verfahren zur Herstellung eines Brandschutzmaterials" (insb. dortige Ansprüche 5 und 6 und zugehörige Beschreibung) durchgeführt werden.

Optional umgibt bzw. umschließt eine dritte Hülle (auch Sichthülle oder Außenhülle genannt), d.h., eine dritte Hülle von innen, die zweite Hülle. Die erste Hülle, die zweite Hülle und/oder die dritte Hülle sind jeweils vorzugsweise durchgehend entlang oder im Wesentlichen entlang einer Längsachse des Brandschutzaufbaus ausgebildet. Vorzugsweise sind alle Hüllen des erfindungsgemäßen Brandschutzaufbaus durchgehend entlang oder im Wesentlichen entlang einer Längsachse des Brandschutzaufbaus ausgebildet. Dabei kann ein durchgehender Verlauf beispielsweise durch eine in Längsrichtung ununterbrochene Hülle oder durch Überlappung von einzelnen Materialabschnitten (beispielsweise mittels Verlängerung durch Muffen) der Hülle erzielt werden. Erfindungsgemäß enthält die dritte Hülle ein Brandschutzmaterial oder besteht aus diesem. Hierbei ist das Brandschutzmaterial identisch mit dem Brandschutzmaterial, welches in der deutschen Patentanmeldung Nr. 10 2017 108 976.4 bzw. nachstehend im Anhang dieser Anmeldung offenbart ist. Die dritte Hülle kann nach jedem den Fachmann bekannten Verfahren in den erfindungsgemäßen Brandschutzaufbau eingebaut oder auf die zweite Hülle aufgebracht werden.

Im Rahmen der vorliegenden Erfindung umfasst der erfindungsgemäße Brandschutzaufbau (einschließlich aller seiner Abwandlungen) alle Kombinationen mit jeweils allen Ausführungsformen und Abwandlungen des Brandschutzmaterials, welches in der deutschen Patentanmeldung Nr. 10 2017 108 976.4 bzw. nachstehend im Anhang dieser Anmeldung offenbart ist, insbesondere mit den als bevorzugt oder besonders bevorzugt bzw. "insbesondere" gekennzeichneten Ausführungsformen.

Erfindungsgemäß erfüllt die erste Hülle (Isolierkern I) des erfindungsgemäßen Brandschutzaufbaus eine Isolierfunktion, d.h., Wärmedämmwirkung, während die zweite und/oder dritte Hülle eine Temperaturabwehrfunktion erfüllt, d.h., die zweite und/oder dritte Hülle schäumt oder bläht auf oder dehnt sich aus in radialer Richtung einwärts und/oder auswärts bei Wärmeeinwirkung von außen, was zu einer Volumenzunahme (Verfüllung der Zwischenräume durch Schaumbildung) durch eine aufschäumende Wirkung bzw. Volumenzunahme des Hüllenmaterials erzielt wird. Durch die Volumenzunahme wird die Dämmwirkung verbessert und die weiter innen liegende erste Hülle besser geschützt. Damit wird letztlich das zu schützende Kabel oder die zu schützende Leitung noch besser vor Brandeinwirkung geschützt.

Gestalt der Hüllen: (im Wesentlichen) schlauchförmige Gestalt mit variabler Querschnittgestalt (rund, elliptisch, rechteckig, quadratisch, dreieckig, mehreckig oder trapezförmig); die Hüllen sind entlang der Längsachse/in Längsrichtung jeweils durchgehend, wenigstens überlappend, ausgebildet (von Montageschlitz in Längsrichtung abgesehen); die Hüllen sind vorzugsweise koaxial oder im Wesentlichen koaxial zur Längsachse des Brandschutzaufbaus angeordnet. Ist der erfindungsgemäße Brandschutzaufbau in Gestalt eines Brandschutzformteils ausgebildet, gilt ein entsprechender Aufbau der ersten, zweiten und gegebenenfalls dritten Hülle von innen nach außen um das zu schützende Gut.

Insgesamt erzielen die erfindungsgemäßen Brandschutzaufbauten eine hohe Brandschutzwirkung auf, wobei die Oberflächentemperatur eines damit geschützten Kabels oder einer damit geschützten Leitung von unter 120 °C, vorzugsweise unter 100 °C, nach 90 min bleibt (Brandschutzprüfung in Anlehnung an IEC 60331-21: 1999-04). Dabei wurde ein in den erfindungsgemäßen Brandschutzaufbau eingebrachte Kabel über einen Zeitraum von 90 Minuten bzw. bis zum Kurzschluss mit einem Brenner entsprechend IEC 60331-11 beflammt. Die Temperatur der Flamme entsprach ebenfalls vorgenannter Norm. Der Prüfung wurde in der Box entsprechend IEC 61034-1 durchgeführt. Alle weiteren Vorgaben der o. g. Norm wurden ebenfalls eingehalten. Spätestens nach 90 Minuten wurde der Brenner abgestellt. Der erfindungsgemäße Brandschutzaufbau erfüllt vorzugsweise mindestens 90 Minuten Feuerwiderstand. Wird als das Material für die erste Hülle ein Aerogel verwendet, so ist die Brandschutzwirkung besonders hoch. So blieb in diesem Fall die Oberflächentemperatur eines mit einem solchen, erfindungsgemäßen Brandschutzaufbau geschützten Kabels oder einer damit geschützten Leitung nach 90 min sogar unter 90 °C (Brandschutzprüfung in Anlehnung an IEC 60331-21: 1999-04, wie vorstehend beschrieben). Dem Fachmann waren Aerogele bisher in Zusammenhang mit Brandschutz im Sinne der vorliegenden Erfindung nicht bekannt. So wird erfindungsgemäß erstmals ein Aerogel zu Brandschutzzwecken bzw. in einem Brandschutzaufbau verwendet, wobei bezüglich der Auslegung des Begriffs "Brandschutz" und der hiermit verbundenen Anforderungen auf die vorstehende Definition des Brandschutzmaterials verwiesen wird. So ist die Brandschutzwirkung des resultierenden Brandschutzaufbaus dann besonders hoch, wenn das Aerogel als erste Hülle mit der vorstehend beschriebenen zweiten Hülle kombiniert wird. Dabei wird die hervorragende Isolierwirkung des Aerogels bei Brand- oder Temperatureinwirkung durch die hohe Brandschutzwirkung der zweiten Hülle außergewöhnlich lange aufrechterhalten, so dass sich die Wirkungen der beiden Hülle synergistisch ergänzen und gegenseitig verstärken. Darüber hinaus wird der Schutz des Aerogels durch die zweite Hülle oder einer entsprechenden Außenbeschichtung dahingehend verbessert, dass das nach vorherrschender Meinung nicht UV-beständige Aerogel zudem von der zweiten Hülle bzw. Beschichtung lichtdicht geschützt werden kann.

Des Weiteren hat als Aerogel als das Material für die erste Hülle den Vorteil, dass dieses wegen seiner ausreichenden mechanischen Eigenstabilität auf eine zusätzliche Tragkonstruktion verzichtet werden kann. Hierdurch vereinfacht und verbilligt sich der Gesamtaufbau des erfindungsgemäßen Brandschutzaufbaus.

Darüber hinaus ist der erfindungsgemäße Brandschutzaufbau formfolgend, was Brandschutzaufbauten beispielsweise in Gestalt von Brandschutzkanälen nicht sind. Ferner zeichnet sich der erfindungsgemäße Brandschutzaufbau durch eine vergleichsweise kompakte Bauweise bzw. geringes Volumen, eine geringe Masse und eine einfache Montage aus. Auch ist eine nachträgliche Montage an bestehenden Kabeln oder Leitungen problemlos möglich. Zudem ist der erfindungsgemäße Brandschutzaufbau aufgrund seines einfachen Aufbaus kostengünstig.

Der erfindungsgemäße Brandschutzaufbau weist somit folgende Merkmale auf:
Brandschutzaufbau oder Brandschutzsystem, wenigstens aufweisend oder bestehend aus:
eine erste Hülle;
wobei die erste Hülle einen Innenraum umgibt oder umschließt,
wobei der Innenraum geeignet ist, ein Kabel, eine Leitung oder ein Rohr oder Teilabschnitte derselben aufzunehmen;
wobei die erste Hülle wenigstens ein Material enthält oder aus diesem besteht, wobei das wenigstens eine Material ausgewählt ist aus einer Gruppe, bestehend aus: einem Polyurethan-Schaum (PUR-Schaum), vorzugsweise ein Polyurethan-Schaum gemäß DIN EN 13165, einem Polyisocyanurat-Schaum (PIR-Schaum), einem Polyurethan-/Polyisocyanurat-Schaum (PUR/PIR-Schaum), einem Elastomerschaum (FEF), einem Schaumstoff auf Basis eines synthetischen Kautschuks (= Synthesekautschuk), vorzugsweise einem geschlossenzelliger und/oder feinporiger Schaumstoff auf Basis eines synthetischen Kautschuks, bspw. Polybutadienkautschuk, einem Korkmaterial, und einem Aerogel; und
eine zweite Hülle;
wobei die zweite Hülle die erste Hülle umgibt oder umschließt;
wobei die zweite Hülle ein bei Wärmeeinwirkung expandierbares Material enthält oder aus diesen besteht;
wobei das bei Wärmeeinwirkung expandierbare Material, vorzugsweise Blähgraphit oder vorzugsweise eine Kombination aus einem ersten Beschichtungsmaterial und einem Primer, oder vorzugsweise eine Kombination aus einem ersten Beschichtungsmaterial und einem zweiten Beschichtungsmaterial und einem Primer ist. Hierbei ist das erste Beschichtungsmaterial identisch mit dem ersten Beschichtungsmaterial, welches in der deutschen Patentanmeldung Nr. 10 2017 108 976.4 bzw. nachstehend im Anhang dieser Anmeldung offenbart ist. Ferner ist das zweite Beschichtungsmaterial identisch mit dem zweiten Beschichtungsmaterial, welches in der deutschen Patentanmeldung Nr. 10 2017 108 976.4 bzw. nachstehend im Anhang dieser Anmeldung offenbart ist. Ferner ist der Primer identisch mit dem Primer, welcher in der deutschen Patentanmeldung Nr. 10 2017 108 976.4 bzw. nachstehend im Anhang dieser Anmeldung offenbart ist. Die vollständige Offenbarung der deutschen Patentanmeldung Nr. 10 2017 108 976.4 ist nachstehend wiedergegeben.

Alternativ hierzu kann der erfindungsgemäße Brandschutzaufbau folgende Merkmale aufweisen:
Brandschutzaufbau, wenigstens aufweisend oder bestehend aus:
eine erste Hülle;
wobei die erste Hülle einen Innenraum umgibt oder umschließt,
wobei der Innenraum geeignet ist, ein Kabel, eine Leitung oder ein Rohr oder Teilabschnitte derselben aufzunehmen;
wobei die erste Hülle wenigstens ein Material enthält oder aus diesem besteht, wobei das wenigstens eine Material ausgewählt ist aus einer Gruppe, bestehend aus: einem Polyurethan-Schaum (PUR-Schaum), einem Polyisocyanurat-Schaum (PIR-Schaum), einem Polyurethan-/Polyisocyanurat-Schaum (PUR/PIR-Schaum), einem Elastomerschaum (FEF), einem Schaumstoff auf Basis eines synthetischen Kautschuks, einem Korkmaterial, und einem Aerogel; und
wobei die erste Hülle auf deren äußerer Umfangsfläche oder auf deren innerer und äußerer Umfangsfläche eine Beschichtung aufweist, wobei die Beschichtung eine Kombination aus einem ersten Beschichtungsmaterial und dem Primer, oder eine Kombination aus dem ersten Beschichtungsmaterial und einem zweiten Beschichtungsmaterial und dem Primer enthält oder aus einer dieser Kombinationen besteht; und
wobei die Beschichtung vorzugsweise unmittelbar auf der äußeren Umfangsfläche oder unmittelbar auf der inneren und äußeren Umfangsfläche der ersten Hülle aufgebracht ist.

Diese spezielle Abwandlung des erfindungsgemäßen Brandschutzaufbaus hat den Vorteil eines sehr kompakten Aufbaus, bei dem alle Funktionen in bzw. an der ersten Hülle konzentriert werden. Da dieser Aufbau auf eine separate zweite oder sogar dritte Hülle verzichten kann, vereinfacht sich zudem auch dessen Montage wesentlich. Darüber hinaus wird eine mögliche Abgabe von Staub oder Partikeln des Materials der ersten Hülle durch das Vorsehen einer Beschichtung auf der äußeren und/oder inneren Umfangsfläche der ersten Hülle beschränkt oder sogar vollständig vermieden, wodurch sich die Arbeitssicherheit und Umweltfreundlichkeit erhöht.

Im Rahmen der vorliegenden Erfindung umfasst der erfindungsgemäße Brandschutzaufbau (einschließlich aller seiner Abwandlungen) alle Kombinationen mit jeweils allen Ausführungsformen und Abwandlungen des ersten Beschichtungsmaterials, des zweiten Beschichtungsmaterials und des Primers, wie sie in der deutschen Patentanmeldung Nr. 10 2017 108 976.4 bzw. nachstehend im Anhang dieser Anmeldung offenbart sind, insbesondere mit den als bevorzugt oder besonders bevorzugt bzw. "insbesondere" gekennzeichneten Ausführungsformen.

Ferner wird die erfindungsgemäße Verwendung offenbart:
Verwendung einer ersten Hülle und einer zweite Hülle in einem Brandschutzaufbau oder Brandschutzsystem, vorzugsweise Brandschutzformteil, zur Verbesserung der Wärmeschutzwirkung;
wobei die erste Hülle einen Innenraum umgibt oder umschließt,
wobei der Innenraum geeignet ist, ein Kabel, eine Leitung oder ein Rohr oder Teilabschnitte derselben aufzunehmen;
wobei die erste Hülle wenigstens ein Material enthält oder aus diesem besteht, wobei das wenigstens eine Material ausgewählt ist aus einer Gruppe, bestehend aus: einem Polyurethan-Schaum (PUR-Schaum), vorzugsweise ein Polyurethan-Schaum gemäß DIN EN 13165, einem Polyisocyanurat-Schaum (PIR-Schaum), einem Polyurethan- oder Polyisocyanurat-Schaum (PUR/PIR-Schaum), einem Elastomerschaum (FEF), einem Schaumstoff auf Basis eines synthetischen Kautschuks (= Synthesekautschuk), vorzugsweise einem geschlossenzelliger und/oder feinporiger Schaumstoff auf Basis eines synthetischen Kautschuks, bspw. Polybutadienkautschuk, einem Korkmaterial, und einem Aerogel; und
wobei die zweite Hülle die erste Hülle umgibt oder umschließt;
wobei die zweite Hülle ein bei Wärmeeinwirkung expandierbares Material enthält oder aus diesen besteht;
wobei das bei Wärmeeinwirkung expandierbare Material vorzugsweise Blähgraphit oder vorzugsweise eine Kombination aus einem ersten Beschichtungsmaterial und einem Primer, oder vorzugsweise eine Kombination aus dem ersten Beschichtungsmaterial und einem zweiten Beschichtungsmaterial und dem Primer ist. Hierbei ist das erste Beschichtungsmaterial identisch mit dem ersten Beschichtungsmaterial, welches in der deutschen Patentanmeldung Nr. 10 2017 108 976.4 bzw. nachstehend im Anhang dieser Anmeldung offenbart ist. Ferner ist das zweite Beschichtungsmaterial identisch mit dem zweiten Beschichtungsmaterial, welches in der deutschen Patentanmeldung Nr. 10 2017 108 976.4 bzw. nachstehend im Anhang dieser Anmeldung offenbart ist. Ferner ist der Primer identisch mit dem Primer, welcher in der deutschen Patentanmeldung Nr. 10 2017 108 976.4 bzw. nachstehend im Anhang dieser Anmeldung offenbart ist. Die vollständige Offenbarung der deutschen Patentanmeldung Nr. 10 2017 108 976.4 ist nachstehend wiedergegeben. In einer besonders bevorzugten Ausführungsform der vorstehend beschriebenen Verwendung enthält die erste Hülle Aerogel oder besteht aus diesem.

Im Rahmen der vorliegenden Erfindung umfasst die erfindungsgemäße Verwendung (einschließlich aller ihrer Abwandlungen) alle Kombinationen mit jeweils allen Ausführungsformen und Abwandlungen des ersten Beschichtungsmaterials, des zweiten Beschichtungsmaterials und des Primers, wie sie in der deutschen Patentanmeldung Nr. 10 2017 108 976.4 bzw. nachstehend im Anhang dieser Anmeldung offenbart sind, insbesondere mit den als bevorzugt oder besonders bevorzugt bzw. "insbesondere" gekennzeichneten Ausführungsformen.

Verwendung eines Polyurethan-Schaums (PUR-Schaum), vorzugsweise eines Polyurethan-Schaums gemäß DIN EN 13165, eines Polyisocyanurat-Schaums (PIR-Schaum), eines Polyurethan- oder Polyisocyanurat-Schaums (PUR/PIR-Schaum), eines Elastomerschaums (FEF), eines Schaumstoffs auf Basis eines synthetischen Kautschuks (= Synthesekautschuk), vorzugsweise eines geschlossenzelligen und/oder feinporigen Schaumstoffs auf Basis eines synthetischen Kautschuks, bspw. Polybutadienkautschuk, eines Korkmaterials, oder eines Aerogels; und
eines bei Wärmeeinwirkung expandierbaren Materials in einem Brandschutzaufbau oder Brandschutzsystem zur Verbesserung der Wärmeschutzwirkung;
wobei das bei Wärmeeinwirkung expandierbare Material vorzugsweise Blähgraphit oder vorzugsweise eine Kombination aus einem ersten Beschichtungsmaterial und einem Primer, oder vorzugsweise eine Kombination aus dem ersten Beschichtungsmaterial und einem zweiten Beschichtungsmaterial und dem Primer ist. Hierbei ist das erste Beschichtungsmaterial identisch mit dem ersten Beschichtungsmaterial, welches in der deutschen Patentanmeldung Nr. 10 2017 108 976.4 bzw. nachstehend im Anhang dieser Anmeldung offenbart ist. Ferner ist das zweite Beschichtungsmaterial identisch mit dem zweiten Beschichtungsmaterial, welches in der deutschen Patentanmeldung Nr. 10 2017 108 976.4 bzw. nachstehend im Anhang dieser Anmeldung offenbart ist. Ferner ist der Primer identisch mit dem Primer, welcher in der deutschen Patentanmeldung Nr. 10 2017 108 976.4 bzw. nachstehend im Anhang dieser Anmeldung offenbart ist. Die vollständige Offenbarung der deutschen Patentanmeldung Nr. 10 2017 108 976.4 ist nachstehend wiedergegeben. Bei der vorstehend beschriebenen Verwendung ist Verwendung eines Aerogels in Kombination mit dem bei Wärmeeinwirkung expandierbaren Materials besonders bevorzugt.

Im Rahmen der vorliegenden Erfindung umfasst die erfindungsgemäße Verwendung (einschließlich aller ihrer Abwandlungen) alle Kombinationen mit jeweils allen Ausführungsformen und Abwandlungen des ersten Beschichtungsmaterials, des zweiten Beschichtungsmaterials und des Primers, wie sie in der deutschen Patentanmeldung Nr. 10 2017 108 976.4 bzw. nachstehend im Anhang dieser Anmeldung offenbart sind, insbesondere mit den als bevorzugt oder besonders bevorzugt bzw. "insbesondere" gekennzeichneten Ausführungsformen.

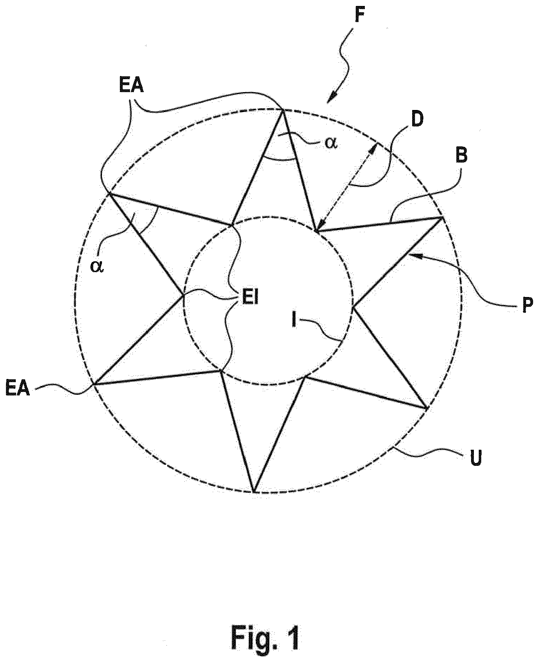

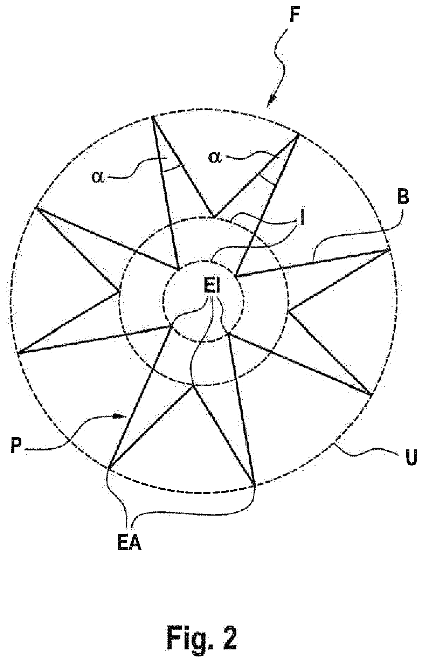

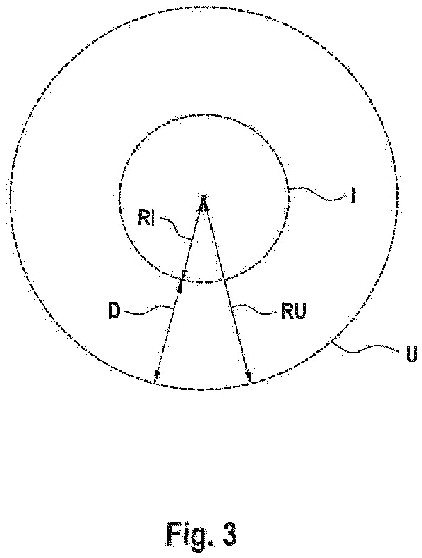

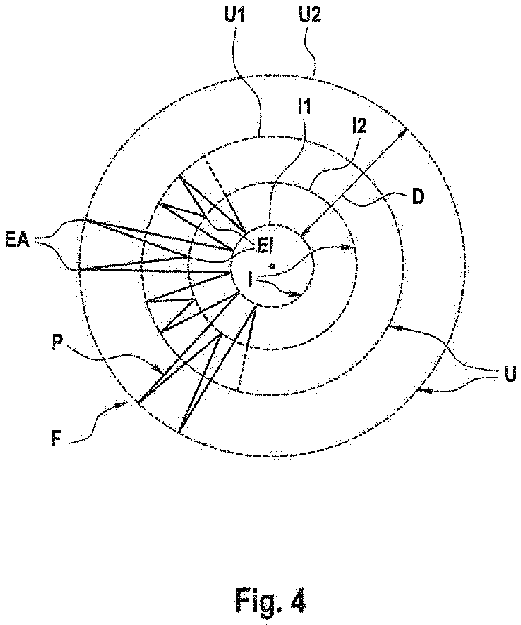

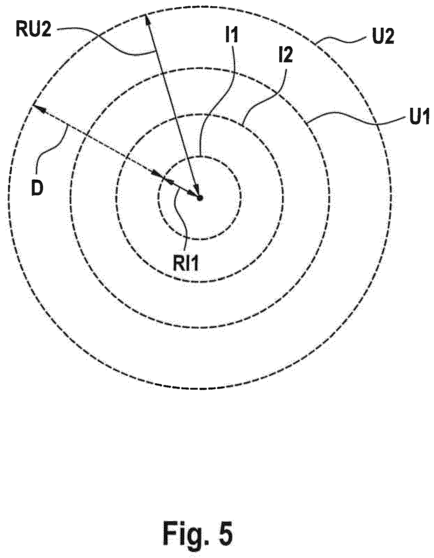

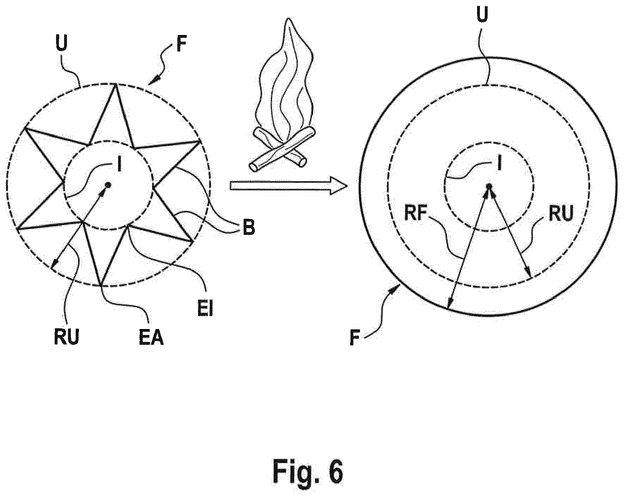

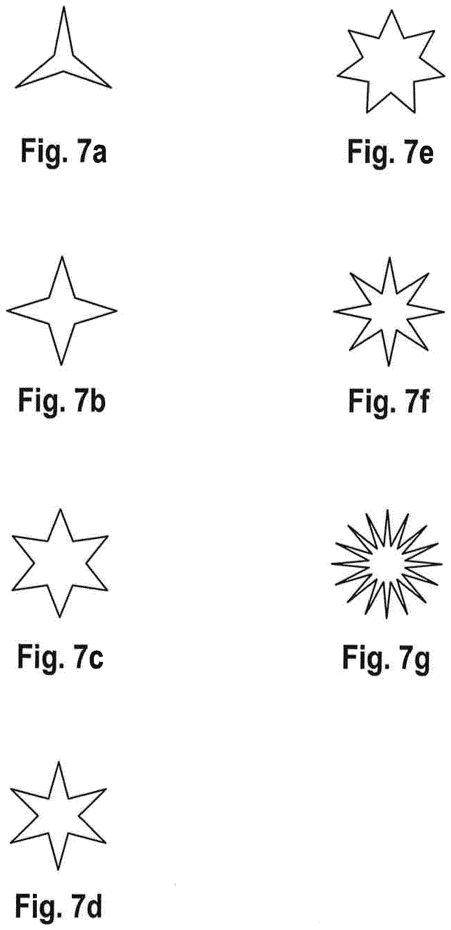

Beispielhafte Varianten des erfindungsgemäßen Brandschutzaufbaus bzw. des erfindungsgemäßen Brandschutzsystems sind nachfolgend dargestellt:
Variante 1: Brandschutzaufbau oder Brandschutzsystem, aufweisend oder bestehend aus (von innen nach außen):
   eine erste Hülle (auch Isolierkern I genannt);
   wobei die erste Hülle einen Innenraum umgibt oder umschließt,
   wobei der Innenraum geeignet ist, ein Kabel, eine Leitung oder ein Rohr oder Teilabschnitte derselben aufzunehmen;
   wobei die erste Hülle einen Polyurethan-Schaum (PUR-Schaum), vorzugsweise ein Polyurethan-Schaum gemäß DIN EN 13165, oder einen Polyisocyanurat-Schaum (PIR-Schaum) oder einen Polyurethan- oder Polyisocyanurat-Schaum (PUR/PIR-Schaum) oder einen Elastomerschaum (FEF) oder einen Schaumstoff auf Basis eines synthetischen Kautschuks (= Synthesekautschuk; umfasst sind erfindungsgemäß wenigstens alle Kautschuke, welche in der Tabelle und im Artikel zum Stichwort "Synthesekautschuke" des Römpp Lexikons Chemie, Georg Thieme Verlag Stuttgart, 10. Auflage, 1998, Band 5, Seiten 4351 bis 4354, offenbart sind; vgl. Fig. 8a, 8b, 8c, und 8d), vorzugsweise ein geschlossenzelliger und/oder feinporiger Schaumstoff auf Basis eines synthetischen Kautschuks, bspw. Polybutadienkautschuk, enthält oder daraus besteht;
   eine zweite Hülle (auch Isolierkern II genannt)
   wobei die zweite Hülle die erste Hülle umgibt oder umschließt;
   wobei die zweite Hülle ein erstes Trägermaterial und ein bei Wärmeeinwirkung expandierbares Material enthält oder aus diesen besteht;
   wobei das erste Trägermaterial das bei Wärmeeinwirkung expandierbare Material trägt oder hält oder stützt;
   wobei das bei Wärmeeinwirkung expandierbare Material auf der inneren Umfangsfläche des ersten Trägermaterials, auf der äußeren Umfangsfläche des ersten Trägermaterials, oder sowohl auf der inneren Umfangsfläche und der äußeren Umfangsfläche des ersten Trägermaterials aufgebracht ist; und/oder wobei das bei Wärmeeinwirkung expandierbare Material im ersten Trägermaterial enthalten oder eingearbeitet ist;
   wobei das erstes Trägermaterial vorzugsweise ein Silicium-Gewebe, ein Silikat-Gewebe, ein Fibersilikat, vorzugsweise ein Calciumsilikat und/oder ein Siliziumsilikat, eine Folie, Steinwolle, ein Wollprodukt, vorzugsweise in Gestalt eines geflochtenen Garns, eines Gewebes, eines geflochtenen Zopfes oder einer Gitterstruktur, ist;
   wobei das bei Wärmeeinwirkung expandierbare Material vorzugsweise Blähgraphit oder eine Kombination aus einem ersten Beschichtungsmaterial und einem Primer, oder eine Kombination aus einem ersten Beschichtungsmaterial und einem zweiten Beschichtungsmaterial und einem Primer ist; wobei das erste Beschichtungsmaterial identisch mit dem ersten Beschichtungsmaterial ist, welches in der deutschen Patentanmeldung Nr. 10 2017 108 976.4 bzw. nachstehend im Anhang dieser Anmeldung offenbart ist; wobei das zweite Beschichtungsmaterial identisch mit dem zweiten Beschichtungsmaterial ist, welches in der deutschen Patentanmeldung Nr. 10 2017 108 976.4 bzw. nachstehend im Anhang dieser Anmeldung offenbart ist; wobei der Primer identisch mit dem Primer ist, welcher in der deutschen Patentanmeldung Nr. 10 2017 108 976.4 bzw. nachstehend im Anhang dieser Anmeldung offenbart ist; und
   eine dritte Hülle (auch Isolierkern III genannt, fungiert ggf. als Außenhülle oder Sichtfläche),
   wobei die dritte Hülle die zweite Hülle umgibt oder umschließt;
   wobei die dritte Hülle ein Brandschutzmaterial enthält oder aus diesem besteht;
   wobei das Brandschutzmaterial identisch mit dem Brandschutzmaterial ist, welches in der deutschen Patentanmeldung Nr. 10 2017 108 976.4 bzw. nachstehend im Anhang dieser Anmeldung offenbart ist.
   spezielle Vorteile/Wirkungen des Brandschutzaufbaus nach Variante 1 (Gesamtaufbau): Die Oberflächentemperatur eines damit geschützten Kabels oder einer damit geschützten Leitung bleibt nach 90 min unter 120 °C, unter 100 °C, oder sogar unter 90 °C (Brandschutzprüfung in Anlehnung an IEC 60331-21: 1999-04). Damit wird der Brandschutz bzw. der Schutz bei der Einwirkung erhöhter Temperaturen bzw. entsprechender Strahlung von außen durch die Kombination der in der ersten, zweiten und dritten Hülle eingesetzten Materialien gegenüber herkömmlichen Brandschutzaufbauten verbessert. Dabei schützt die erste Hülle das in den Innenraum aufgenommene Kabel oder Leitung durch seine hohe Wärmedämmwirkung. Ferner weist das jeweilige Schaumstoff- bzw. Synthesekautschukmaterial der ersten Hülle die nachstehend aufgeführten, besonderen Vorteile auf. Gleichzeitig schützt die Expansion des bei Wärmeeinwirkung expandierbaren Materials der zweiten Hülle das Dämmmaterial der ersten Hülle und erhält somit über einen vergleichsweise längeren Zeitraum die hohe Wärmedämmwirkung der ersten Hülle. Erfindungsgemäß wird die Hülle mit dem weniger wärmeempfindlichen Dämmmaterial derart im Brandschutzaufbau angeordnet, dass das wärmeempfindlichere Dämmmaterial der ersten Hülle davon umgeben und somit geschützt ist. Durch den erfindungsgemäß vorgesehenen Aufbau der dritten Hülle wird die Hitzeschutzwirkung der ersten und zweiten Hülle weiter verbessert.
   spezielle Vorteile/Wirkungen des Polyurethan-Schaums (PUR-Schaum) als Bestandteil der ersten Hülle: extrem geringe Wärmeleitfähigkeit (bspw. λ ≤ 0,034 W/(m·K) nach DIN EN ISO 8497), *unschmelzbar auch bei hohen Temperaturen,* bleibt bei Temperaturen bis 100 °C form- und dimensionsstabil; druckfest, dauerhaft, wasserabweisend und gegenüber fast allen Bauchemikalien beständig; erfüllt Norm DIN 4102-1 Stufe B1 (schwer entflammbar). Die Brand-Parallelerscheinungen erfüllen die Güteklassen S1 (keine Sichtbehinderung durch Rauchentwicklung) und D0 (kein brennendes Abtropfen oder Abfallen). Bsp.: Kaimann Kaiflex KKplus S1, Kaimann Kaiflex KKplus S2, Kaimann Kaiflex HFplus S2;
   spezielle Vorteile/Wirkungen des Polyisocyanurat-Schaums (PIR-Schaum) als Bestandteil der ersten Hülle: weiter verringerte Wärmeleitfähigkeit im Vergleich zu PUR (bspw. λ ≤ 0,023 W/(m·K) nach DIN EN ISO 8497), hervorragende thermische Beständigkeit, hohe Dämmwirkung auch bei Temperaturen bis 100 °C; dimensionsstabil, für die Wärmedämmung feuerwiderstandsfähiger Bauteile geeignet; zugleich zäh und elastisch; wegen innermolekularer Quervernetzungen stärkere Bindungen als im PUR-Molekül, daher höhere Bruchstabilität und Steifigkeit als PUR; chemisch und thermisch stabiler als PUR; erfüllt Norm DIN 4102-1 Stufe B1 (schwer entflammbar). Die Brand-Parallelerscheinungen erfüllen die Güteklassen S1 (keine Sichtbehinderung durch Rauchentwicklung) und D0 (kein brennendes Abtropfen oder Abfallen).
   spezielle Vorteile/Wirkungen des Polyurethan- oder Polyisocyanurat-Schaums (PUR/PIR-Schaum) als Bestandteil der ersten Hülle: Der Mischschaum aus PUR und PIR verbindet die Vorteile des PUR- und des PIR-Schaums wie vorstehend dargestellt. Er erfüllt die Norm DIN 4102-1 Stufe B1 (schwer entflammbar). Die Brand-Parallelerscheinungen erfüllen die Güteklassen S1 (keine Sichtbehinderung durch Rauchentwicklung) und D0 (kein brennendes Abtropfen oder Abfallen).
   spezielle Vorteile/Wirkungen des Trägermaterials als Bestandteil der zweiten Hülle: trägt, hält oder stützt das bei Wärmeeinwirkung expandierbare Material. Ferner kann das Trägermaterial vorteilhaft als Vorisolierung der ersten Hülle wirken, wodurch ein Ansteigen auf eine kritische Oberflächentemperatur oder ein Überschreiten einer kritischen Oberflächentemperatur der ersten Hülle verhindert oder verzögert wird, wobei der Temperaturanstieg durch eine hohe Temperatur des bei Wärme expandierbaren Materials verursacht wird (Abstrahlung von dessen innerer Umfangfläche).
   spezielle Vorteile/Wirkungen des Fibersilikats als Trägermaterial als Bestandteil der zweiten Hülle: Fibersilikat ist ein hochtemperaturbeständiges Material, das sich insbesondere als Flechtwerk oder Garn durch eine geringe Dichte und damit eine geringe massenbezogene Belastung des zu schützenden Gutes auszeichnet.
   spezielle Vorteile/Wirkungen des bei Wärmeeinwirkung expandierbaren Materials als Bestandteil der zweiten Hülle, z.B.: Blähgraphit: bläht sich bei Hitzeeinwirkung (= Wärmeeinwirkung) auf, wodurch eine Brandschutzwirkung des mit dem expandierbaren Material umhüllten bzw. beschichteten Materials sichergestellt wird. Das expandierbare Material dehnt sich, ausgelöst durch Wärme, in Richtung der dritten Hülle (auch Außenfläche oder Sichtfläche genannt), also nach außen, aus. Je nach Ausführung des Brandschutzaufbaus kann sich das expandierbare Material jedoch auch in Richtung der ersten Hülle, also nach innen, ausdehnen. Hierdurch wird die erste Hülle vor Wärmeeinwirkung geschützt.
   Spezielle Vorteile/Wirkungen des Brandschutzmaterials sind in der deutschen Patentanmeldung Nr. 10 2017 108 976.4 bzw. nachstehend im Anhang dieser Anmeldung offenbart.
Variante 2: Brandschutzaufbau oder Brandschutzsystem, aufweisend oder bestehend aus (von innen nach außen):
   eine erste Hülle (auch Isolierkern I genannt);
   wobei die erste Hülle einen Innenraum umgibt oder umschließt,
   wobei der Innenraum geeignet ist, ein Kabel, eine Leitung oder ein Rohr oder Teilabschnitte derselben aufzunehmen;
   wobei die erste Hülle (auch Isolierkern I genannt) ein Korkmaterial oder ein Aerogel enthält oder daraus besteht;
   eine zweite Hülle (auch Isolierkern II genannt),
   wobei die zweite Hülle die erste Hülle umgibt oder umschließt;
   wobei die zweite Hülle ein erstes Trägermaterial und ein bei Wärmeeinwirkung expandierbares Material enthält oder aus diesen besteht;
   wobei das erste Trägermaterial das bei Wärmeeinwirkung expandierbare Material trägt oder hält oder stützt;
   wobei das bei Wärmeeinwirkung expandierbare Material auf der inneren Umfangsfläche des ersten Trägermaterials, auf der äußeren Umfangsfläche des ersten Trägermaterials, oder sowohl auf der inneren Umfangsfläche und der äußeren Umfangsfläche des ersten Trägermaterials aufgebracht ist; und/oder wobei das bei Wärmeeinwirkung expandierbare Material im ersten Trägermaterial enthalten oder eingearbeitet ist;
   wobei das erstes Trägermaterial vorzugsweise ein Silicium-Gewebe, ein Silikat-Gewebe, ein Fibersilikat, vorzugsweise ein Calciumsilikat und/oder ein Siliziumsilikat, vorzugsweise in Gestalt eines geflochtenen Garns, eines Gewebes, eines geflochtenen Zopfes oder einer Gitterstruktur, ist;
   wobei das bei Wärmeeinwirkung expandierbare Material vorzugsweise Blähgraphit oder eine Kombination aus einem ersten Beschichtungsmaterial und einem Primer, oder eine Kombination aus dem ersten Beschichtungsmaterial und einem zweiten Beschichtungsmaterial und einem Primer ist; wobei das erste Beschichtungsmaterial identisch mit dem ersten Beschichtungsmaterial ist, welches in der deutschen Patentanmeldung Nr. 10 2017 108 976.4 bzw. nachstehend im Anhang dieser Anmeldung offenbart ist; wobei das zweite Beschichtungsmaterial identisch mit dem zweiten Beschichtungsmaterial ist, welches in der deutschen Patentanmeldung Nr. 10 2017 108 976.4 bzw. nachstehend im Anhang dieser Anmeldung offenbart ist; wobei der Primer identisch mit dem Primer ist, welcher in der deutschen Patentanmeldung Nr. 10 2017 108 976.4 bzw. nachstehend im Anhang dieser Anmeldung offenbart ist; und
   eine dritte Hülle (auch Isolierkern III genannt, fungiert ggf. als Außenhülle oder Sichtfläche),
   wobei die dritte Hülle die zweite Hülle umgibt oder umschließt;
   wobei die dritte Hülle ein Brandschutzmaterial enthält oder aus diesem besteht;
   wobei das Brandschutzmaterial identisch mit dem Brandschutzmaterial ist, welches in der deutschen Patentanmeldung Nr. 10 2017 108 976.4 bzw. nachstehend im Anhang dieser Anmeldung offenbart ist.
   spezielle Vorteile/Wirkungen des Brandschutzaufbaus nach Variante 2 (Gesamtaufbau): Die Oberflächentemperatur eines damit geschützten Kabels oder einer damit geschützten Leitung bleibt nach 90 min unter 120 °C, unter 100 °C oder sogar unter 90 °C (Brandschutzprüfung in Anlehnung an IEC 60331-21: 1999-04). Damit wird der Brandschutz bzw. der Schutz bei der Einwirkung erhöhter Temperaturen bzw. entsprechender Strahlung von außen durch die Kombination der in der ersten, zweiten und dritten Hülle eingesetzten Materialien gegenüber herkömmlichen Brandschutzaufbauten verbessert. Dabei schützt die erste Hülle das in den Innenraum aufgenommene Kabel oder Leitung durch seine hohe Wärmedämmwirkung. Ferner weisen das Korkmaterial und das Aerogel der ersten Hülle die nachstehend aufgeführten, besonderen Vorteile auf. Gleichzeitig schützt die Expansion des bei Wärmeeinwirkung expandierbaren Materials der zweiten Hülle das Dämmmaterial der ersten Hülle und erhält somit über einen vergleichsweise längeren Zeitraum die hohe Wärmedämmwirkung der ersten Hülle. Erfindungsgemäß wird die Hülle mit dem weniger wärmeempfindlichen Dämmmaterial derart im Brandschutzaufbau angeordnet, dass das wärmeempfindlichere Dämmmaterial der ersten Hülle davon umgeben und somit geschützt ist. Durch den erfindungsgemäß vorgesehenen Aufbau der dritten Hülle wird die Hitzeschutzwirkung der ersten und zweiten Hülle weiter verbessert.
   spezielle Vorteile/Wirkungen des Korkmaterials als Bestandteil der ersten Hülle: hohe Zündtemperatur von über 300 °C und geringe Wärmeleitfähigkeit (bspw. λ ≤ 0,0365 W/(m·K) nach DIN EN ISO 8497), biologisch vollständig abbaubar, neigt nicht zur Schimmel- oder Pilzbildung, nicht rauchend, nicht tropfend, nicht brandüberleitend, hohe Wärmebeständigkeit, hohe Wasserbeständigkeit, leicht (geringe Dichte: 0,12 bis 0,25 g/cm³), sehr haltbar, dehnbar, biologisch abbaubar, problemlos entsorgbar; dicht für Gase und Flüssigkeiten, schlecht leitend für Schall; erfüllt Norm DIN 4102-1 Stufe B2 (normal entflammbar). Die Brand-Parallelerscheinungen erfüllen die Güteklassen S1 (keine Sichtbehinderung durch Rauchentwicklung) und D0 (kein brennendes Abtropfen oder Abfallen).
   spezielle Vorteile/Wirkungen des Aerogels als Bestandteil der ersten Hülle: hohe Wärmebeständigkeit bis zu 650 °C und geringe Wärmeleitfähigkeit (bspw. λ < 0,02 W/(m·K) nach DIN EN ISO 8497, insbesondere ist λ zwischen 0,015 bis 0,019 W/(m·K) nach DIN EN ISO 8497), neigt nicht zur Schimmel- oder Pilzbildung, nicht rauchend, nicht tropfend, nicht brandüberleitend, hohe Wasserbeständigkeit, geringe Dichte: 160 bis 240 kg/m³ (nach ASTM C303), sehr haltbar, problemlos entsorgbar; erfüllt Norm DIN 4102-1 Stufe B1 (schwer entflammbar), Flammenausbreitungsindex < 5 (nach ASTM E84), Rauchentwicklung < 10 (nach ASTM E84). Die Brand-Parallelerscheinungen erfüllen die Güteklassen S1 (keine Sichtbehinderung durch Rauchentwicklung) und D0 (kein brennendes Abtropfen oder Abfallen). Die Oberflächentemperatur eines damit geschützten Kabels oder einer damit geschützten Leitung bleibt nach 90 min unter 90 °C (Brandschutzprüfung in Anlehnung an IEC 60331-21: 1999-04).
   Durch das Vorsehen der zweiten Hülle um die erste Hülle (Isolierkern I) oder einer Beschichtung der ersten Hülle, wird bei der ersten Hülle die Brandklasse B1 (schwer entflammbar) erreicht. Ist erfindungsgemäß ein Aerogel als Bestandteil der ersten Hülle vorgesehen, wird bei der ersten Hülle sogar die Brandklasse B1 (schwer entflammbar; erfüllt Norm DIN 4102-1) erreicht.
   spezielle Vorteile/Wirkungen des Trägermaterials als Bestandteil der zweiten Hülle: siehe Variante 1
   spezielle Vorteile/Wirkungen des Fibersilikats als Trägermaterial als Bestandteil der zweiten Hülle: siehe Variante 1
   spezielle Vorteile/Wirkungen des bei Wärmeeinwirkung expandierbaren Materials als Bestandteil der zweiten Hülle, z.B.: Blähgraphit: siehe Variante 1
   Spezielle Vorteile/Wirkungen des Brandschutzmaterials sind in der deutschen Patentanmeldung Nr. 10 2017 108 976.4 bzw. nachstehend im Anhang dieser Anmeldung offenbart.
Variante 3: Brandschutzaufbau oder Brandschutzsystem, aufweisend oder bestehend aus (von innen nach außen):
   eine erste Hülle (auch Isolierkern I genannt);
   wobei die erste Hülle einen Innenraum umgibt oder umschließt,
   wobei der Innenraum geeignet ist, ein Kabel, eine Leitung oder ein Rohr oder Teilabschnitte derselben aufzunehmen;
   wobei die erste Hülle einen Polyurethan-Schaum (PUR-Schaum), vorzugsweise ein Polyurethan-Schaum gemäß DIN EN 13165, oder einen Polyisocyanurat-Schaum (PIR-Schaum) oder einen Polyurethan- oder Polyisocyanurat-Schaum (PUR/PIR-Schaum) oder einen Elastomerschaum (FEF) oder einen Schaumstoff auf Basis eines synthetischen Kautschuks (= Synthesekautschuk; umfasst sind erfindungsgemäß wenigstens alle Kautschuke, welche in der Tabelle und im Artikel zum Stichwort "Synthesekautschuke" des Römpp Lexikons Chemie, Georg Thieme Verlag Stuttgart, 10. Auflage, 1998, Band 5, Seiten 4351 bis 4354, offenbart sind; vgl. Fig. 8a, 8b, 8c, und 8d), vorzugsweise ein geschlossenzelliger und/oder feinporiger Schaumstoff auf Basis eines synthetischen Kautschuks, bspw. Polybutadienkautschuk, enthält oder daraus besteht;
   eine zweite Hülle (auch Isolierkern II genannt, fungiert ggf. als Außenhülle oder Sichtfläche);
   wobei die zweite Hülle die erste Hülle umgibt oder umschließt;
   wobei die zweite Hülle ein Brandschutzmaterial enthält oder aus diesem besteht;
   wobei das Brandschutzmaterial identisch mit dem Brandschutzmaterial ist, welches in der deutschen Patentanmeldung Nr. 10 2017 108 976.4 offenbart ist.
   Spezielle Vorteile/Wirkungen des Brandschutzaufbaus nach Variante 3 (Gesamtaufbau): Die Oberflächentemperatur eines damit geschützten Kabels oder einer damit geschützten Leitung bleibt nach 90 min unter 120 °C oder sogar unter 100 °C (Brandschutzprüfung in Anlehnung an IEC 60331-21: 1999-04). Damit wird der Brandschutz bzw. der Schutz bei der Einwirkung erhöhter Temperaturen bzw. entsprechender Strahlung von außen durch die Kombination der in der ersten und zweiten Hülle eingesetzten Materialien gegenüber herkömmlichen Brandschutzaufbauten verbessert. Dabei schützt die erste Hülle das in den Innenraum aufgenommene Kabel oder Leitung durch seine hohe Wärmedämmwirkung. Ferner weist das jeweilige Schaumstoff- bzw. Synthesekautschukmaterial der ersten Hülle die vorstehend bereits aufgeführten, besonderen Vorteile auf. Gleichzeitig schützt die zweite Hülle das Dämmmaterial der ersten Hülle und erhält somit über einen vergleichsweise längeren Zeitraum die hohe Wärmedämmwirkung der ersten Hülle. Erfindungsgemäß wird die Hülle mit dem weniger wärmeempfindlichen Dämmmaterial derart im Brandschutzaufbau angeordnet, dass das wärmeempfindlichere Dämmmaterial der ersten Hülle davon umgeben und somit geschützt ist. Durch den erfindungsgemäß vorgesehenen Aufbau der zweiten Hülle wird die Hitzeschutzwirkung der ersten Hülle weiter verbessert. Ferner zeichnet sich die Variante 3 des erfindungsgemäßen Brandschutzaufbaus durch einen vereinfachten Aufbau, eine kompaktere Bauweise und geringeren Materialaufwand, verbunden mit geringeren Kosten, gegenüber der Variante 1 des erfindungsgemäßen Brandschutzaufbaus aus. Ferner ist die Montage erleichtert.
   Spezielle Vorteile/Wirkungen des Brandschutzmaterials sind in der deutschen Patentanmeldung Nr. 10 2017 108 976.4 bzw. nachstehend im Anhang dieser Anmeldung offenbart.
Variante 4: Brandschutzaufbau oder Brandschutzsystem, aufweisend oder bestehend aus (von innen nach außen):
   eine erste Hülle (auch Isolierkern I genannt);
   wobei die erste Hülle einen Innenraum umgibt oder umschließt,
   wobei der Innenraum geeignet ist, ein Kabel, eine Leitung oder ein Rohr oder Teilabschnitte derselben aufzunehmen;
   wobei die erste Hülle ein Korkmaterial oder ein Aerogel enthält oder daraus besteht;
   eine zweite Hülle (auch Isolierkern II genannt, fungiert ggf. als Außenhülle oder Sichtfläche),
   wobei die zweite Hülle die erste Hülle umgibt oder umschließt;
   wobei die zweite Hülle ein Brandschutzmaterial enthält oder aus diesem besteht;
   wobei das Brandschutzmaterial identisch mit dem Brandschutzmaterial ist, welches in der deutschen Patentanmeldung Nr. 10 2017 108 976.4 bzw. nachstehend im Anhang dieser Anmeldung offenbart ist.
   Spezielle Vorteile/Wirkungen des Brandschutzaufbaus nach Variante 4 (Gesamtaufbau): Die Oberflächentemperatur eines damit geschützten Kabels oder einer damit geschützten Leitung bleibt nach 90 min unter 120 °C, unter 100 °C oder sogar unter 90 °C (Brandschutzprüfung in Anlehnung an IEC 60331-21: 1999-04). Damit wird der Brandschutz bzw. der Schutz bei der Einwirkung erhöhter Temperaturen bzw. entsprechender Strahlung von außen durch die Kombination der in der ersten und zweiten Hülle eingesetzten Materialien gegenüber herkömmlichen Brandschutzaufbauten verbessert. Dabei schützt die erste Hülle das in den Innenraum aufgenommene Kabel oder Leitung durch seine hohe Wärmedämmwirkung. Ferner weisen das Korkmaterial und das Aerogel der ersten Hülle die vorstehend bereits aufgeführten, besonderen Vorteile auf. Gleichzeitig schützt die zweite Hülle das Dämmmaterial der ersten Hülle und erhält somit über einen vergleichsweise längeren Zeitraum die hohe Wärmedämmwirkung der ersten Hülle. Erfindungsgemäß wird die Hülle mit dem weniger wärmeempfindlichen Dämmmaterial derart im Brandschutzaufbau angeordnet, dass das wärmeempfindlichere Dämmmaterial der ersten Hülle davon umgeben und somit geschützt ist. Durch den erfindungsgemäß vorgesehenen Aufbau der zweiten Hülle wird die Hitzeschutzwirkung der ersten Hülle weiter verbessert. Ferner zeichnet sich die Variante 4 des erfindungsgemäßen Brandschutzaufbaus durch einen vereinfachten Aufbau, eine kompaktere Bauweise und geringeren Materialaufwand, verbunden mit geringeren Kosten, gegenüber der Variante 2 des erfindungsgemäßen Brandschutzaufbaus aus. Ferner ist die Montage erleichtert.
   spezielle Vorteile/Wirkungen des Korkmaterials oder des Aeorgels als Bestandteil der ersten Hülle: siehe Variante 2
   Spezielle Vorteile/Wirkungen des Brandschutzmaterials sind in der deutschen Patentanmeldung Nr. 10 2017 108 976.4 bzw. nachstehend im Anhang dieser Anmeldung offenbart.
Variante 5: Brandschutzaufbau oder Brandschutzsystem, aufweisend oder bestehend aus (von innen nach außen):
   eine erste Hülle (auch Isolierkern I genannt);
   wobei die erste Hülle einen Innenraum umgibt oder umschließt,
   wobei der Innenraum geeignet ist, ein Kabel, eine Leitung oder ein Rohr oder Teilabschnitte derselben aufzunehmen;
   wobei die erste Hülle einen Polyurethan-Schaum (PUR-Schaum), vorzugsweise ein Polyurethan-Schaum gemäß DIN EN 13165, oder einen Polyisocyanurat-Schaum (PIR-Schaum) oder einen Polyurethan- oder Polyisocyanurat-Schaum (PUR/PIR-Schaum) oder einen Elastomerschaum (FEF) oder einen Schaumstoff auf Basis eines synthetischen Kautschuks (= Synthesekautschuk; umfasst sind erfindungsgemäß wenigstens alle Kautschuke, welche in der Tabelle und im Artikel zum Stichwort "Synthesekautschuke" des Römpp Lexikons Chemie, Georg Thieme Verlag Stuttgart, 10. Auflage, 1998, Band 5, Seiten 4351 bis 4354, offenbart sind; vgl. Fig. 8a, 8b, 8c, und 8d), vorzugsweise ein geschlossenzelliger und/oder feinporiger Schaumstoff auf Basis eines synthetischen Kautschuks, bspw. Polybutadienkautschuk, enthält oder daraus besteht;
   eine zweite Hülle (auch Isolierkern II genannt, fungiert ggf. als Außenhülle oder Sichtfläche),
   wobei die zweite Hülle die erste Hülle umgibt oder umschließt;
   wobei die zweite Hülle eine Kombination aus einem ersten Beschichtungsmaterial und einem Primer, oder eine Kombination aus einem ersten Beschichtungsmaterial und einem zweiten Beschichtungsmaterial und einem Primer ist enthält oder einer dieser Kombinationen besteht; wobei das erste Beschichtungsmaterial identisch mit dem ersten Beschichtungsmaterial ist, welches in der deutschen Patentanmeldung Nr. 10 2017 108 976.4 offenbart ist; wobei das zweite Beschichtungsmaterial identisch mit dem zweiten Beschichtungsmaterial ist, welches in der deutschen Patentanmeldung Nr. 10 2017 108 976.4 bzw. nachstehend im Anhang dieser Anmeldung offenbart ist; wobei der Primer identisch mit dem Primer ist, welcher in der deutschen Patentanmeldung Nr. 10 2017 108 976.4 bzw. nachstehend im Anhang dieser Anmeldung offenbart ist; und
   wobei die zweite Hülle vorzugsweise als Beschichtung der ersten Hülle oder auf der ersten Hülle ausgebildet ist.
   Spezielle Vorteile/Wirkungen des Brandschutzaufbaus nach Variante 5 (Gesamtaufbau): Die Oberflächentemperatur eines damit geschützten Kabels oder einer damit geschützten Leitung bleibt nach 90 min unter 120 °C oder sogar unter 100 °C (Brandschutzprüfung in Anlehnung an IEC 60331-21: 1999-04). Damit wird der Brandschutz bzw. der Schutz bei der Einwirkung erhöhter Temperaturen bzw. entsprechender Strahlung von außen durch die Kombination der in der ersten und zweiten Hülle eingesetzten Materialien gegenüber herkömmlichen Brandschutzaufbauten verbessert. Dabei schützt die erste Hülle das in den Innenraum aufgenommene Kabel oder Leitung durch seine hohe Wärmedämmwirkung. Ferner weist das jeweilige Schaumstoff- bzw. Synthesekautschukmaterial der ersten Hülle die vorstehend bereits aufgeführten, besonderen Vorteile auf. Gleichzeitig schützt die zweite Hülle das Dämmmaterial der ersten Hülle und erhält somit über einen vergleichsweise längeren Zeitraum die hohe Wärmedämmwirkung der ersten Hülle. Erfindungsgemäß wird die Hülle mit dem weniger wärmeempfindlichen Dämmmaterial derart im Brandschutzaufbau angeordnet, dass das wärmeempfindlichere Dämmmaterial der ersten Hülle davon umgeben und somit geschützt ist. Durch den erfindungsgemäß vorgesehenen Aufbau der zweiten Hülle wird die Hitzeschutzwirkung der ersten Hülle weiter verbessert. Ferner zeichnet sich die Variante 5 des erfindungsgemäßen Brandschutzaufbaus durch einen weiter vereinfachten Aufbau, eine noch kompaktere Bauweise und noch geringeren Materialaufwand, verbunden mit weiter verringerten Kosten, gegenüber der Variante 3 des erfindungsgemäßen Brandschutzaufbaus aus. Ferner ist die Montage weiter erleichtert.
   spezielle Vorteile/Wirkungen des Polyurethan-Schaums (PUR-Schaum) als Bestandteil der ersten Hülle: extrem geringe Wärmeleitfähigkeit (bspw. λ ≤ 0,034 W/(m·K) nach DIN EN ISO 8497), unschmelzbar auch bei hohen Temperaturen, bleibt auch bei hohen Temperaturen bis 100 °C form- und dimensionsstabil; druckfest, dauerhaft, wasserabweisend und gegenüber fast allen Bauchemikalien beständig; erfüllt Norm DIN 4102-1 Stufe B1 (schwer entflammbar) und Brand-Parallelerscheinungen Güteklassen S1 (keine Sichtbehinderung durch Rauchentwicklung) und D0 (kein brennendes Abtropfen oder Abfallen.),
   spezielle Vorteile/Wirkungen des Polyisocyanurat-Schaums (PIR-Schaum) als Bestandteil der ersten Hülle: weiter verringerte Wärmeleitfähigkeit im Vergleich zu PUR (bspw. λ ≤ 0,023 W/(m·K) nach DIN EN ISO 8497), hervorragende thermische Beständigkeit, hohe Dämmwirkung auch bei Temperaturen bis 100 °C; dimensionsstabil, für die Wärmedämmung feuerwiderstandsfähiger Bauteile geeignet; zugleich zäh und elastisch; wegen innermolekularer Quervernetzungen stärkere Bindungen als im PUR-Molekül, daher höhere Bruchstabilität und Steifigkeit als PUR; chemisch und thermisch stabiler als PUR;
   spezielle Vorteile/Wirkungen des Polyurethan- oder Polyisocyanurat-Schaums (PUR/PIR-Schaum) als Bestandteil der ersten Hülle: Der Mischschaum aus PUR und PIR verbindet die Vorteile des PUR- und des PIR-Schaums wie vorstehend dargestellt. Er erfüllt die Norm DIN 4102-1 Stufe B1 (schwer entflammbar). Die Brand-Parallelerscheinungen erfüllen die Güteklassen S1 (keine Sichtbehinderung durch Rauchentwicklung) und D0 (kein brennendes Abtropfen oder Abfallen).
   Spezielle Vorteile/Wirkungen des Brandschutzmaterials sind in der deutschen Patentanmeldung Nr. 10 2017 108 976.4 bzw. nachstehend im Anhang dieser Anmeldung offenbart.
Variante 6: Brandschutzaufbau oder Brandschutzsystem, aufweisend oder bestehend aus (von innen nach außen):
   eine erste Hülle (auch Isolierkern I genannt);
   wobei die erste Hülle einen Innenraum umgibt oder umschließt,
   wobei der Innenraum geeignet ist, ein Kabel, eine Leitung oder ein Rohr oder Teilabschnitte derselben aufzunehmen;
   wobei die erste Hülle ein Korkmaterial oder ein Aerogel enthält oder daraus besteht;
   eine zweite Hülle (auch Isolierkern II genannt, fungiert ggf. als Außenhülle oder Sichtfläche),
   wobei die zweite Hülle die erste Hülle umgibt oder umschließt;
   wobei die zweite Hülle eine Kombination aus einem ersten Beschichtungsmaterial und einem Primer, oder eine Kombination aus einem ersten Beschichtungsmaterial und einem zweiten Beschichtungsmaterial und einem Primer ist enthält oder einer dieser Kombinationen besteht; wobei das erste Beschichtungsmaterial identisch mit dem ersten Beschichtungsmaterial ist, welches in der deutschen Patentanmeldung Nr. 10 2017 108 976.4 bzw. nachstehend im Anhang dieser Anmeldung offenbart ist; wobei das zweite Beschichtungsmaterial identisch mit dem zweiten Beschichtungsmaterial ist, welches in der deutschen Patentanmeldung Nr. 10 2017 108 976.4 bzw. nachstehend im Anhang dieser Anmeldung offenbart ist; wobei der Primer identisch mit dem Primer ist, welcher in der deutschen Patentanmeldung Nr. 10 2017 108 976.4 bzw. nachstehend im Anhang dieser Anmeldung offenbart ist; und
   wobei die zweite Hülle vorzugsweise als Beschichtung der ersten Hülle oder auf der ersten Hülle ausgebildet ist.
   Spezielle Vorteile/Wirkungen des Brandschutzaufbaus nach Variante 6 (Gesamtaufbau): Die Oberflächentemperatur eines damit geschützten Kabels oder einer damit geschützten Leitung bleibt nach 90 min unter 120 °C, unter 100 °C oder sogar unter 90 °C (Brandschutzprüfung in Anlehnung an IEC 60331-21: 1999-04). Damit wird der Brandschutz bzw. der Schutz bei der Einwirkung erhöhter Temperaturen bzw. entsprechender Strahlung von außen durch die Kombination der in der ersten und zweiten Hülle eingesetzten Materialien gegenüber herkömmlichen Brandschutzaufbauten verbessert. Dabei schützt die erste Hülle das in den Innenraum aufgenommene Kabel oder Leitung durch seine hohe Wärmedämmwirkung. Ferner weisen das Korkmaterial oder das Aerogel der ersten Hülle die vorstehend bereits aufgeführten, besonderen Vorteile auf. Gleichzeitig schützt die zweite Hülle das Dämmmaterial der ersten Hülle und erhält somit über einen vergleichsweise längeren Zeitraum die hohe Wärmedämmwirkung der ersten Hülle. Erfindungsgemäß wird die Hülle mit dem weniger wärmeempfindlichen Dämmmaterial derart im Brandschutzaufbau angeordnet, dass das wärmeempfindlichere Dämmmaterial der ersten Hülle davon umgeben und somit geschützt ist. Durch den erfindungsgemäß vorgesehenen Aufbau der zweiten Hülle wird die Hitzeschutzwirkung der ersten Hülle weiter verbessert. Ferner zeichnet sich die Variante 6 des erfindungsgemäßen Brandschutzaufbaus durch einen weiter vereinfachten Aufbau, eine noch kompaktere Bauweise und noch geringeren Materialaufwand, verbunden mit weiter verringerten Kosten, gegenüber der Variante 4 des erfindungsgemäßen Brandschutzaufbaus aus. Ferner ist die Montage weiter erleichtert.
   spezielle Vorteile/Wirkungen des Korkmaterials oder des Aerogels als Bestandteil der ersten Hülle: siehe Variante 2
   Spezielle Vorteile/Wirkungen des Brandschutzmaterials sind in der deutschen Patentanmeldung Nr. 10 2017 108 976.4 offenbart.
Variante 7: Brandschutzaufbau oder Brandschutzsystem, aufweisend oder bestehend aus (von innen nach außen):
   eine erste Hülle (auch Isolierkern I genannt);
   wobei die erste Hülle einen Innenraum umgibt oder umschließt,
   wobei der Innenraum geeignet ist, ein Kabel, eine Leitung oder ein Rohr oder Teilabschnitte derselben aufzunehmen;
   wobei die erste Hülle ein Korkmaterial oder ein Aerogel enthält oder daraus besteht;
   wobei die erste Hülle auf deren äußerer Umfangsfläche oder auf deren innerer und äußerer Umfangsfläche eine Beschichtung aufweist, wobei die Beschichtung eine Kombination aus einem ersten Beschichtungsmaterial und einem Primer, oder eine Kombination aus einem ersten Beschichtungsmaterial und einem zweiten Beschichtungsmaterial und einem Primer enthält oder aus einer dieser Kombinationen besteht; wobei das erste Beschichtungsmaterial identisch mit dem ersten Beschichtungsmaterial ist, welches in der deutschen Patentanmeldung Nr. 10 2017 108 976.4 bzw. nachstehend im Anhang dieser Anmeldung offenbart ist; wobei das zweite Beschichtungsmaterial identisch mit dem zweiten Beschichtungsmaterial ist, welches in der deutschen Patentanmeldung Nr. 10 2017 108 976.4 bzw. nachstehend im Anhang dieser Anmeldung offenbart ist; wobei der Primer identisch mit dem Primer ist, welcher in der deutschen Patentanmeldung Nr. 10 2017 108 976.4 bzw. nachstehend im Anhang dieser Anmeldung offenbart ist; und
   wobei die Beschichtung vorzugsweise unmittelbar auf der äußeren Umfangsfläche oder auf der inneren und äußeren Umfangsfläche der ersten Hülle aufgebracht ist.
   Spezielle Vorteile/Wirkungen des Brandschutzaufbaus nach Variante 7 (Gesamtaufbau): Die Oberflächentemperatur eines damit geschützten Kabels oder einer damit geschützten Leitung bleibt nach 90 min unter 120 °C, unter 100 °C oder sogar unter 90 °C (Brandschutzprüfung in Anlehnung an IEC 60331-21: 1999-04). Damit wird der Brandschutz bzw. der Schutz bei der Einwirkung erhöhter Temperaturen bzw. entsprechender Strahlung von außen durch die in der ersten Hülle eingesetzten Materialien gegenüber herkömmlichen Brandschutzaufbauten verbessert. Dabei schützt die erste Hülle das in den Innenraum aufgenommene Kabel oder Leitung durch seine hohe Wärmedämmwirkung. Ferner weisen das Korkmaterial oder das Aerogel der ersten Hülle die vorstehend bereits aufgeführten, besonderen Vorteile auf. Gleichzeitig schützt die Beschichtung das Dämmmaterial der ersten Hülle und erhält somit über einen vergleichsweise längeren Zeitraum die hohe Wärmedämmwirkung der ersten Hülle. Durch die erfindungsgemäß vorgesehene Beschichtung der ersten Hülle wird die Hitzeschutzwirkung der ersten Hülle weiter verbessert. Ferner zeichnet sich die Variante 7 des erfindungsgemäßen Brandschutzaufbaus durch einen maximal vereinfachten Aufbau, eine sehr kompakte Bauweise und sehr geringen Materialaufwand, verbunden mit weiter verringerten Kosten, gegenüber den Varianten 4 des erfindungsgemäßen Brandschutzaufbaus aus. Ferner ist die Montage maximal erleichtert.
   spezielle Vorteile/Wirkungen des Korkmaterials oder des Aerogels als Bestandteil der ersten Hülle: siehe Variante 2
   Spezielle Vorteile/Wirkungen des ersten Beschichtungsmaterials, des zweiten Beschichtungsmaterials und des Primers und deren Kombinationen sind in der deutschen Patentanmeldung Nr. 10 2017 108 976.4 bzw. nachstehend im Anhang dieser Anmeldung offenbart.
Varianten 8 bis 14 des erfindungsgemäßen Brandschutzaufbaus:
   Variante 8 ist der Brandschutzaufbau gemäß der vorstehenden Variante 1, wobei die dritte Hülle die Gestalt eines Brandschutzformteils aufweist, wobei das Brandschutzformteil identisch mit dem in der deutschen Patentanmeldung Nr. 10 2018 102 007.4 bzw. nachstehend im Anhang dieser Anmeldung offenbarten Brandschutzformteil ist. Die vollständige Offenbarung der deutschen Patentanmeldung Nr. 10 2018 102 007.4 ist nachstehend wiedergegeben. Das Brandschutzformteil weist in der Querschnittsansicht die Gestalt eines Polygons, vorzugsweise eines Sterns, insbesondere eines gleichseitigen Sterns, auf (vgl. bspw. Fig. 1 bis 7g).
   Variante 9 ist der Brandschutzaufbau gemäß der vorstehenden Variante 2, wobei die dritte Hülle die Gestalt eines Brandschutzformteils aufweist, wobei das Brandschutzformteil identisch mit dem in der deutschen Patentanmeldung Nr. 10 2018 102 007.4 bzw. nachstehend im Anhang dieser Anmeldung offenbarten Brandschutzformteil ist. Das Brandschutzformteil weist in der Querschnittsansicht die Gestalt eines Polygons, vorzugsweise eines Sterns, insbesondere eines gleichseitigen Sterns, auf (vgl. bspw. Fig. 1 bis 7g).
   Variante 10 ist der Brandschutzaufbau gemäß der vorstehenden Variante 3, wobei die zweite Hülle die Gestalt eines Brandschutzformteils aufweist, wobei das Brandschutzformteil identisch mit dem in der deutschen Patentanmeldung Nr. 10 2018 102 007.4 bzw. nachstehend im Anhang dieser Anmeldung offenbarten Brandschutzformteil ist. Das Brandschutzformteil weist in der Querschnittsansicht die Gestalt eines Polygons, vorzugsweise eines Sterns, insbesondere eines gleichseitigen Sterns, auf (vgl. bspw. Fig. 1 bis 7g).
   Variante 11 ist der Brandschutzaufbau gemäß der vorstehenden Variante 4, wobei die zweite Hülle die Gestalt eines Brandschutzformteils aufweist, wobei das Brandschutzformteil identisch mit dem in der deutschen Patentanmeldung Nr. 10 2018 102 007.4 bzw. nachstehend im Anhang dieser Anmeldung offenbarten Brandschutzformteil ist. Das Brandschutzformteil weist in der Querschnittsansicht die Gestalt eines Polygons, vorzugsweise eines Sterns, insbesondere eines gleichseitigen Sterns, auf (vgl. bspw. Fig. 1 bis 7g).
   Variante 12 ist der Brandschutzaufbau gemäß der vorstehenden Variante 5, wobei die erste Hülle die Gestalt eines Brandschutzformteils aufweist, wobei das Brandschutzformteil identisch mit dem in der deutschen Patentanmeldung Nr. 10 2018 102 007.4 bzw. nachstehend im Anhang dieser Anmeldung offenbarten Brandschutzformteil ist. Das Brandschutzformteil weist in der Querschnittsansicht die Gestalt eines Polygons, vorzugsweise eines Sterns, insbesondere eines gleichseitigen Sterns, auf (vgl. bspw. Fig. 1 bis 7g).
   Variante 13 ist der Brandschutzaufbau gemäß der vorstehenden Variante 6, wobei die erste Hülle die Gestalt eines Brandschutzformteils aufweist, wobei das Brandschutzformteil identisch mit dem in der deutschen Patentanmeldung Nr. 10 2018 102 007.4 bzw. nachstehend im Anhang dieser Anmeldung offenbarten Brandschutzformteil ist. Das Brandschutzformteil weist in der Querschnittsansicht die Gestalt eines Polygons, vorzugsweise eines Sterns, insbesondere eines gleichseitigen Sterns, auf (vgl. bspw. Fig. 1 bis 7g).
   Variante 14 ist der Brandschutzaufbau gemäß der vorstehenden Variante 7, wobei die erste Hülle die Gestalt eines Brandschutzformteils aufweist, wobei das Brandschutzformteil identisch mit dem in der deutschen Patentanmeldung Nr. 10 2018 102 007.4 bzw. nachstehend im Anhang dieser Anmeldung offenbarten Brandschutzformteil ist. Das Brandschutzformteil weist in der Querschnittsansicht die Gestalt eines Polygons, vorzugsweise eines Sterns, insbesondere eines gleichseitigen Sterns, auf (vgl. bspw. Fig. 1 bis 7g).

Im Rahmen der vorliegenden Erfindung umfasst der erfindungsgemäße Brandschutzaufbau (einschließlich aller seiner Abwandlungen, bei denen die erste Hülle die Gestalt eines Brandschutzformteils aufweist), alle Kombinationen mit jeweils allen Ausführungsformen und Abwandlungen des Brandschutzmaterials, des ersten Beschichtungsmaterials, des zweiten Beschichtungsmaterials und des Primers, wie sie in der deutschen Patentanmeldung Nr. 10 2017 108 976.4 bzw. nachstehend im Anhang dieser Anmeldung offenbart sind, insbesondere mit den als bevorzugt oder besonders bevorzugt bzw. "insbesondere" gekennzeichneten Ausführungsformen, und mit jeweils allen Ausführungsformen und Abwandlungen des Brandschutzformteils, wie sie in der deutschen Patentanmeldung Nr. 10 2018 102 007.4 bzw. nachstehend im Anhang dieser Anmeldung offenbart sind, insbesondere mit den als bevorzugt oder besonders bevorzugt bzw. "insbesondere" gekennzeichneten Ausführungsformen.

Optionales Vorsehen von Trag- oder Stützelementen (Kraftträgern) im erfindungsgemäßen Brandschutzaufbau als Distanzhalter zwischen einer außen angeordneten Hülle und einer dazu nächstinneren Hülle

Beim erfindungsgemäßen Brandschutzaufbau, insbesondere bei den Brandschutzaufbauten gemäß den vorstehenden Varianten 1 bis 4 und 8 bis 11, kann ein oder eine Mehrzahl von Trag- oder Stützelementen, welche auch als Kraftträger bezeichnet werden können, zwischen einer außen, vorzugsweise der am weitesten außen, angeordneten Hülle und der dazu nächstinneren Hülle (vorzugsweise zweitäußerste Hülle) angeordnet sein. Das Trag- oder Stützelement dient als Distanzhalter zwischen den mit dem jeweiligen Trag- oder Stützelement in Berührung stehenden Hüllen, so dass zwischen diesen beiden Hüllen ein Zwischenraum ausgebildet werden kann, der vorteilhaft als Expansions- oder Aufschäumraum für das bei Wärme expandierbare Material dienen kann. Das jeweilige Trag- oder Stützelement enthält vorzugsweise Vermiculit, Kork, Aerogel, Steinwolle oder Glaswolle oder besteht aus einem dieser. Die Trag- oder Stützelemente können auch der Befestigung des erfindungsgemäßen Brandschutzaufbaus an einer Wand oder an einer Decke dienen.

Bei dem Brandschutzaufbauten gemäß den vorstehenden Varianten 5, 6, 12 und 13 können die Trag- oder Stützelemente jeweils auf der zweiten Hülle angeordnet sein. Hierbei können die Trag- oder Stützelemente nach außen von einer Schutz- oder Traghülle, beispielsweise aus Fibersilikat oder Silikatgewebe, umgeben sein.

Gestalt dieser Trag- oder Stützelemente: (im Wesentlichen) schlauchförmige Gestalt mit variabler Querschnittgestalt (rund, elliptisch, rechteckig, quadratisch, dreieckig, mehreckig, trapezförmig); entlang der Längsachse/in Längsrichtung vorzugsweise nicht durchgehend, sondern abschnittsweise ausgebildet, z.B. scheibenförmig oder rohrabschnittförmig (von Montageschlitz in Längsrichtung abgesehen); die Trag- oder Stützelemente werden vorzugsweise mehrzahlig im erfindungsgemäßen Brandschutzaufbau verwendet. Die Trag- oder Stützelemente können eine vorbestimmte Breite aufweisen. Bevorzugte Abstände zwischen den Trag- oder Stützelementen: zwischen 20 und 50 cm;

Vorteil dieser weiteren Trag- oder Stützelemente: fungieren als Kraftträger und wirken beim Befestigen des Brandschutzaufbaus an einer Wand oder Decke; fungieren als Abstandhalter zwischen den umgebenden Hüllen, was Raum für wärmebedingtes Blähen, Schäumen oder Quellen von im Brandschutzaufbau vorgesehenen; und Abstandhalter für Schaumebene bzw. Schaumhöhe.

Die Offenbarung der vorliegenden Anmeldung umfasst auch eine Brandschutzkonstruktion oder eine Brandschutzfolie, welche ein Brandschutzmaterial ist, das beispielsweise in flächiger Gestalt oder zum Umwickeln des zu schützenden Gutes verwendet werden kann. Die Brandschutzkonstruktion oder die Brandschutzfolie ist vorzugsweise flexibel und weist eine hohe Dämmwirkung auf. Die Brandschutzkonstruktion oder die Brandschutzfolie weist je nach Einsatzzweck vorzugsweise eine Dicke von 3 bis 25 mm, insbesondere 5 bis 20 mm, auf.

Die Brandschutzkonstruktion oder die Brandschutzfolie enthält:
ein Aerogel; und
eine Kombination aus einem ersten Material und einem Primer, oder eine Kombination aus dem ersten Material und einem zweiten Material und dem Primer.

Bei der erfindungsgemäßen Brandschutzkonstruktion oder Brandschutzfolie wird das Aerogel durch die vorstehend aufgeführte Definition für "Aerogel" beschrieben. Ferner ist das erste Material identisch mit dem ersten Beschichtungsmaterial, welches in der deutschen Patentanmeldung Nr. 10 2017 108 976.4 bzw. nachstehend im Anhang dieser Anmeldung offenbart ist. Ferner ist das zweite Material identisch mit dem zweiten Beschichtungsmaterial, welches in der deutschen Patentanmeldung Nr. 10 2017 108 976.4 bzw. nachstehend im Anhang dieser Anmeldung offenbart ist. Ferner ist der Primer identisch mit dem Primer, welcher in der deutschen Patentanmeldung Nr. 10 2017 108 976.4 bzw. nachstehend im Anhang dieser Anmeldung offenbart ist.

Die nachfolgend offenbarten Merkmale sind optional und können einzeln oder in einer jeder beliebigen Kombination die erfindungsgemäße Brandschutzkonstruktion oder Brandschutzfolie weiter spezifizieren, sofern dies technisch realisierbar ist.

So kann die erfindungsgemäße Brandschutzkonstruktion oder Brandschutzfolie ein- oder mehrschichtig ausgebildet sein. Ferner kann die erfindungsgemäße Brandschutzkonstruktion oder Brandschutzfolie wenigstens eine Schicht, insbesondere eine, zwei, drei oder vier Schichten, aufweisen, welche jeweils die Kombination aus dem ersten Material und dem Primer oder die Kombination aus dem ersten Material und dem zweiten Material und dem Primer enthält, und welche jeweils zusätzlich das Aerogel in Gestalt von Partikeln, Pulver, Granulat oder Bruchstücken enthält. Hierbei kann der Volumenanteil des Aerogels an der jeweiligen Schicht (Bezugsgröße: Gesamtvolumen der Schicht) 10 bis 98 %, vorzugsweise 50 bis 95 %, insbesondere 70 bis 90 %, betragen. Bevorzugt ist das Aerogel in die Schicht eingearbeitet. Dabei kann das Aerogel innerhalb der Schicht räumlich gleichmäßig (homogene bzw. disperse Verteilung) oder im Wesentlichen gleichmäßig (homogene Verteilung aufweisend technisch unvermeidbare Inhomogenitäten) verteilt sein. Das Aerogel kann jedoch auch einen Konzentrationsgradienten innerhalb der Schicht, insbesondere in Richtung der Schichtdicke, aufweisen. Dies bedeutet, dass die Konzentration der Aerogelteilchen im Bereich der einen Oberfläche der betrachteten Schicht der Brandschutzkonstruktion oder Brandschutzfolie anders ist als im Bereich der gegenüberliegenden Oberfläche. Hierbei ist es auch möglich, dass sich die Aerogelteilchen ausschließlich oder überwiegend im Bereich der einen Oberfläche befinden/konzentrieren, während sich keine oder signifikant weniger Teilchen im Bereich der gegenüberliegenden Oberfläche vorhanden sind. Darüber hinaus ist die Erfindung jedoch nicht auf eine bestimmte räumliche Verteilung der Aerogelteilchen in der Schicht beschränkt. Bevorzugt ist jedoch, wenn die Schicht innen, d.h., auf der dem zu schützenden Gut zugewandten Seite, eine höhere Konzentration an Aerogelteilchen bzw. ein größeres Volumen, das von den Aerogelteilchen eingenommen wird, aufweist, als dies außen, d.h., auf der dem zu schützenden Gut abgewandten Seite, der Fall ist. Dieser Gradient an Aerogelteilchen hat den Vorteil, dass die Mehrheit der Aerogelteilchen innerhalb derjenigen Schichthälfte vorhanden ist, welche im Brandfall zur Flamme bzw. zur hohen Temperatur abgewandt und weiter entfernt ist. Hierdurch werden die Aerogelteilchen besser vor der Temperatureinwirkung geschützt als bei einer Gleichverteilung derselben innerhalb der Schicht oder sogar bei einer Konzentration derselben in der Schichthälfte, welche im Brandfall der Flamme bzw. der hohen Temperatur unmittelbar ausgesetzt ist.

Das Vorsehen des Aerogels in Gestalt von Partikeln, Teilchen etc. innerhalb einer Schicht, welche zusätzlich noch die vorstehend beschriebene Kombination aus dem ersten Material und dem Primer, oder die Kombination aus dem ersten Material und dem zweiten Material und dem Primer aufweist, hat den Vorteil, dass die resultierende Brandschutzkonstruktion oder Brandschutzfolie Aerogel mit den vorstehend diskutierten Vorteilen einsetzt und dieses dabei staubfrei innerhalb der Schicht gebunden ist. Ferner handelt es sich um eine einfache und flexible Konstruktion, welche einfach handhabbar ist, da sie sich beispielsweise für den Zuschnitt eignet.

Nach einem weiteren Aspekt ist die erfindungsgemäße Brandschutzkonstruktion oder Brandschutzfolie mehrschichtig aufgebaut. In dieser Ausführungsform weist die Brandschutzkonstruktion oder Brandschutzfolie wenigstens eine Schicht (im Nachfolgenden "Brandschutzschicht" oder "BS" genannt) auf, welche die Kombination aus dem ersten Material und dem Primer oder die Kombination aus dem ersten Material und dem zweiten Material und dem Primer enthält oder daraus besteht. Ferner weist die Brandschutzkonstruktion oder Brandschutzfolie wenigstens eine Schicht (im Nachfolgenden "Aerogelschicht" oder "AS" genannt) auf, welche das Aerogel enthält oder daraus besteht. Erfindungsgemäß ist es auch möglich, dass die Aerogelschicht AS nicht nur aus 100 % Aerogel besteht oder diese enthält, sondern eine Schicht ist, welche wie vorstehend beschrieben, eine Mischung aus Aerogelteilchen und der vorstehend beschriebenen Kombination aus dem ersten Material und dem Primer, oder der Kombination aus dem ersten Material und dem zweiten Material und dem Primer enthält. Erfindungsgemäß kann jedoch auch vorgesehen sein, dass die Schichten, welche die vorstehend beschriebene Kombination aus dem ersten Material und dem Primer oder aus dem ersten Material und dem zweiten Material und dem Primer enthalten, kein Aerogel aufweisen; und/oder dass die Schichten, welche das Aerogel enthalten, die vorstehend beschriebene Kombination aus dem ersten Material und dem Primer oder aus dem ersten Material und dem zweiten Material und dem Primer nicht enthalten. Durch die stoffliche Trennung von Aerogel und der vorstehend beschriebenen Kombination wir das Herstellungsverfahren der Brandschutzkonstruktion vereinfacht.

Dabei kann die erfindungsgemäße Brandschutzkonstruktion oder Brandschutzfolie beispielsweise folgende Schichtenaufbauten aufweisen (von außen (Flamme) nach innen (zu schützendes Gut)), ist jedoch nicht hierauf beschränkt:
- BS // AS (= zweischichtige Brandschutzkonstruktion oder Brandschutzfolie mit einer außen angeordneten Brandschutzschicht und einer innen angeordneten Aerogelschicht)
- BS // AS // BS (= dreischichtige Brandschutzkonstruktion oder Brandschutzfolie mit einer außen und einer innen angeordneten Brandschutzschicht und einer Aerogelschicht als Zwischenschicht)
- BS // AS // BS // AS
- BS // AS // BS // AS // BS
- BS // AS // AS
- BS // AS // AS // BS
- BS // AS // AS // AS // BS
- BS // AS // BS // BS// AS // BS
- BS // BS // AS
- BS // BS // AS // BS
- BS // BS // AS // BS // BS

Die erfindungsgemäße Brandschutzkonstruktion oder Brandschutzfolie zeichnet sich durch eine hervorragende Brandschutzfunktion und durch hohe Dämmwerte aus. Sie vereint erstmals die Brandschutzfunktion der vorstehend beschriebenen Kombination aus dem ersten Material und dem Primer oder dem ersten Material, dem zweiten Material und dem Primer mit den hohen Dämmwerten bzw. guten thermischen Isolierfunktion von Aerogel. Da die erfindungsgemäßen Brandschutzkonstruktion oder Brandschutzfolie zudem alle wichtigen Eigenschaften, die eine Brandschutzmaterial aufweisen muss, in sich vereint, ist sie besonders montagefreundlich, da der Monteur vor Ort nur ein Material an- oder aufbringen muss. Hierdurch werden Montagefehler oder Probleme, wie sie bei dem Einsatz von Brandschutzsystemen, welche aus mehreren Komponenten vor Ort zusammengesetzt werden, vermieden.

Die erfindungsgemäße Brandschutzkonstruktion oder Brandschutzfolie kann ferner außen ein- oder beidseitig mit einem Trägermaterial armiert sein. Dabei kann als das Trägermaterial vorzugsweise ein Silicium-Gewebe, ein Silikat-Gewebe, ein Fibersilikat, vorzugsweise ein Calciumsilikat und/oder ein Siliziumsilikat, eine Folie, Steinwolle, ein Wollprodukt, vorzugsweise in Gestalt eines geflochtenen Garns, eines Gewebes, eines geflochtenen Zopfes oder einer Gitterstruktur sein. Ist die Brandschutzkonstruktion oder Brandschutzfolie mehrschichtig aufgebaut, können zwischen zwei benachbart angeordneten Schichten der Brandschutzkonstruktion oder Brandschutzfolie eine oder mehrere Trägermaterialschichten (TS) angeordnet sein.

Beispiele für Schichtenaufbauten der erfindungsgemäßen Brandschutzkonstruktion oder Brandschutzfolie mit Trägermaterialschichten sind (von außen (Flamme) nach innen (zu schützendes Gut)), ist jedoch nicht hierauf beschränkt:
- TS // BS // AS (= dreischichtige Brandschutzkonstruktion oder Brandschutzfolie mit einer außen angeordneten Trägermaterialschicht, einer innen angeordneten Aerogelschicht und einer Brandschutzschicht als Zwischenschicht)
- BS // AS // TS (Trägermaterialschicht innen)
- TS // BS // AS // TS (Trägermaterialschicht außen und innen)
- BS // TS // AS (Trägermaterialschicht als Zwischenschicht)
- TS // BS // TS // AS // TS (Trägermaterialschicht außen, innen und als Zwischenschicht)

Erfindungsgemäß wird erstmals die Verwendung eines Aerogels in einem Brandschutzmaterial oder in einer Brandschutzkonstruktion oder Brandschutzfolie, insbesondere zur Verbesserung der Brandschutzeigenschaften bzw. zur Verbesserung der Brandschutzwirkung des Brandschutzmaterials oder der Brandschutzkonstruktion oder Brandschutzfolie, offenbart. Ferner wird die Verwendung eines Aerogels als Bestandteil eines Brandschutzmaterials oder einer Brandschutzkonstruktion oder einer Brandschutzfolie offenbart. Dabei ist das Brandschutzmaterial oder die Brandschutzkonstruktion oder Brandschutzfolie vorzugsweise dasjenigen bzw. diejenige, wie es bzw. sie in dieser Anmeldung einschließlich Anhängen beschrieben ist. Dies schließt alle hierin beschriebenen Abwandlungen des Brandschutzmaterials oder der Brandschutzkonstruktion oder Brandschutzfolie ein. Es wird auch die Verwendung eines Aerogels als Schichtbestandteil eines Brandschutzmaterials oder einer Brandschutzkonstruktion oder Brandschutzfolie offenbart. Dabei kann das Aerogel vorzugsweise in Gestalt von Partikeln, Pulver, Granulat oder Bruchstücken verwendet werden. Ferner wird die Verwendung eines Aerogels in Gestalt einer Schicht in einem Brandschutzmaterial oder in einer Brandschutzkonstruktion oder Brandschutzfolie offenbart. Durch die Verwendung des Aerogels in einem Brandschutzmaterial oder in einer Brandschutzkonstruktion oder Brandschutzfolie werden die hervorragenden Isoliereigenschaften vom Aerogel mit den guten Brandschutzeigenschaften eines Brandschutzmaterials kombiniert, wodurch sich der resultierenden Schutz für ein zu schützendes Gut, welches mit dem Aerogel-haltigen Brandschutzmaterial bedeckt ist, gegenüber herkömmlichen Brandschutzmaterialien noch weiter erhöht. Bei der erfindungsgemäßen Verwendung kann das Aerogel wie vorstehend beschrieben verwendet werden: beispielsweise zur Ausbildung separater Schichten oder als Bestandteil in Brandschutzmaterialien. Bei der erfindungsgemäßen Verwendung gelten als vorstehend beschriebenen Abwandlungen und Vorteile der Brandschutzkonstruktion oder Brandschutzfolie, so dass diese hier nicht wiederholt werden müssen. Herkömmlich sind Aerogele nicht in Brandschutzmaterialien eingesetzt worden, da sie für sich betrachtet keine ausreichende Temperaturbeständigkeit aufweisen, daher mangels Brandschutzfunktion als Brandschutzmaterial ungeeignet sind. Zudem ist Aerogel nach vorherrschender Meinung nicht UV-beständig, so dass dessen Einsatzmöglichkeiten, vor allem im Außenbereich, beim Einsatz des Aerogels als solchem stark eingeschränkt sein können.

### Erfindungsgemäßes Beispiel

Es wurde ein Brandschutztest zur Untersuchung eines erfindungsgemäßen Brandschutzaufbaus und eines Vergleichs-Brandschutzaufbaus durchgeführt.

Der erfindungsgemäße Brandschutzaufbau ist ein mehrschichtiger Aufbau, der einen Innenraum umgibt. Der Innenraum weist einen lichten Querschnitt von ca. 30 mm auf. Der Innenraum ist von einer ersten Hülle umgeben, welche aus einem Aerogel mit der Bezeichnung Pyrogel XTE (Fa. Aspen Aerogels, Inc., Northborough, MA/USA) in vier Schichten mit einer Dicke von je 5 mm bestand. Diese erste Hülle ist von einer zweiten Hülle umgeben, welche dem Brandschutzmaterial entspricht, welches in der deutschen Patentanmeldung Nr. 10 2017 108 976.4 bzw. nachstehend im Anhang dieser Anmeldung offenbart ist. Dabei besteht das Brandschutzmaterial aus einer Trägerschicht aus Silizium-Vlies (Dicke: 1 mm), welche auf der Außenseite mit dem sich bei Hitzeeinwirkung aufblähenden Beschichtungsmaterial einschließlich eines Primers beschichtet ist, wobei der Primer eine Grundierung, einen Härter und einen Verdünner enthält, wie sie in Anspruch 1 der deutschen Patentanmeldung Nr. 10 2017 108 976.4 definiert sind. Das Brandschutzmaterial der zweiten Hülle ist identisch mit dem Brandschutzmaterial enthaltend das erste Beschichtungsmaterial, wie es in der deutschen Patentanmeldung Nr. 10 2017 108 976.4, insbesondere in dortigem Anspruch 3, beschrieben ist. Auf der zweiten Hülle sind Trag- oder Stützelemente (Silicium 4-Kant-Stricke, 25 x 25 mm) im Abstand von ca. 30 cm angeordnet. Die zweite Hülle und die Trag- oder Stützelemente sind schließlich von einer dritten Hülle umgeben, welche ein weiteres Brandschutzmaterial enthält oder aus diesem besteht. Hierbei ist das Brandschutzmaterial identisch mit dem Brandschutzmaterial, welches in der deutschen Patentanmeldung Nr. 10 2017 108 976.4 bzw. nachstehend im Anhang dieser Anmeldung offenbart ist und das dort offenbarte zweite Beschichtungsmaterial aufweist. Somit fällt der hier untersuchte, erfindungsgemäße Brandschutzaufbau unter die vorstehend beschriebene Variante 2.

Der Vergleichs-Brandschutzaufbaus weist denselben Aufbau wie der vorstehend beschriebene, erfindungsgemäße Brandschutzaufbau auf, bis auf den Unterschied, dass die erste Hülle anstelle des Aerogels aus Mineralwolle gem. DIN EN 13162 (Hardrock II bzw. in Hardrock 038 oder 040 enthalten; Fa. DEUTSCHE ROCKWOOL GmbH & Co. KG, Gladbeck) mit einer Dicke von 30 mm besteht.

Mit dem vorstehend genannten, erfindungsgemäßen Brandschutzaufbau wurde ein Brandschutztest gemäß IEC 60331-21 über 90 Minuten bei einer Außen- bzw. Brennertemperatur von ca. 780 bis 900 °C in einem akkreditierten Labor (MPA Dresden) am 20. März 2019 durchgeführt. Die Temperatur in dem vom erfindungsgemäßen Brandschutzaufbau umhüllten Innenraum wurde in regelmäßigen, zeitlichen Abständen gemessen (an der inneren Umfangsfläche des Brandschutzaufbaus und frei im Innenraum). Die Ergebnisse sind in nachfolgender Tabelle 1 dargestellt.

Analog hierzu wurde der herkömmliche Brandschutzaufbau aus Steinwolle unter denselben Bedingungen vermessen. Die Ergebnisse sind in nachfolgender Tabelle 2 dargestellt.

**Tabelle 1: Brandschutztest (Koaxialtest) gemäß IEC 60331-21 über 90 Minuten bei einer Außen- bzw. Brennertemperatur von ca. 780 bis 900 °C am 20. März 2019, durchgeführt vom MPA Dresden: erfindungsgemäßer Brandschutzaufbau**

| Zeitpunkt der Messung ab Testbeginn [min] | Temperatur im Innenraum des Brandschutzaufbaus [°C] | |
|---|---|---|
| | Messung an innerer Umfangsfläche des Brandschutzaufbaus anliegend | Messung frei im Innenraum |
| 0 (Testbeginn) | 24,1 | 26,1 |
| 15 | 23 | 21,8 |
| 30 | 39,3 | 32,2 |
| 45 | 56,2 | 45,7 |
| 60 | 70,6 | 54,8 |
| 75 | 86,3 | 67,5 |
| 90 (Testende) | 95,5 | 75,1 |
| 100 | 21,3 | 16 |

**Tabelle 2: Brandschutztest (Koaxialtest) gemäß IEC 60331-21 über 90 Minuten bei einer Außen- bzw. Brennertemperatur von ca. 780 bis 900 °C am 20. März 2019, durchgeführt vom MPA Dresden: herkömmlicher Brandschutzaufbau auf Steinwollebasis**

| Zeitpunkt der Messung ab Testbeginn [min] | Temperatur im Innenraum des Brandschutzaufbaus [°C] | |
|---|---|---|
| | Messung an innerer Umfangsfläche des Brandschutzaufbaus anliegend | Messung frei im Innenraum |
| 0 (Testbeginn) | 18,0 | 18,3 |
| 15 | 33,3 | 32,8 |
| 30 | 61,7 | 62,1 |
| 45 | 122,8 | 110,7 |
| 50 (Testende/danach abgebrochen) | 142,3 | 116,7 |

Wie der vorstehenden Tabelle 1 zu entnehmen ist, erreicht der Innenraum, welcher vom erfindungsgemäßen Brandschutzaufbau umgeben ist, im standardisierten Test eine Temperatur von 96 bzw. 76 °C über 90 Minuten zu keinem Zeitpunkt innerhalb der 90 minütigen Messdauer überschritten. Dagegen steigt die Temperatur im analogen Test beim herkömmlichen Brandschutzaufbau auf Steinwollebasis bereits nach 50 Minuten auf über 140 °C (anliegend an der inneren Umfangsfläche des Brandschutzaufbaus) bzw. auf über 115 °C (frei im Innenraum gemessen) an (vgl. vorstehende Tabelle 2). Aufgrund des starken Temperaturanstiegs beim herkömmlichen Brandschutzaufbau wurde dieser Test bereits nach 50 Minuten abgebrochen.

Wie die vorstehenden Ergebnisse beispielhaft zeigen, wird mit dem erfindungsgemäßen Brandschutzaufbau, insbesondere wenn dieser ein Aerogel enthält, eine weiter verbesserte Brandschutzwirkung erzielt, und die Bedingungen der DIN-Normen DIN 4102 Teil 11 und/oder DIN 4102 Teil 21 und/oder nach UL 1724/ASTM und/oder nach IEC 60331-21 werden erfüllt.

### Technisches Gebiet der Erfindung

Die vorliegende Erfindung betrifft ein Brandschutzmaterial zum Umhüllen eines Kabels oder einer Leitung und/oder zum Ausbilden eines Formteils mit wenigstens einer gekrümmten Oberfläche nach Anspruch 1, ein Verfahren zur Herstellung eines Brandschutzmaterials nach Anspruch 5, ein damit hergestelltes Brandschutzmaterial nach Anspruch 7, und die Verwendung eines Primers in einem Brandschutzmaterial nach Anspruch 9.

### Stand der Technik

Bekannte Brandschutzmaterialien bestehen beispielsweise aus Glasseide als Grundmaterial, das mit einem Einkomponentenmaterial beschichtet. Das Einkomponentenmaterial (Brandschutzkomponente) bläht sich bei Hitzeeinwirkung auf, wodurch eine Brandschutzwirkung des mit dem Brandschutzmaterial umhüllten, zu schützenden Gutes sichergestellt wird.

Werden die beschriebenen Brandschutzmaterialien zum Schutz von beispielsweise Stromkabeln oder Leitungen eingesetzt, besteht jedoch die Gefahr, dass sich beim Umwickeln der Kabel oder Leitungen mit den Brandschutzmaterialien oder anderweitigen Biegen der Brandschutzmaterialien Risse in deren Oberfläche ausbilden. Dies kann schließlich dazu führen, dass Feuchtigkeit von außen in die Beschichtung eindringt und das sich bei Hitzeeinwirkung aufblähende Einkomponentenmaterial auswaschen oder anderweitig durch die Feuchtigkeitseinwirkung beeinträchtigt werden kann. Folglich neigt dieses Brandschutzmaterial dazu, witterungsbedingt seine Brandschutzeigenschaften einzubüßen.

### Aufgabe der Erfindung

Aufgabe der vorliegenden Erfindung ist es daher, ein Brandschutzmaterial und ein entsprechendes Herstellungsverfahren bereitzustellen, wobei das Brandschutzmaterial zum Schutz von Stromkabeln oder Leitungen geeignet ist, insbesondere hierfür ausreichend biegbar ist, eine hinreichende Brandschutzwirkung aufweist und die Brandschutzwirkung trotz Alterung in ausreichendem Maße aufrechterhalten bleibt.

### Zusammenfassung der Erfindung

Die Aufgabe wird gelöst mit dem Brandschutzmaterial nach Anspruch 1. Dabei wird ein Brandschutzmaterial zum Umhüllen eines Kabels oder einer Leitung und/oder zum Ausbilden eines Formteils mit wenigstens einer gekrümmten Oberfläche vorgeschlagen. Das Brandschutzmaterial weist ein Trägermaterial und ein erstes Beschichtungsmaterial auf, wobei das erste Beschichtungsmaterial auf dem Trägermaterial aufgebracht ist. Das erste Beschichtungsmaterial kann ein- oder beidseitig auf dem Trägermaterial aufgetragen sein, wobei eine einseitige Auftragung bevorzugt ist. Das Brandschutzmaterial weist ferner einen Primer auf, wobei der Primer vorzugsweise eine Grundierung, einen Härter und einen Verdünner enthält oder daraus besteht.

Dabei enthält die Grundierung:
Xylol (CAS-Nr. 1330-20-7), vorzugsweise in einem Massenanteil von 12,5 bis 20 %;
Kohlenwasserstoffe, C9, Aromate (CAS-Nr. 64742-95-6), vorzugsweise in einem Massenanteil von 5 bis 12,5 %;
Reaktionsprodukt: Bisphenol-A-Epichlorhydrinharze mit durchschnittlichem Molekulargewicht 700 bis 1100 (CAS-Nr. 25068-38-6), vorzugsweise in einem Massenanteil von 5 bis 12,5 %;
Butan-l-ol (CAS-Nr. 71-36-3), vorzugsweise in einem Massenanteil von 5 bis 10 %;
Trizinkbis(orthophosphat) (CAS-Nr. 7779-90-0), vorzugsweise in einem Massenanteil von 5 bis 12,5 %;
Ethylbenzol (CAS-Nr. 100-41-4), vorzugsweise in einem Massenanteil von 1 bis 5 %;
4-Hydroxy-4-methyl-pentan-2-on (CAS-Nr. 123-42-2), vorzugsweise in einem Massenanteil von 1 bis 5 %;
Lösungsmittelnaphtha (Erdöl), leicht aromatisiert (CAS-Nr. 64742-95-6), vorzugsweise in einem Massenanteil von 0,1 bis 0,25 %; und
Siliciumdioxid (CAS-Nr. 7631-86-9), vorzugsweise in einem Massenanteil von 1 bis 5 %;

Dabei enthält der Härter:
Hexamethylen-1,6-diisocyanat, Homopolymer (CAS-Nr. 28182-81-2), vorzugsweise in einem Massenanteil von wenigstens 40 %;
Kohlenwasserstoffe, C9, Aromate (CAS-Nr. 64742-95-6), vorzugsweise in einem Massenanteil von 25 bis 40 %;
Hexamethylen-1,6-diisocyanat (CAS-Nr. 822-06-0), vorzugsweise in einem Massenanteil von 0,25 bis 0,5 %;
Dimethylbis[(1-oxoneodecyl)oxy]stannan (CAS-Nr. 68928-76-7), vorzugsweise in einem Massenanteil von 0,1 bis 0,25 %; und
n-Butylacetat (CAS-Nr. 123-86-4), vorzugsweise in einem Massenanteil von 1 bis 5 %;

Dabei enthält der Verdünner:
Xylol (CAS-Nr. 1330-20-7), vorzugsweise in einem Massenanteil von wenigstens 40 %;
Butan-l-ol (CAS-Nr. 71-36-3), vorzugsweise in einem Massenanteil von 20 bis 25 %;
Ethylbenzol (CAS-Nr. 100-41-4), vorzugsweise in einem Massenanteil von 12,5 bis 20 %; und
n-Butylacetat (CAS-Nr. 123-86-4), vorzugsweise in einem Massenanteil von 20 bis 25 %;

Der jeweilige Massenanteil der Bestandteile der Grundierung, des Härters und des Verdünners beziehen sich vorzugsweise auf die Masse des Primers. Das Massenverhältnis der Grundierung zum Härter beträgt vorzugsweise 4 bis 6, vorzugsweise 5, zu 1.

Der Erfinder hat überraschend festgestellt, dass durch das Vorhandensein eines Primers eine gute Haftung des ersten Beschichtungsmaterials auf dem Trägermaterial erzielt wird.

Ferner ist beobachtet worden, dass selbst nach dem Aufbringen des Primers auf das erste Beschichtungsmaterial, das sich bereits auf dem Trägermaterial befindet, eine gute Haftung des ersten Beschichtungsmaterials auf dem Trägermaterial erzielbar ist. Dies liegt vermutlich daran, dass der Primer von außen durch das erste Beschichtungsmaterial diffundiert und seine Haftwirkung zwischen dem ersten Beschichtungsmaterial und dem Trägermaterial entfaltet.

Das erste Beschichtungsmaterial bläht sich bei Hitzeeinwirkung auf bzw. schäumt auf und entfaltet auf diese Weise eine Hitzeschutzwirkung. Eine Beeinträchtigung der Hitzeschutzwirkung des ersten Beschichtungsmaterials durch den Primer findet dabei nicht statt. Überraschenderweise bewirkt der Primer mit der erfindungsgemäßen Zusammensetzung keine oder keine relevante chemische Veränderung des ersten Beschichtungsmaterials. So bewirkt der erfindungsgemäße Primer im Gegensatz zu anderen Primern keine oder keine nennenswerte Zunahme der Steifigkeit des ersten Beschichtungsmaterials, wobei das Biegen des Brandschutzmaterials erschwert würde.

Zudem vermeidet das Vorhandensein des Primers die Entstehung von Rissen im ersten Beschichtungsmaterial oder vermindert die Bildung von Rissen erheblich, wenn das Brandschutzmaterial zu einer Hülle für Kabel oder Leitungen gebogen oder gekrümmt wird. Hierdurch wird ein Eindringen von Feuchtigkeit mit den erwähnten negativen Folgen vermieden oder zumindest vermindert. Folglich behält das Brandschutzmaterial bei seinem Einsatz als Umhüllung eines Kabels oder einer Leitung auch bei Feuchtigkeitseinfluss seine Brandschutzeigenschaften. Damit ist das erfindungsgemäße Brandschutzmaterial bei Einsatz im Außenbereich witterungsbeständig und bei Einsatz im Innenbereich unempfindlich gegenüber z.B. Löschmaterial, wie Wasser aus einer Sprinkleranlage.

Mittels des erfindungsgemäßen Brandschutzmaterials, insbesondere wenn dieses in einer schlauchartigen Gestalt vorliegt, lässt sich auf einfache Weise ein montagefreundlicher Brandschutz von Kabeln oder Rohrleitungen bewerkstelligen. Die bisherigen kastenförmigen Brandschutzkanäle lassen sich vorteilhaft durch das erfindungsgemäße Brandschutzmaterial ersetzen, wobei das erfindungsgemäße Brandschutzmaterial aufgrund seiner Biegsamkeit auch einen geringeren Platzbedarf im Vergleich zu den herkömmlichen Brandschutzkanälen aufweist.

Das erfindungsgemäße Brandschutzmaterial ist biegsam, biegbar und/oder in eine Gestalt formbar oder bringbar, welche röhrenförmig oder im Wesentlichen röhrenförmig ist. Das erfindungsgemäße Brandschutzmaterial lässt sich zudem einfach montieren und weist eine geringere Eigenmasse im Vergleich zu den herkömmlichen Brandschutzkanälen auf, was Vorteile bei der mechanischen Stabilität unter Hitzeeinwirkung hat.

Das erfindungsgemäße Brandschutzmaterial kann, vorzugsweise in schlauchförmiger Gestalt, bei der Verlegung von Kabeln oder Rohrleitungen (Neuinstallation) zum Umhüllen derselben eingesetzt werden. Es kann aber auch zum nachträglichen Schutz bereits bestehender Kabel, Rohrleitungen oder Kabelkanälen oder dergleichen verwendet werden. Diese Möglichkeit bestand bei den bisher eingesetzten Brandschutzkanälen aufgrund deren Platzbedarf oder Montagebeschränkungen zumeist nicht. Dabei kann das zu schützende Gut im montierten Zustand mit einem flächigen Abschnitt des Brandschutzmaterials überlappend umhüllt werden. Das Brandschutzmaterial kann dann vorzugsweise mechanisch, bspw. mittels eines verzinkten Bindedrahts oder Spannschellen, befestigt werden.

Vorteilhafte Ausführungsformen des erfindungsgemäßen Brandschutzmaterials sind Gegenstand der abhängigen Ansprüche.

So kann das Trägermaterial ein Fibersilikat, vorzugsweise ein Calciumsilikat und/oder ein Siliziumsilikat, enthalten oder daraus bestehen. Zudem oder alternativ kann das Trägermaterial als ein geflochtener Garn, ein Gewebe, ein geflochtener Zopf oder eine Gitterstruktur ausgebildet sein.

Fibersilikat ist ein hochtemperaturbeständiges Material, das sich insbesondere als Flechtwerk oder Garn durch eine geringe Dichte und damit eine geringe massenbezogene Belastung des zu schützenden Gutes auszeichnet.

In einer vorteilhaften Ausführungsform kann das erste Beschichtungsmaterial ein Einkomponentenmaterial enthalten oder daraus bestehen. Dabei enthält das Einkomponentenmaterial vorzugsweise folgende Stoffe:
Triphenylphosphat (CAS-Nr. 115-86-6), vorzugsweise in einem Massenanteil von < 1 %;
Nonylphenolethoxylat (CAS-Nr. 9016-45-9), vorzugsweise in einem Massenanteil von < 1 %;
Ammoniumhydroxid (CAS-Nr. 1336-21-6), vorzugsweise in einem Massenanteil von < 1 %;
Pyrithionzink (CAS-Nr. 13463-41-7), vorzugsweise in einem Massenanteil von 0,1 bis 0,2 %;
Terbutryn (CAS-Nr. 886-50-0), vorzugsweise in einem Massenanteil von 0,1 bis 0,2 %; und
Zinkoxid (CAS-Nr. 1314-13-2), vorzugsweise in einem Massenanteil von 0,1 bis 0,2 %.

Dabei kann sich der jeweilige Massenanteil vorzugsweise auf die Masse des Einkomponentenmaterials beziehen.

Wenn das erste Beschichtungsmaterial das Einkomponentenmaterial wie vorstehend beschrieben enthält oder daraus besteht, zeichnet es sich durch gute Aufbläh- bzw. Aufschäumeigenschaften und damit durch eine gute Brandschutzwirkung aus.

In einer weiteren Ausführungsform kann das Brandschutzmaterial ferner ein zweites Beschichtungsmaterial aufweisen. Das zweite Beschichtungsmaterial kann auf dem Primer oder auf einem Gemisch aus dem Primer und dem ersten Beschichtungsmaterial aufgebracht sein. Dabei kann das zweite Beschichtungsmaterial ein erstes Zweikomponentenmaterial, ein zweites Zweikomponentenmaterial und vorzugsweise den Verdünner enthalten oder daraus bestehen.

Das erste Zweikomponentenmaterial (2K1) enthält vorzugsweise folgende Stoffe:
Xylol (CAS-Nr. 1330-20-7), vorzugsweise in einem Massenanteil von 1 bis 5 %;
Ethylbenzol (CAS-Nr. 100-41-4), vorzugsweise in einem Massenanteil von 1 bis 5 %;
leichte, aromatische Lösungsmittelnaphtha (Erdöl) (CAS-Nr. 64742-95-6), vorzugsweise in einem Massenanteil von 0,5 bis 5 %;
1,3,3-Trimethyl-N-(2-methylpropyliden)-5-[(2-methylpropyliden)amino]cyclohexanmetylamin (CAS-Nr. 54914-37-3), vorzugsweise in einem Massenanteil von 0,25 bis 0,5 %;
Dimethylbis[(1-oxoneodecyl)oxy]stannan (CAS-Nr. 68928-76-7), vorzugsweise in einem Massenanteil von 0,1 bis 0,25 %;
n-Butylacetat (CAS-Nr. 123-86-4), vorzugsweise in einem Massenanteil von 12,5 bis 15 %;
2-Methoxy-1-methylethylacetat (CAS-Nr. 108-65-6), vorzugsweise in einem Massenanteil von 1 bis 5; und
Ethyl-3-ethoxypropionat (CAS-Nr. 763-69-9), vorzugsweise in einem Massenanteil von 1 bis 5 %.

Das zweite Zweikomponentenmaterial (2K2) enthält vorzugsweise folgende Stoffe:
Hexamethylen-1,6-diisocyanat Homopolmyer (CAS-Nr. 28182-81-2), vorzugsweise in einem Massenanteil von wenigstens 40 %;
Aromate, Kohlenwasserstoffe, C9 (CAS-Nr. 64742-95-6), vorzugsweise in einem Massenanteil von 25 bis 40 %;
Hexamethylen-1,6-diisocyanat (CAS Nr. 822-06-0), vorzugsweise in einem Massenanteil von 0,25 bis 0,5 %;
Dimethylbis[(1-oxoneodecyl)oxy]stannan (CAS-Nr. 68928-76-7), vorzugsweise in einem Massenanteil von 0,1 bis 0,25 %; und
n-Butylacetat (CAS-Nr. 123-86-4), vorzugsweise in einem Massenanteil von 1 bis 5 %.

Der jeweilige Massenanteil der Bestandteile des ersten Zweikomponentenmaterials und des zweiten Zweikomponentenmaterials bezieht sich dabei vorzugsweise auf die Masse des zweiten Beschichtungsmaterials. Der Verdünner macht vorzugsweise den restlichen Massenanteil des zweiten Beschichtungsmaterials aus.

Das Vorhandensein des zweiten Beschichtungsmaterials hat den Vorteil, dass das Aufblähen bzw. Aufschäumen des ersten Beschichtungsmaterials beschleunigt wird, sodass die Brandschutzwirkung des ersten Beschichtungsmaterials schneller hergestellt wird. Weiter stellt das zweite Beschichtungsmaterial vorteilhaft eine Schutzschicht für das erste Beschichtungsmaterial dar, beispielsweise gegen mechanische Verletzungen von außen.

Der erfindungsgemäß vorgeschlagene Primer ist zudem chemisch kompatibel mit dem zweiten Beschichtungsmaterial, so dass auch das zweite Beschichtungsmaterial in seinen chemischen Eigenschaften nicht oder nicht nennenswert beeinträchtigt oder verändert wird. Vielmehr bewirkt der Primer eine Verbesserung der Haftung des zweiten Beschichtungsmaterials auf dem ersten Beschichtungsmaterial, so dass die mechanische Stabilität des Brandschutzmaterials insgesamt verbessert wird.

Die erfindungsgemäße Aufgabe wird ferner gelöst durch das Verfahren nach Anspruch 5. Dabei gelten die Vorteile des erfindungsgemäßen Brandschutzmaterials für das erfindungsgemäße Verfahren analog.

So wird ein Verfahren zur Herstellung eines Brandschutzmaterials, vorzugsweise des Brandschutzmaterials nach einem der Ansprüche 1 bis 4, vorgeschlagen, wobei das Verfahren wenigstens die Schritte aufweist:
(a) Bereitstellen eines Trägermaterials;
(b) Aufbringen eines ersten Beschichtungsmaterials auf das Trägermaterial;
   wobei das Aufbringen des ersten Beschichtungsmaterials vorzugsweise durch Tauchen, Rollen oder Spritzen erfolgt; und
   vorzugsweise Abbinden lassen für wenigstens 1 Stunde (h), vorzugsweise wenigstens 2 Stunden; und
(c) Aufbringen eines Primers auf das in Schritt (b) erhaltene, beschichtete Trägermaterial; und
   vorzugsweise Abbinden lassen für wenigstens 1 Stunde, vorzugsweise wenigstens 2 Stunden;
   wodurch das Brandschutzmaterial erhalten wird.

Dabei ist der Primer vorzugsweise der Primer nach Anspruch 1 oder wie er vorstehend bzw. in Anspruch 1 definiert worden ist. Das Trägermaterial ist vorzugsweise das Trägermaterial nach Anspruch 2 oder wie es vorstehend bzw. in Anspruch 2 definiert worden ist. Zudem ist das erste Beschichtungsmaterial vorzugsweise das erste Beschichtungsmaterial nach Anspruch 3 oder wie es vorstehend bzw. in Anspruch 3 definiert worden ist.

Das erfindungsgemäße Verfahren zeichnet sich durch eine einfache Handhabung und eine hohe Flexibilität aus.

In einer weiteren Ausführungsform weist das Verfahren ferner den Schritt auf:
(d) Aufbringen eines zweiten Beschichtungsmaterials auf das in Schritt (c) erhaltene Brandschutzmaterial; und
vorzugsweise Abbinden lassen für wenigstens 1 Stunde, vorzugsweise wenigstens 2 Stunden.

Dabei ist das zweite Beschichtungsmaterial vorzugsweise das zweite Beschichtungsmaterial nach Anspruch 4 oder wie es vorstehend bzw. in Anspruch 4 definiert worden ist.

Die erfindungsgemäße Aufgabe wird ferner durch das Brandschutzmaterial, hergestellt mit dem Verfahren nach einem der Ansprüche 5 oder 6, gelöst. Dabei gelten alle Vorteile des erfindungsgemäßen Verfahrens und des erfindungsgemäßen Brandschutzmaterials wie vorstehend beschrieben (gemäß den Ansprüchen 1 bis 4) analog.

In einer weiteren, vorteilhaften Ausführungsform kann das Brandschutzmaterial in Gestalt eines Schlauches oder Rohres oder eines Formteils mit wenigstens einer gekrümmten Oberfläche vorliegen. Dabei kann der Innendurchmesser oder Innenkreisdurchmesser des Schlauches oder Rohres oder der gekrümmten Oberfläche vorzugsweise zwischen 5 und 100 mm, weiter vorzugsweise zwischen 10 und 60 mm, insbesondere zwischen 10 und 50 mm, betragen.

Das erfindungsgemäße Brandschutzmaterial eignet sich insbesondere zum Schutz von Kabeln und Leitungen, also zum Umhüllen von rohrförmigen Gegenständen mit einem verhältnismäßig kleinen Durchmesser, insbesondere im Bereich von 10 bis 50 mm. Bei derartigen Umhüllungen kann das Brandschutzmaterial auch Krümmungen mit kleinen Radien ausbilden. Dabei wird die Rissbildung insoweit unterdrückt, dass die Brandschutzwirkung des erfindungsgemäßen Brandschutzmaterials auch bei äußerem Einfluss von Feuchtigkeit, wie z.B. Niederschlag im Freien oder Beaufschlagung mit Spritzwasser in geschlossenen Räumen, aufrechterhalten wird.

Die erfindungsgemäße Aufgabe wird ferner durch die Verwendung nach Anspruch 9 gelöst. Dabei wird die Verwendung eines Primers in einem Brandschutzmaterial oder bei der Herstellung eines Brandschutzmaterials vorgeschlagen, wobei der Primer vorzugsweise der Primer nach Anspruch 1 ist oder wie er vorstehend bzw. in Anspruch 1 definiert worden ist. Es gelten die in Zusammenhang mit dem erfindungsgemäßen, den Primer enthaltenden Brandschutzmaterial genannten Vorteile für die erfindungsgemäße Verwendung analog.

Dabei kann das Brandschutzmaterial ein Trägermaterial aufweisen, wobei der Primer vorzugsweise auf das Trägermaterial aufgebracht wird bzw. ist oder in einer Schicht auf dem Trägermaterial angeordnet wird bzw. ist. Dabei kann das Trägermaterial das Trägermaterial nach Anspruch 2 sein oder wie es vorstehend bzw. in Anspruch 2 definiert worden ist.

In einer bevorzugten Ausführungsform der erfindungsgemäßen Verwendung kann das Brandschutzmaterial ein erstes Beschichtungsmaterial aufweisen, wobei das erste Beschichtungsmaterial auf dem Trägermaterial aufgebracht oder in einer Schicht auf dem Trägermaterial angeordnet sein kann. Dabei kann der Primer auf das erste Beschichtungsmaterial aufgebracht werden oder sein oder kann in einer Schicht auf dem ersten Beschichtungsmaterial angeordnet sein oder kann ein Gemisch mit dem ersten Beschichtungsmaterial ausbilden. Zudem oder alternativ kann das erste Beschichtungsmaterial das erste Beschichtungsmaterial nach Anspruch 3 sein oder das erste Beschichtungsmaterial wie es vorstehend bzw. in Anspruch 3 definiert worden ist, sein.

In einer bevorzugten Ausführungsform der erfindungsgemäßen Verwendung kann das Brandschutzmaterial ferner ein zweites Beschichtungsmaterial aufweisen. Dabei kann das zweite Beschichtungsmaterial auf dem Primer aufgebracht sein oder auf den Primer aufgebracht werden oder in einer Schicht auf dem Primer angeordnet sein oder angeordnet werden oder ein Gemisch mit dem Primer ausbilden. Zudem oder alternativ kann das zweite Beschichtungsmaterial das zweite Beschichtungsmaterial nach Anspruch 4 sein oder das zweite Beschichtungsmaterial, wie es vorstehend bzw. in Anspruch 4 definiert worden ist, sein.

In einer bevorzugten Ausführungsform der erfindungsgemäßen Verwendung kann das Brandschutzmaterial ferner ein zweites Beschichtungsmaterial aufweisen. Dabei kann das zweite Beschichtungsmaterial auf den Primer aufgebracht sein oder aufgebracht werden oder auf das Gemisch aus dem Primer und dem ersten Beschichtungsmaterial aufgebracht sein oder aufgebracht werden. Dabei kann das zweite Beschichtungsmaterial in einer Schicht auf dem Primer oder auf dem Gemisch aus dem Primer und dem ersten Beschichtungsmaterial angeordnet sein oder werden. Zudem oder alternativ kann das zweite Beschichtungsmaterial das zweite Beschichtungsmaterial nach Anspruch 4 sein oder das zweite Beschichtungsmaterial, wie es vorstehend bzw. in Anspruch 4 definiert worden ist, sein.

### Weitere Offenbarung der Erfindung

Erfindungsgemäß kann die Grundierung G des Primers P insbesondere die Grundierung mit der Bezeichnung "Seevenax Grundierung 113-74" (Fa. Mankiewicz Gebr. & Co., Hamburg), der Härter H der Härter mit der Bezeichnung "Seevenax 115-74" (Fa. Mankiewicz Gebr. & Co., Hamburg) und der Verdünner V ein Verdünner der Bezeichnung "Verdünner 903-76" (Fa. Mankiewicz Gebr. & Co., Hamburg) sein.

Erfindungsgemäß kann das erste Beschichtungsmaterial S1 das Einkomponentenmaterial 1K mit folgender Zusammensetzung enthalten:
Triphenylphosphat (CAS-Nr. 115-86-6), Massenanteil von < 1 %;
Nonylphenolethoxylat (CAS-Nr. 9016-45-9), Massenanteil von < 1 %;
Ammoniumhydroxid (CAS-Nr. 1336-21-6), Massenanteil von < 1 %;
Pyrithionzink (CAS-Nr. 13463-41-7), Massenanteil von 0,1 bis 0,2 %;
Terbutryn (CAS-Nr. 886-50-0), Massenanteil von 0,1 bis 0,2 %; und
Zinkoxid (CAS-Nr. 1314-13-2), Massenanteil von 0,1 bis 0,2 %;
wobei sich der jeweilige Massenanteil auf die Masse des Einkomponentenmaterials 1K bezieht.

Erfindungsgemäß kann das zweite Beschichtungsmaterial S2 als erstes Zweikomponentenmaterial 2K1 einen Decklack der Bezeichnung "ALEXIT-Decklack 467-76 383N feuerrot 3000 matt" (Fa. Mankiewicz Gebr. & Co., Hamburg) enthalten. Ferner kann das zweite Beschichtungsmaterial S2 als zweites Zweikomponentenmaterial 2K2 einen Härter der Bezeichnung "ALEXIT-Härter / Hardener 405-74" (Fa. Mankiewicz Gebr. & Co., Hamburg) enthalten.

### Brandschutzprüfung des erfindungsgemäßen Brandschutzmaterials

Von einer bauaufsichtlich anerkannten Prüf-, Überwachungs- und Zertifizierungsstelle wurde eine Brandschutzprüfung eines Kabels in Anlehnung an IEC 60331-21: 1999-04 durchgeführt. Dabei wurde das Kabel einmal ohne Umhüllung und einmal umhüllt mit dem erfindungsgemäßen Brandschutzmaterial geprüft. Zweck der Prüfung war es, den Isolationsgehalt des Kabels ohne bzw. mit Umhüllung aus dem erfindungsgemäßen Brandschutzmaterial unter Flammeneinwirkung zu bestimmen. Dabei weist das untersuchte Brandschutzmaterial die folgende Zusammensetzung auf: Fibersilikat als Trägermaterial, einen Primer der Zusammensetzung (einschließlich Mengenangaben) gemäß Anspruch 1, ein ersten Beschichtungsmaterial (einschließlich Mengenangaben) gemäß Anspruch 3 und einem zweiten Beschichtungsmaterial (einschließlich Mengenangaben) gemäß Anspruch 4.

Bedingungen: Probekabel: Sienopyr FR (L)M2XH 4x10 schwarz 0.6/1kV (Hersteller: PRYSMIAN Kabel und Systeme GmbH), Nennspannung bis 0,6/1 kV, Prüfspannung 1000 V AC (Phase - Phase), Prüfdauer: 90 min.

### Versuchsdurchführung Brandschutzprüfung

Das jeweilige Probekabel von 1,2 m Länge wurde gerade gerichtet und zwischengelagert. Im Test #1 wurde das Kabel ohne Brandschutzmaterial geprüft. Im Test #2 wurde das Kabel einlagig umhüllt mit dem erfindungsgemäßen Brandschutzmaterial geprüft. Im Test #3 wurde das Kabel in eine Kabelrinne eingebracht, wobei die Kabelrinne mit dem erfindungsgemäßen Brandschutzmaterial einlagig umhüllt wurde. Das Probekabel wurde in die Kabelrinne auf der dem Brenner zugewandten Seite positioniert (Test #3). Der elektrische Anschluss der Probekabel erfolgte entsprechend der IEC 60331-21. Die vier Adern des Kabels wurden mit L1, L2, L3 und N verbunden. Die Spannung zwischen den Phasen betrug 1000 V AC. Die Kabelhalterung bzw. Kabelrinne wurde geerdet. Der Stromfluss je Leiter von 0,25 A wurde durch vier Lastwiderstände realisiert. Der Isolationserhalt mit einem LED-Tableau angezeigt. Das Kabel wurde über einen Zeitraum von 90 Minuten bzw. bis zum Kurzschluss mit einem Brenner entsprechend IEC 60331-11 beflammt. Die Temperatur der Flamme (750 bis 800 °C) entsprach ebenfalls vorgenannter Norm. Der Prüfung wurde in der Box entsprechend IEC 61034-1 durchgeführt. Alle weiteren Vorgaben der o. g. Norm wurden ebenfalls eingehalten. Spätestens nach 90 Minuten wurde der Brenner abgestellt.

**Tabelle 1: Versuchsauswertung Brandschutzprüfung:**

| Test | Beschreibung | Kurzschluss oder Leiterbruch während 90 min Beflammung | Isolationserhalt gemäß Norm erfüllt |
|---|---|---|---|
| #1 | Kabel ohne Brandschutzmaterial | ja, nach 9:45 min | nein |
| #2 | Kabel einlagig umhüllt mit erfindungsgemäßem Brandschutzmaterial | nein | ja |
| #3 | Kabel in Kabelrinne, mit Kabelrinne einlagig umhüllt mit erfindungsgemäßem Brandschutzmaterial | nein | ja |

### Ergebnisse Brandschutzprüfung

Test #1: Das Probekabel ohne Brandschutzmaterial hat die Anforderungen der Prüfung nicht erfüllt. Bereits nach 9:45 Minuten wurden durch einen Kurzschluss die Sicherungen ausgelöst.
Test #2: Das Probekabel, das mit dem erfindungsgemäßen Brandschutzmaterial einlagig umhüllt war, hat die Anforderungen der Prüfung in Anlehnung an IEC 60331-21: 1999-04 (90 min) erfüllt, da während der 90 minütigen Beflammung und der Abkühlphase von 15 min. weder die Sicherungen noch Leuchten ausfielen.
Test #3: Das Probekabel, das in eine Kabelrinne eingelegt war, welche mit dem erfindungsgemäßen Brandschutzmaterial einlagig umhüllt war, hat die Anforderungen der Prüfung in Anlehnung an IEC 60331-21: 1999-04 (90 min) erfüllt, da während der 90-minütigen Beflammung und der Abkühlphase von 15 min. weder die Sicherungen noch Leuchten ausfielen.

### Lebensdaueranalyse des erfindungsgemäßen Brandschutzmaterials bei Außenbedingungen

Gegenstand der Untersuchung ist die Lebensdaueranalyse des erfindungsgemäßen Brandschutzmaterials bei Außenbedingungen gemäß den von der European Organisation for Technical Assessment (EOTA) in folgenden Referenzdokumenten zur Beurteilung von Brandschutzprodukten festgelegten Kriterien und Verfahren:
- ETAG 026-2 Version August 2011 Fire Stopping and Fire Sealing Products. Part 2: Penetration Seals
- EOTA Technical Report 024 Version July 2009 Characterisation, Aspects of Durability and Factory Production Control for Reactive Materials, Components and Products

Die Bewertung ist vom Instituto de Tecnologia de la Construcción de Cataluña; (ITeC) vorgenommen worden. Die Versuche sind in einem akkreditierten Labor durchgeführt worden.

### Hintergrund und Bedingungen der Lebensdaueranalyse

Im Rahmen der Lebensdaueranalyse wurde ein erfindungsgemäßes Brandschutzmaterial mit der identischen Zusammensetzung wie das vorstehend, bei der Brandschutzprüfung beschriebene und untersuchte Brandschutzmaterial untersucht. Die Einsatzwitterungsbedingungen entsprechen dem in den vorstehend angegebenen Referenzdokumenten definierten Typ X (Verwendung im Freien), insbesondere EOTA TR 024 Abschnitt 4.2.3. Die Bewertung dieser Kategorie berücksichtigt folgende Einflussgrößen und in der angegebenen Reihenfolge:
- UV-Exposition
- Regen
- Temperaturen zwischen -20°C und 70°C
- Hohe Luftfeuchtigkeit

Die Methoden zur Bewertung der Lebensdauer basieren auf einer Produktlebensdauer von 10 Jahren.

### Methodik der Lebensdaueranalyse

Ziel der Analyse ist der Nachweis, ob eine wesentliche Beeinträchtigung der Brandschutzeigenschaften des erfindungsgemäßen Brandschutzmaterials infolge der klimatischen Einflüsse eintritt. Zu diesem Zweck werden Gewebeproben beschleunigten Alterungszyklen ausgesetzt, wie nachfolgend beschrieben. Anschließend werden die thermische Effizienz dieser gealterten Gewebeproben sowie der Kontrollproben des erfindungsgemäßen Brandschutzmaterials, die nicht den Alterungszyklen ausgesetzt worden sind, ermittelt, um die Ergebnisse zwischen beiden Probearten zu vergleichen. Zur Prüfung der thermischen Effizienz wird das Brandschutzmaterial auf Stahlplatten gelegt und die Proben der externen Feuerkurve gemäß EN 1363-23 ausgesetzt, um die Temperaturerhöhung der vom Gewebe geschützten Stahlplatten zu bestimmen. Es werden die Zeit, bis die Stahlplatten eine Temperatur von 280 °C und 400 °C erreichen, und die Ausdehnungshöhe bestimmt. Vor der Prüfung der thermischen Effizienz werden an den gealterten Proben die Dicke, die flächenbezogene Masse und das Aussehen bestimmt, sowohl vor als nach den Alterungszyklen.

Die für die beschleunigte Alterung vorgesehenen Proben sind den Bedingungen für den Typ X gemäß EOTA TR 024 Abschnitt 4.2.3 ausgesetzt worden. Die Alterung ist in zwei aufeinanderfolgenden Phasen durchgeführt worden:

### Phase 1: UV-Kammer

Exposition der Proben in UV-Kammer während 28 Tage unter den Bedingungen gemäß EN ISO 4892-3 mit einer Kombination A.2 mit Lampen vom Typ 1A (siehe Tabelle 1 der Norm) und gemäß Zyklus Nr. 3 (siehe Tabelle 4) (vgl. EN ISO 4892-3: 2006 Plastics. Methods of exposure to laboratory light sources. Part 3: Fluorescent UV lamps (ISO 4892-3:2006).

Die Exposition besteht aus 112 ununterbrochenen Zyklen, ein Zyklus umfasst:
- 5 h Trockenphase (50 ± 3)°C und relative Luftfeuchte unter 15 %
- 1 h Wasserbesprühung bei einer Kammertemperatur von (25 ± 3)°C

Die UV-Strahlung (45 W/m², 290 nm bis 400 nm) wird während aller Zyklen aufrechterhalten.

### Phase 2: Klimakammer

Die Exposition der Proben in der Klimakammer während 14 Tage erfolgte gemäß dem in nachstehender Tabelle 2 definierten, hydrothermischen Zyklus.

**Tabelle 2: Hydrothermische Zyklen (rF = relative Luftfeuchtigkeit).**

| Tag | Phase | | | |
|---|---|---|---|---|
| | 1 (6 h) | 2 (6 h) | 3 (6 h) | 4 (6 h) |
| 1 und 2 | (20 ± 3)°C, Sättigung rF | (70 ± 3)°C, (20 ± 5)% rF | (20 ± 3)°C, Sättigung rF | (70 ± 3)°C, (20 ± 5)% rF |
| 3 und 4 | (20 ± 3)°C, Sättigung rF | (30 ± 3)°C, (40 ± 5)% rF | (40 ± 3)°C, Sättigung rF | (30 ± 3)°C, (40 ± 5)% rF |
| 5, 6 und 7 | (- 20 ± 3)°C | (40 ± 3)°C, Sättigung rF | (- 20 ± 3)°C | (40 ± 3)°C, Sättigung rF |

Der hydrothermische Zyklus wird zweimal durchgeführt, bis eine kontinuierliche Exposition von 14 Tagen erreicht wird.

### Ergebnisse der Lebensdaueranalyse

In der Tabelle 3 sind die Auswirkungen infolge der beschleunigten Alterung der gealterten Proben vor und nach den Expositionszyklen wie vorstehend beschrieben aufgeführt.

**Tabelle 3: Auswirkungen der Alterung**

| Eigenschaft | Proben vor Prüfung | Proben nach UV-Kammer | Proben nach hydrothermischen Zyklen | Gesamtverlust |
|---|---|---|---|---|
| flächenbezogene Masse (kg/m²) | 2,407 | 2,357 | 2,350 | 2,36 % |
| Dicke¹ (mm) | 1,64 | 1,62 | 1,47 | 10,3 % |
| Aussehen | - | vereinzeltes Auftreten von Stellen mit weißem Pulver auf der Deckschicht nach der Alterung in der UV-Kammer | | |

| | | | | |
|---|---|---|---|---|
| ¹ Aufgrund der heterogenen Natur und der Rauheit der Produktoberfläche besteht eine große Dispersion bei der Bestimmung der einzelnen Dicken. Es sind Mittelwerte angesetzt worden, allerdings sind die Ergebnisse als Richtwerte zu betrachten. | | | | |

Anschließend werden die gealterten Proben (nach den Zyklen gemäß Tabelle 2) und die Kontrollproben (die nicht den Alterungszyklen ausgesetzt worden sind) einer Prüfung zur thermischen Effizienz unterzogen, um die Schutzzeiten beider Probenarten zu vergleichen.

**Tabelle 4: Prüfung der thermischen Effizienz (alle Werte sind Mittelwerte aus 10 untersuchten Proben)**

| Proben | Zeit¹ (Minuten) bis zum Erreichen der Bewertungstemperatur | | Endausdehnungshöhe² (mm) | Ausdehnungsverhältnis³ |
|---|---|---|---|---|
| | T = 280 °C | T = 400 °C | | |
| Kontrolle | 27,6 | 63,2 | 27,4 | 18,9 |
| gealtert | 26,9 | 58,1 | 28,5 | 20,0 |

| | | | | |
|---|---|---|---|---|
| ¹ Um die Ergebnisse der Kontrollproben und der gealterten Proben vergleichen zu können, sind die Ergebnisse mit der flächenbezogenen Masse korrigiert worden, wobei ein linearer Ansatz angenommen wurde. ² Sowohl die Werte zur Ausdehnungshöhe wie das Ausdehnungsverhältnis sind infolge der hohe Dispersion der Einzelwerte als Richtwerte zu verstehen. ³ Verhältnis zwischen Endausdehnungshöhe und Dicke vor der Prüfung | | | | |

### Auswertung der Lebensdaueranalyse

Gemäß den in den vorstehend angegebenen Referenzdokumenten werden folgende Bewertungskriterien definiert:
(a) Die mittlere Zeit zum Erreichen der Bewertungstemperatur der gealterten Proben darf nicht kleiner sein als 85 % der mittleren Zeit bei den Kontrollproben.
(b) Die Einzelzeit zum Erreichen der Bewertungstemperatur aller gealterten Proben darf nicht kleiner sein als 80 % der mittleren Zeit bei den Kontrollproben.

Die Bewertungsergebnisse gemäß diesen Kriterien sind in Tabelle 5 aufgeführt.

**Tabelle 5: Verhalten der gealterten Proben**

| Bewertungskriterium | Bewertungstemperatur | | Bewertung |
|---|---|---|---|
| | T = 280 °C | T = 400 °C | |
| (a) mittlere Zeiten | 97,4% | 92,0% | Kriterium wird erfüllt |
| (b) Einzelzeiten | alle Proben > 89 % | 1 Probe = 78 %, alle übrigen Proben > 86 % | Kriterium wird erfüllt (siehe nachstehenden Kommentar) |

Der Mittelwert der zum Erreichen der Bewertungstemperatur der gealterten Proben (vorstehendes Bewertungskriterium (a)) erforderlichen Zeit beträgt bei beiden Bewertungstemperaturen wenigstens 92 %, womit das Bewertungskriterium (a) erfüllt ist.

Bei der Betrachtung der Einzelzeiten (vorstehendes Bewertungskriterium (b)) erreichen alle Proben die Bewertungstemperatur in Höhe von 280 °C in jeweils wenigstens 89 % der mittleren Zeit der Kontrollproben. Bezüglich der Bewertungstemperatur von 400 °C liegen alle Proben bis auf eine einzige bei > 86 %. Damit wird auch das Bewertungskriterium (b) mit einer Ausnahme problemlos erfüllt. Die einzige Probe, die das Bewertungskriterium (b) nicht erfüllt, weist eine flächenbezogene Masse von 2,26 kg/m² (2,21 kg/m² nach Alterung) auf. Dies ist der niedrigste Wert aller Proben. Der flächenbezogene Masseverlust des Produkts infolge der Alterungszyklen ist akzeptabel.

Somit ist kein negativer Alterungseinfluss hinsichtlich der Enddicke der Proben nach der Prüfung der thermischen Effizienz (Endausdehnungshöhe) festzustellen. Die Dickenbestimmungen sind infolge der ungleichmäßigen Produktoberfläche als Richtwerte zu verstehen, sowohl für das anfängliche Gewebe als auch für das expandierte Brandschutzmaterial nach der Prüfung der thermischen Effizienz.

Demzufolge ist das untersuchte, erfindungsgemäße Brandschutzmaterial zur Verwendung bei Witterungsbedingungen vom Typ X (Verwendung im Freien) bei einer geplanten Lebensdauer von 10 Jahren als geeignet zu betrachten.

Zusammenfassend wird festgestellt, dass das erfindungsgemäße Brandschutzmaterial sowohl die Voraussetzungen der Brandschutzprüfung als auch der Lebensdaueranalyse erfüllt. Somit bietet das erfindungsgemäße Brandschutzmaterial bei der Verwendung zum Umhüllen eines Kabels oder einer Leitung einen ausreichenden Brandschutz, der aufgrund einer hinreichenden Vermeidung der Rissbildung beim Ausbilden von Radien, insbesondere engen Radien, dank der Verwendung des Primers auch bei witterungsbedingtem Einsatz aufrecht erhalten bleibt.

### Ansprüche

**1.** Brandschutzmaterial (B) zum Umhüllen eines Kabels oder einer Leitung und/oder zum Ausbilden eines Formteils mit wenigstens einer gekrümmten Oberfläche;
   wobei das Brandschutzmaterial (B) ein Trägermaterial (T) aufweist;
   wobei das Brandschutzmaterial (B) ferner ein erstes Beschichtungsmaterial (S1) aufweist;
   wobei das erste Beschichtungsmaterial (S1) auf dem Trägermaterial (T) aufgebracht ist;
   dadurch gekennzeichnet, dass
   das Brandschutzmaterial (B) ferner einen Primer (P) aufweist;
   wobei der Primer (P) vorzugsweise eine Grundierung (G), einen Härter (H) und einen Verdünner (V) enthält oder daraus besteht;
   wobei die Grundierung (G) enthält:
   Xylol (CAS-Nr. 1330-20-7), vorzugsweise in einem Massenanteil von 12,5 bis 20 %;
   Kohlenwasserstoffe, C9, Aromate (CAS-Nr. 64742-95-6), vorzugsweise in einem Massenanteil von 5 bis 12,5 %;
   Reaktionsprodukt: Bisphenol-A-Epichlorhydrinharze mit durchschnittlichem Molekulargewicht 700 bis 1100 (CAS-Nr. 25068-38-6), vorzugsweise in einem Massenanteil von 5 bis 12,5 %;
   Butan-l-ol (CAS-Nr. 71-36-3), vorzugsweise in einem Massenanteil von 5 bis 10 %;
   Trizinkbis(orthophosphat) (CAS-Nr. 7779-90-0), vorzugsweise in einem Massenanteil von 5 bis 12,5 %;
   Ethylbenzol (CAS-Nr. 100-41-4), vorzugsweise in einem Massenanteil von 1 bis 5 %;
   4-Hydroxy-4-methyl-pentan-2-on (CAS-Nr. 123-42-2), vorzugsweise in einem Massenanteil von 1 bis 5 %;
   Lösungsmittelnaphtha (Erdöl), leicht aromatisiert (CAS-Nr. 64742-95-6), vorzugsweise in einem Massenanteil von 0,1 bis 0,25 %; und
   Siliciumdioxid (CAS-Nr. 7631-86-9), vorzugsweise in einem Massenanteil von 1 bis 5 %;
   wobei der Härter (H) enthält:
   Hexamethylen-1,6-diisocyanat, Homopolymer (CAS-Nr. 28182-81-2), vorzugsweise in einem Massenanteil von wenigstens 40 %;
   Kohlenwasserstoffe, C9, Aromate (CAS-Nr. 64742-95-6), vorzugsweise in einem Massenanteil von 25 bis 40 %;
   Hexamethylen-1,6-diisocyanat (CAS-Nr. 822-06-0), vorzugsweise in einem Massenanteil von 0,25 bis 0,5 %;
   Dimethylbis[(1-oxoneodecyl)oxy]stannan (CAS-Nr. 68928-76-7), vorzugsweise in einem Massenanteil von 0,1 bis 0,25 %; und
   n-Butylacetat (CAS-Nr. 123-86-4), vorzugsweise in einem Massenanteil von 1 bis 5 %;
   wobei der Verdünner (V) enthält:
   Xylol (CAS-Nr. 1330-20-7), vorzugsweise in einem Massenanteil von wenigstens 40 %;
   Butan-l-ol (CAS-Nr. 71-36-3), vorzugsweise in einem Massenanteil von 20 bis 25 %;
   Ethylbenzol (CAS-Nr. 100-41-4), vorzugsweise in einem Massenanteil von 12,5 bis 20 %; und
   n-Butylacetat (CAS-Nr. 123-86-4), vorzugsweise in einem Massenanteil von 20 bis 25 %;
   wobei sich der jeweilige Massenanteil der Bestandteile der Grundierung (G), des Härters (H) und des Verdünners (V) vorzugsweise auf die Masse des Primers (P) bezieht; und
   wobei das Massenverhältnis der Grundierung (G) zum Härter (H) vorzugsweise 4 bis 6, vorzugsweise 5, zu 1 beträgt.
**2.** Brandschutzmaterial (B) nach Anspruch 1, dadurch gekennzeichnet, dass das Trägermaterial (T) ein Fibersilikat, vorzugsweise ein Calciumsilikat und/oder ein Siliziumsilikat, enthält oder daraus besteht; und/oder
   das Trägermaterial (T) als ein geflochtener Garn, ein Gewebe, ein geflochtener Zopf oder eine Gitterstruktur ausgebildet ist.
**3.** Brandschutzmaterial (B) nach Anspruch 1 oder 2, dadurch gekennzeichnet, dass das erste Beschichtungsmaterial (S1) ein Einkomponentenmaterial (1K) enthält oder daraus besteht;
   wobei das Einkomponentenmaterial (1K) vorzugsweise folgende Stoffe enthält:
   Triphenylphosphat (CAS-Nr. 115-86-6), vorzugsweise in einem Massenanteil von < 1 %;
   Nonylphenolethoxylat (CAS-Nr. 9016-45-9), vorzugsweise in einem Massenanteil von < 1 %;
   Ammoniumhydroxid (CAS-Nr. 1336-21-6), vorzugsweise in einem Massenanteil von < 1 %;
   Pyrithionzink (CAS-Nr. 13463-41-7), vorzugsweise in einem Massenanteil von 0,1 bis 0,2 %;
   Terbutryn (CAS-Nr. 886-50-0), vorzugsweise in einem Massenanteil von 0,1 bis 0,2 %; und
   Zinkoxid (CAS-Nr. 1314-13-2), vorzugsweise in einem Massenanteil von 0,1 bis 0,2 %;
   wobei sich der jeweilige Massenanteil vorzugsweise auf die Masse des Einkomponentenmaterials (1K) bezieht.
**4.** Brandschutzmaterial (B) nach einem der Ansprüche 1 bis 3, dadurch gekennzeichnet, dass das Brandschutzmaterial (B) ferner ein zweites Beschichtungsmaterial (S2) aufweist;
   wobei das zweite Beschichtungsmaterial (S2) auf dem Primer (P) oder auf einem Gemisch aus dem Primer (P) und dem ersten Beschichtungsmaterial (S1) aufgebracht ist;
   wobei das zweite Beschichtungsmaterial (S2) ein erstes Zweikomponentenmaterial (2K1), ein zweites Zweikomponentenmaterial (2K2) und vorzugsweise den Verdünner (V) enthält oder daraus besteht;
   wobei das erste Zweikomponentenmaterial (2K1) vorzugsweise folgende Stoffe enthält:
   Xylol (CAS-Nr. 1330-20-7), vorzugsweise in einem Massenanteil von 1 bis 5 %;
   Ethylbenzol (CAS-Nr. 100-41-4), vorzugsweise in einem Massenanteil von 1 bis 5 %;
   leichte, aromatische Lösungsmittelnaphtha (Erdöl) (CAS-Nr. 64742-95-6), vorzugsweise in einem Massenanteil von 0,5 bis 5 %;
   1,3,3-Trimethyl-N-(2-methylpropyliden)-5-[(2-methylpropyliden)amino]cyclohexanmetylamin (CAS-Nr. 54914-37-3), vorzugsweise in einem Massenanteil von 0,25 bis 0,5 %;
   Dimethylbis[(1-oxoneodecyl)oxy]stannan (CAS-Nr. 68928-76-7), vorzugsweise in einem Massenanteil von 0,1 bis 0,25 %;
   n-Butylacetat (CAS-Nr. 123-86-4), vorzugsweise in einem Massenanteil von 12,5 bis 15 %;
   2-Methoxy-1-methylethylacetat (CAS-Nr. 108-65-6), vorzugsweise in einem Massenanteil von 1 bis 5; und
   Ethyl-3-ethoxypropionat (CAS-Nr. 763-69-9), vorzugsweise in einem Massenanteil von 1 bis 5 %;
   wobei das zweite Zweikomponentenmaterial (2K2) vorzugsweise folgende Stoffe enthält:
   Hexamethylen-1,6-diisocyanat Homopolmyer (CAS-Nr. 28182-81-2), vorzugsweise in einem Massenanteil von wenigstens 40 %;;
   Aromate, Kohlenwasserstoffe, C9 (CAS-Nr. 64742-95-6), vorzugsweise in einem Massenanteil von 25 bis 40 %;
   Hexamethylen-1,6-diisocyanat (CAS Nr. 822-06-0), vorzugsweise in einem Massenanteil von 0,25 bis 0,5 %;
   Dimethylbis[(1-oxoneodecyl)oxy]stannan (CAS-Nr. 68928-76-7), vorzugsweise in einem Massenanteil von 0,1 bis 0,25 %; und
   n-Butylacetat (CAS-Nr. 123-86-4), vorzugsweise in einem Massenanteil von 1 bis 5 %;
   wobei sich der jeweilige Massenanteil der Bestandteile des ersten Zweikomponentenmaterials (2K1) und des zweiten Zweikomponentenmaterials (2K2) vorzugsweise auf die Masse des zweiten Beschichtungsmaterials (S2) bezieht; und
   wobei der Verdünner (V) vorzugsweise den restlichen Massenanteil des zweiten Beschichtungsmaterials (S2) ausmacht.
**5.** Verfahren zur Herstellung eines Brandschutzmaterials (B), vorzugsweise des Brandschutzmaterials (B) nach einem der Ansprüche 1 bis 4, wenigstens mit den Schritten:
   (a) Bereitstellen eines Trägermaterials (T);
   (b) Aufbringen eines ersten Beschichtungsmaterials (S1) auf das Trägermaterial (T);
      wobei das Aufbringen des ersten Beschichtungsmaterials (S1) vorzugsweise durch Tauchen, Rollen oder Spritzen erfolgt; und
      vorzugsweise Abbinden lassen für wenigstens 1 h, vorzugsweise wenigstens 2 h; und
   (c) Aufbringen eines Primers (P) auf das in Schritt (b) erhaltene, beschichtete Trägermaterial (T); und
      vorzugsweise Abbinden lassen für wenigstens 1 h, vorzugsweise wenigstens 2 h;
      wodurch das Brandschutzmaterial (B) erhalten wird;
   wobei der Primer (P) vorzugsweise der Primer (P) nach Anspruch 1 ist;
   wobei das Trägermaterial (T) vorzugsweise das Trägermaterial (T) nach Anspruch 2 ist; und/oder
   wobei das erste Beschichtungsmaterial (S1) vorzugsweise das erste Beschichtungsmaterial (S1) nach Anspruch 3 ist.
**6.** Verfahren nach Anspruch 5, dadurch gekennzeichnet, dass es ferner den Schritt aufweist:
   (d) Aufbringen eines zweiten Beschichtungsmaterials (S2) auf das in Schritt (c) erhaltene Brandschutzmaterial (B); und
   vorzugsweise Abbinden lassen für wenigstens 1 h, vorzugsweise wenigstens 2 h;
   wobei das zweite Beschichtungsmaterial (S2) vorzugsweise das zweite Beschichtungsmaterial (S2) nach Anspruch 4 ist.
**7.** Brandschutzmaterial (B), hergestellt mit dem Verfahren nach einem der Ansprüche 5 oder 6.
**8.** Brandschutzmaterial (B), nach einem der Ansprüche 1 bis 4 oder 7, dadurch gekennzeichnet, dass das Brandschutzmaterial (B) in Gestalt eines Schlauches oder Rohres oder eines Formteils mit wenigstens einer gekrümmten Oberfläche vorliegt; wobei der Innendurchmesser oder Innenkreisdurchmesser des Schlauches oder Rohres oder der gekrümmten Oberfläche vorzugsweise zwischen 5 und 100 mm, weiter vorzugsweise zwischen 10 und 60 mm, insbesondere zwischen 10 und 50 mm, beträgt.
**9.** Verwendung eines Primers (P) in einem Brandschutzmaterial (B) oder bei der Herstellung eines Brandschutzmaterials (B);
   wobei der Primer (P) vorzugsweise der Primer (P) nach Anspruch 1 ist;
   wobei das Brandschutzmaterial (B) vorzugsweise ein Trägermaterial (T) aufweist; wobei der Primer (P) vorzugsweise auf das Trägermaterial (T) aufgebracht wird oder in einer Schicht auf dem Trägermaterial (T) angeordnet ist;
   und/oder
   wobei das Trägermaterial (T) vorzugsweise das Trägermaterial (T) nach Anspruch 2 ist.
**10.** Verwendung nach Anspruch 9, dadurch gekennzeichnet, dass das Brandschutzmaterial (B) ferner ein erstes Beschichtungsmaterial (S1) aufweist;
   wobei das erste Beschichtungsmaterial (S1) vorzugsweise auf dem Trägermaterial (T) aufgebracht wird oder in einer Schicht auf dem Trägermaterial (T) angeordnet ist;
   wobei der Primer (P) vorzugsweise auf das erste Beschichtungsmaterial (S1) aufgebracht wird oder in einer Schicht auf dem ersten Beschichtungsmaterial (S1) angeordnet ist oder ein Gemisch mit dem ersten Beschichtungsmaterial (S1) ausbildet; und/oder
   wobei das erste Beschichtungsmaterial (S1) vorzugsweise das erste Beschichtungsmaterial (S1) nach Anspruch 3 ist.
**11.** Verwendung nach Anspruch 9, dadurch gekennzeichnet, dass das Brandschutzmaterial (B) ferner ein zweites Beschichtungsmaterial (S2) aufweist;
   wobei das zweite Beschichtungsmaterial (S2) vorzugsweise auf den Primer (P) aufgebracht wird oder in einer Schicht auf dem Primer (P) angeordnet ist oder ein Gemisch mit dem Primer (P) ausbildet; und/oder
   wobei das zweite Beschichtungsmaterial (S2) vorzugsweise das zweite Beschichtungsmaterial (S2) nach Anspruch 4 ist.
**12.** Verwendung nach Anspruch 10, dadurch gekennzeichnet, dass das Brandschutzmaterial (B) ferner ein zweites Beschichtungsmaterial (S2) aufweist;
   wobei das zweite Beschichtungsmaterial (S2) vorzugsweise auf den Primer (P) oder auf das Gemisch aus dem Primer (P) und dem ersten Beschichtungsmaterial (S1) aufgebracht wird;
   wobei das zweite Beschichtungsmaterial (S2) vorzugsweise in einer Schicht auf dem Primer (P) oder auf dem Gemisch aus dem Primer (P) und dem ersten Beschichtungsmaterial (S1) angeordnet ist; und/oder
   wobei das zweite Beschichtungsmaterial (S2) vorzugsweise das zweite Beschichtungsmaterial (S2) nach Anspruch 4 ist.

### Ende der Offenbarung zu 1

### Technisches Gebiet der Erfindung

Die vorliegende Erfindung betrifft ein Brandschutzformteil zum Umhüllen eines Kabels oder einer Leitung oder einer Mehrzahl derselben oder eines Konstruktionsteils eines Gebäudes oder einer technischen Anlage, insbesondere einer systemgebundenen Einbaukomponente, nach Anspruch 1, und die Verwendung eines Polygons als Gestalt für einen Querschnitt eines Brandschutzformteils nach Anspruch 11.

Im Rahmen der vorliegenden Erfindung wird unter einem Brandschutzmaterial ein Material verstanden, das geeignet ist, einen damit einlagig (oder mehrlagig) und vollständig umwickelten Gegenstand, wie beispielsweise ein Kabel, eine Leitung oder ein Konstruktionsteil eines Gebäudes, derart zu schützen, dass nach einer 90 oder vorzugsweise 120 minütigen Flammen- oder Hitzeeinwirkung von außen mit einer Temperatur von ca. 1.100 °C die Temperatur innerhalb des vom Brandschutzmaterial umgebenen Raums auf höchstens 180 °C, vorzugsweise höchstens 120 °C, vorzugsweise höchstens 100 °C, insbesondere höchstens 90 °C, ansteigt. Damit können die Bedingungen der DIN-Normen DIN 4102 Teil 11 und/oder DIN 4102 Teil 21 und/oder nach UL 1709/ASTM und/oder nach IEC 60331-21 vom erfindungsgemäßen Brandschutzmaterial erfüllt werden. Dabei erfüllt das erfindungsgemäße Brandschutzmaterial selbst dann die genannten Normen, wenn der mit dem erfindungsgemäßen Brandschutzmaterial zu schützende Gegenstand frei im Raum und nicht in einer Wand oder Decke verlegt oder angeordnet ist, so dass der zu schützende Gegenstand ohne Brandschutzmaßnahmen, wie das Einhüllen in das erfindungsgemäße Brandschutzmaterial, im Brandfall unmittelbar einer Flammeinwirkung ausgesetzt wäre.

Dasselbe wie vorstehend für das erfindungsgemäße Brandschutzmaterial erläutert gilt auch für das erfindungsgemäße Brandschutzformteil, welches ein räumlich ausgestalteter Körper, insbesondere eine Hohlkörper ist, welcher das Brandschutzmaterial wie vorstehend definiert aufweist oder aus einem solchen Brandschutzmaterial besteht.

### Stand der Technik

Bekannte Brandschutzmaterialien und insbesondere Brandschutzformteile weisen üblicherweise rechteckige Querschnittsgestaltungen, z.B. Kabelkanäle, auf. Diese bestehen beispielsweise aus Metallblechen als Grund- oder Trägermaterial, welche mit einem Intumiszensmaterial oder Steinwollplatten oder Calciumsilikat-Platten beschichtet oder ausgekleidet sind. Das Intumiszensmaterial (Brandschutzkomponente) bläht sich bei Hitzeeinwirkung auf, wodurch eine Brandschutzwirkung des mit dem Brandschutzmaterial umhüllten, zu schützenden Gutes sichergestellt wird.

Die herkömmlichen Brandschutzmaterialien und insbesondere herkömmliche Brandschutzformteile haben den Nachteil, dass bei einer vorgegebenen maximalen Schichtdicke des Brandschutzmaterials bzw. des damit hergestellten Brandschutzformteils die Menge an einsetzbarem Beschichtungsmaterial, welche die Brandschutzwirkung unterstützt, in Abhängigkeit von der äußeren Umfangs- bzw. Mantelfläche des Brandschutzformteils begrenzt ist.

Auf der anderen Seite kann die vorgegebene maximale Schichtdicke des Brandschutzmaterials nicht beliebig erhöht werden, um beispielsweise mehr Beschichtungsmaterial aufzubringen, da das eingesetzte Brandschutzmaterial bzw. das dieses aufweisende Brandschutzformteil sonst zu voluminös wird. Hierdurch würde es beim Einbau zu viel Platz einnehmen und/oder es würde sich nicht oder nur schwer in bestehende räumliche Gegebenheiten integrieren lassen.

Ferner besteht bei den aus dem Stand der Technik bekannten Brandschutzformteilen der Nachteil, dass diese bei der konstruktiven Ausgestaltung zum Schutz von beispielsweise Kabeln oder Leitungen über mehrere Meter durch einen Raum gerade bei den üblicherweise für ein Brandschutzmaterial vorgesehenen Trägermaterialien über eine zu geringe Steifigkeit und zu hohes Gewicht verfügen und mit geeigneten Unterkonstruktionen getragen werden müssen. Dies liegt daran, dass die Schichtdicke des Trägermaterials nicht beliebig groß gewählt werden kann, da sonst ein Ausbilden von Brandschutzformteilen, welche Wölbungen und Krümmungen aufweisen, nicht mehr sichergestellt werden kann. Durch eintretende Instabilität wird unter Umständen die Brandschutzwirkung beeinträchtigt.

Werden die beschriebenen Brandschutzmaterialien zum Schutz von beispielsweise Stromkabeln oder Leitungen eingesetzt, besteht zudem die Gefahr, dass sich beim Umwickeln der Kabel oder Leitungen mit den Brandschutzmaterialien oder anderweitigen Biegen der Brandschutzmaterialien Risse in deren Oberfläche ausbilden. Dies kann schließlich dazu führen, dass Feuchtigkeit von außen in die Beschichtung eindringt und das sich bei Hitzeeinwirkung aufblähende Intumiszensmaterial auswaschen oder anderweitig durch die Feuchtigkeitseinwirkung beeinträchtigt werden kann. Folglich neigt dieses Brandschutzmaterial dazu, witterungsbedingt seine Brandschutzeigenschaften einzubüßen.

### Aufgabe der Erfindung

Aufgabe der vorliegenden Erfindung ist es daher, ein verbessertes Brandschutzformteil bereitzustellen. Dabei soll das Brandschutzformteil zum Schutz von Kabeln, Leitungen oder Konstruktionsteilen eines Gebäudes geeignet ist, auch wenn sie frei im Raum und nicht in Wänden oder Decken verlegt bzw. angeordnet sind. Vorzugsweise soll das Brandschutzformteil kompakt und raumsparend ausgebildet sein und im Brandfall eine erhöhte Brandschutzwirkung, insbesondere ein verbessertes Verhältnis von bereitgestellter Masse an brandschützendem Beschichtungsmaterial zum Ausgangsvolumen des Brandschutzformteils, aufweisen. In der weiteren bevorzugten Ausgestaltung soll das Brandschutzformteil zum Ausbilden auch von engen Krümmungen ausreichend biegbar sein, und dennoch eine ausreichende mechanische Steifigkeit aufweisen. Gleichzeitig wird eine hinreichende Brandschutzwirkung angestrebt, welche trotz Alterung in ausreichendem Maße aufrechterhalten bleiben soll.

### Beschreibung der Erfindung

Die Aufgabe wird gelöst durch das Brandschutzformteil nach Anspruch 1. Dabei wird ein Brandschutzformteil zum Umhüllen eines Kabels, einer Leitung oder eines Konstruktionsteils eines Gebäudes, wie beispielsweise eine Säule oder Stütze, beansprucht. Dabei weist das Brandschutzformteil vorzugsweise die Gestalt eines länglichen Hohlkörpers auf. Das Brandschutzformteil weist in der Querschnittsansicht die Gestalt eines Polygons, vorzugsweise eines Sterns, insbesondere eines gleichseitigen Sterns, auf. Das Polygon weist nach innen weisende Ecken und nach außen weisende Ecken auf, wobei die Anzahl der nach innen weisenden Ecken eine natürliche Zahl ≥ (größer oder gleich) 2, vorzugsweise zwischen 2 und 64, vorzugsweise zwischen 2 und 32, insbesondere zwischen 5 und 16, beträgt; und wobei die Anzahl der nach außen weisenden Ecken eine natürliche Zahl ≥ (größer oder gleich) 3, vorzugsweise zwischen 3 und 64, vorzugsweise zwischen 3 und 32, insbesondere zwischen 5 und 16, beträgt. Die Anzahl der nach außen weisenden Ecken ist größer oder gleich der Anzahl der nach innen weisenden Ecken. Das Brandschutzformteil weist ein Brandschutzmaterial auf oder besteht aus einem Brandschutzmaterial.

Mittels des erfindungsgemäßen Brandschutzformteils lässt sich, insbesondere wenn dieses in einer schlauchartigen Gestalt vorliegt, auf einfache Weise ein montagefreundlicher Brandschutz von Kabeln oder Rohrleitungen bewerkstelligen. Die bisherigen kastenförmigen Brandschutzkanäle lassen sich vorteilhaft durch das erfindungsgemäße Brandschutzformteil ersetzen, wobei das erfindungsgemäße Brandschutzformteil aufgrund seiner Biegsamkeit auch einen geringeren Platzbedarf im Vergleich zu den herkömmlichen Brandschutzkanälen aufweist.

Indem das erfindungsgemäße Brandschutzformteil in der Querschnittsansicht die Gestalt eines Polygons aufweist, wird einerseits eine kompakte, raumsparende Gestalt des Brandschutzformteils verwirklicht. Andererseits wird die Steifigkeit und mechanische Stabilität des Brandschutzformteils aufgrund der Polygon-Gestalt des Querschnitts des Brandschutzformteils mit nach innen und nach außen weisenden Ecken ("Zickzack"-Gestalt) gegenüber einer herkömmlichen kreisrunden oder rechteckigen Querschnittsgestalt erheblich verbessert. In einer Faltenbalgausführung des erfindungsgemäßen Brandschutzformteils, bei der die Knickkanten quer zur Längssachse angeordnet sind, ist damit sogar ein formfolgender Streckenschutz möglich.

Darüber hinaus bietet diese Polygon-Gestalt die Möglichkeit, dass das sich unter Hitzeeinwirkung aufblähende Brandschutzmaterial, welches das Brandschutzformteil umfasst oder aus dem es besteht, zu einer kreisrunden oder kreisähnlichen Querschnittsgestalt aufbläht, wobei sich die "Zickzack"-Kontur zu einer mehr oder weniger geraden, der Kreisform annähernden Linie glättet. Hierdurch steigt der Radius des Brandschutzformteils im Brandfall oder bei starker Hitzeeinwirkung (und nur im Brandfall oder bei starker Hitzeeinwirkung an) und die Brandschutzwirkung erhöht sich im Sinne einer verbesserten Isolierung des mit dem Brandschutzformteil umhüllten Gegenstandes gegen die Hitzeeinwirkung von außen. Dabei ist der Radius des Brandschutzformteils nach dem Aufblähen gegenüber der ursprünglichen Polygonstruktur erheblich vergrößert. Dadurch erhöht sich nochmals der Abstand des zu schützenden Gegenstandes im Innern des Brandschutzformteils zur heißen Umgebung.

Des Weiteren hat die "Zickzack"-Kontur den Vorteil, dass die Länge des Umfangs der "Zickzack"-Kontur gegenüber dem Umfang eines Kreises vergrößert ist, selbst wenn der Kreis denselben Radius wie der Umkreis des Polygons hätte. Anders gesagt ist die Umfangsfläche der "Zickzack"-Kontur im Vergleich zu der eines einfachen Kreises erheblich vergrößert, da sich die "Zickzack"-Kontur im Brandfall auf die Gestalt eines größeren Kreises aufblähen kann, ähnlich wie ein Balg einer Ziehharmonika beim Aufziehen. Somit wird die für die Aufnahme eines sich aufblähenden Brandschutzmaterials zur Verfügung stehende Oberfläche auf der Innen- und auf der Außenseite des Brandschutzformteils signifikant vergrößert. Wenn das erfindungsgemäße Brandschutzformteil mit insgesamt mehr Brandschutzmaterial beschichtet werden kann, lässt sich hierdurch konstruktionsbedingt die Brandschutzwirkung erhöhen. Ferner kann mittels der "Zickzack"-Kontur eine bessere Ableitung der Temperatur der auf das Brandschutzformteil von außen einwirkenden Flammen erzielt werden.

So wird beispielsweise im Fall eines herkömmlichen Brandschutzschlauches mit im Wesentlichen kreisförmigem Querschnitt während eines Brandes die auf den Brandschutzschlauch auftreffende Flamme geteilt und umströmt den Brandschutzschlauch ähnlich wie Luft eine Tragfläche während eines Flugzeugfluges. Dabei treffen die beiden Teilströme der Flamme auf der gegenüberliegenden, der Flamme abgewandten Seite des umströmten Brandschutzschlauchs wieder zusammen, ähnlich wie die Teilströme der Luft hinter der Tragfläche. Aufgrund der in diesem Bereich stattfindenden Vereinigung der Flammen ist die Temperatur an dem hierzu benachbarten Teil der Oberfläche des Brandschutzschlauches besonders hoch.

Im Gegensatz dazu bewirkt beim erfindungsgemäßen Brandschutzformteil das Vorhandensein der "Zickzack"-Kontur wie vorstehend beschrieben einerseits eine Verlängerung des Strömungsweges der Flamme (bzw. der Flammen-"Teilströme") um das Brandschutzformteil. Hierdurch sind die beiden Flammen-"Teilströme" beim Zusammentreffen auf der Rückseite des Brandschutzformteils im Vergleich zum herkömmlichen Brandschutzschlauch mit kreisförmigem Querschnitt in ihrer Intensität (Temperatur und Strömungsgeschwindigkeit) abgeschwächt. Andererseits bewirkt das Vorhandensein der "Zickzack"-Kontur eine stärkere Verwirbelung des jeweiligen Flammen-"Teilstroms" beim Umströmen des Brandschutzformteils. Hierdurch wird der jeweilige Teilstrom wegen erhöhter Streuung bzw. Spreizung zusätzlich abgeschwächt, wobei die Temperatur der Flamme insbesondere auf der Rückseite des Brandschutzformteils weiter absinkt. Folglich wird durch die Gestalt des erfindungsgemäßen Brandschutzformteils die Brandschutzwirkung gegenüber herkömmlich verwendeten Querschnittsformen ohne "Zickzack"-Kontur erhöht.

Das erfindungsgemäße Brandschutzformteil ist biegsam, biegbar und/oder in eine Gestalt formbar oder bringbar, welche röhrenförmig oder im Wesentlichen röhrenförmig ist. Das erfindungsgemäße Brandschutzformteil lässt sich zudem einfach montieren und weist eine geringere Eigenmasse im Vergleich zu den herkömmlichen Brandschutzkanälen auf, was Vorteile bei der mechanischen Stabilität unter Hitzeeinwirkung hat.

Das erfindungsgemäße Brandschutzformteil kann, vorzugsweise in schlauchförmiger Gestalt, bei der Verlegung von Kabeln oder Rohrleitungen (Neuinstallation) zum Umhüllen derselben eingesetzt werden. Es kann aber auch zum nachträglichen Schutz bereits bestehender Kabel, Rohrleitungen oder Kabelkanälen oder dergleichen verwendet werden. Diese Möglichkeit bestand bei den bisher eingesetzten Brandschutzkanälen aufgrund deren Platzbedarf oder Montagebeschränkungen zumeist nicht. Dabei kann das zu schützende Gut im montierten Zustand mit einem flächigen Abschnitt des Brandschutzformteils überlappend umhüllt werden. Idealerweise beträgt die Überlappung, auch Überschlag genannt, wenigstens 10 cm, um einen einwandfreien Brandschutz sicherzustellen. Wenn bei der überlappenden Anordnung des Brandschutzformteils im Bereich der Überlappung die nach innen weisende Ecke der äußeren Schicht auf die nach innen weisende Ecke der inneren Schicht angeordnet wird und entsprechend die nach außen weisende Ecke der äußeren Schicht auf die nach außen weisende Ecke der inneren Schicht angeordnet wird, trägt die "Zickzack"-Gestalt im Brandfall oder bei Krafteinwirkung von außen ähnlich wie eine Verkantung von Formteilen oder ein Formschluss zur weiteren mechanischen Stabilisierung des Brandschutzformteils bei. Das Brandschutzformteil kann dann vorzugsweise mechanisch, bspw. mittels eines verzinkten Bindedrahts oder Spannschellen, befestigt werden. Damit bietet die sternförmige Ausbildung der Kontur des erfindungsgemäßen Brandschutzformteils einen einfachen, aber gut gesicherten Verschluss der Konstruktion.

Ein weiterer Vorteil des erfindungsgemäßen Brandschutzformteils ist, dass aufgrund der vorstehend beschriebenen "Zickzack"-Gestalt der Kontur des Brandschutzformteils der mit dem Brandschutzformteil umhüllte Gegenstand auch ohne weitere konstruktive Hilfsmittel wie Haltevorrichtungen oder dergleichen, zwangsweise in allen Richtungen in einem vorbestimmten Mindestabstand zur Umgebung des Brandschutzformteils gehalten wird. Im Gegensatz dazu liegt das zu schützende Kabel bei einem herkömmlichen Brandschutzkanal im Querschnitt gesehen schwerkraftbedingt auf dem tiefsten Punkt des Brandschutzkanales auf. Damit trennt das zu schützende Kabel nur die Dicke des Brandschutzkanales von der Umgebung. Dagegen beträgt der Abstand des zu schützenden Kabels zur Umgebung die Dicke des Brandschutzschlauches plus die Differenz der Radien von Inkreis, auf dem die nach innen weisenden Ecken angeordnet sind, und Umkreis, auf dem die nach außen weisenden Ecken angeordnet sind. Diese Differenz kann je nach gewählter Geometrie ein Mehrfaches der Dicke des Brandschutzformteils betragen.

Wenn die Anzahl der nach innen weisenden Ecken 3 oder größer ist, ist die mechanische Stabilität des erfindungsgemäßen Brandschutzformteils besonders groß.

Vorteilhafte Ausführungsformen des erfindungsgemäßen Brandschutzformteils sind Gegenstand der abhängigen Ansprüche.

So kann das Polygon wenigstens einen Inkreis und wenigstens einen Umkreis aufweisen. Dabei sind die nach innen weisenden Ecken auf dem Inkreis oder auf einer Mehrzahl von Innenkreisen angeordnet. Ferner sind die nach außen weisenden Ecken auf dem Umkreis oder auf einer Mehrzahl von Umkreisen angeordnet sind.

Wenn das Polygon im vorstehend erläuterten Sinne eine Gestalt mit einem einzigen Inkreis und einem Umkreis aufweist, ist die Kammhöhe, also der Betrag der Differenz der Radien von Inkreis und Umkreis, für alle Ecken dieselbe. Hierdurch wird die Montage des Brandschutzformteils insbesondere beim Vorsehen eines Überschlags bzw. einer Überlappung erleichtert.

Der Betrag der Differenz der Radien von Inkreis und Umkreis, also die Kammhöhe, liegt vorzugsweise zwischen 5 und 50 mm, vorzugsweise zwischen 8 und 25 mm, insbesondere zwischen 10 und 20 mm. Wird eine kleine Kammhöhe gewählt, wird im Brandfall vorteilhaft eine besonders homogene Temperaturverteilung auf der Oberfläche des Brandschutzformteils erzielt. Wird dagegen eine große Kammhöhe gewählt, insbesondere oberhalb des vorstehend angegebenen, bevorzugten Bereichs, wird im Brandfall eine eher inhomogene Temperaturverteilung auf der Oberfläche des Brandschutzformteils mit erhöhten Temperaturen im Bereich der Ecken erzielt.

Wenn das Polygon im vorstehend erläuterten Sinne eine Gestalt mit einer Mehrzahl von Innenkreisen und/oder Umkreisen aufweist, wird die Gestaltungsbreite für das erfindungsgemäße Brandschutzformteil erheblich erweitert.

Ferner kann der Betrag der Differenz des Radius' des äußersten Umkreises und des Radius' des innersten Inkreises, d.h., die maximale Kammhöhe, zwischen 5 und 50 mm, vorzugsweise zwischen 8 und 25 mm, insbesondere zwischen 10 und 20 mm, betragen.

Nach der Erkenntnis des Erfinders erlaubt eine Einstellung des Differenzbetrags wie vorstehend definiert, den Abstand von zu schützendem Gegenstand und Umgebung einstellen zu können. Hierdurch können die Brandschutzeigenschaften, insbesondere die Feuerwiderstandsdauer bzw. die Isolierwirkung, des erfindungsgemäßen Brandschutzformteils bedarfsgerecht eingestellt werden.

Der Betrag der Differenz des Radius' des äußersten Umkreises und des Radius' des innersten Inkreises, d.h., die maximale Kammhöhe, kann zwischen 5 und 25 mm, vorzugsweise zwischen 10 und 20 mm, betragen. Wenn die maximale Kammhöhe 5 mm unterschreitet, ist die Kontur des Brandschutzformteils gewissermaßen zu flach, so dass möglicherweise keine ausreichende Menge an Brandschutzmaterial bzw. Beschichtungsmaterial aufgebracht werden kann. Überschreitet die maximale Kammhöhe 25 mm, dann ist die Gefahr des Reißens des Trägermaterials an der Kante (nach außen weisende Ecke in der Querschnittsansicht) erhöht. Besonders bevorzugt ist der Bereich von 10 bis 20 mm, insbesondere 15 mm, da hierbei eine ausreichend große Fläche zur Aufnahme des Brandschutzmaterials bzw. Beschichtungsmaterials gegeben ist und gleichzeitig eine hohe mechanische Stabilität sichergestellt wird.

Zudem oder alternativ kann der Radius des äußersten Umkreises zwischen 9 und 200 mm, vorzugsweise 15 bis 150 mm, betragen.

Zudem oder alternativ kann der Radius des innersten Inkreises zwischen 5 und 100 mm, weiter vorzugsweise zwischen 10 und 60 mm, insbesondere zwischen 10 und 50 mm, betragen.

Mit der Einstellung des Radius des äußersten Umkreises und/oder des Radius des innersten Inkreises auf die angegebenen Bereiche gelingt es, die äußere Umfangsfläche des erfindungsgemäßen Brandschutzformteils gezielt einzustellen. So kann bei der Einstellung der äußeren Umfangsfläche beispielsweise berücksichtigt werden, welche Umfangsfläche nötig ist, um beispielsweise die zur Erzielung einer vorgegebenen Brandschutzwirkung erforderliche Masse an Brandschutzbeschichtungsmaterial auf das Brandschutzformteil aufbringen zu können, ohne eine maximale Schichtdicke des Brandschutzformteils zu überschreiten.

Des Weiteren kann das Brandschutzmaterial ein Trägermaterial aufweisen. Das enthält das Trägermaterial ein Fibersilikat, vorzugsweise ein Calciumsilikat und/oder ein Siliziumsilikat, oder das Trägermaterial besteht aus einem von diesen oder einer beliebigen Mischung derselben.

Zudem oder alternativ kann das Trägermaterial eine mittlere Schichtdicke im Bereich von 0,5 bis 4 mm, vorzugsweise 1,5 bis 2 mm, aufweisen. Dabei ist es vorzugsweise möglich, dass die Schichtdicke an einer beliebigen Stelle des Trägermaterials um höchstens 20 %, vorzugsweise um höchstens 10 %, insbesondere um höchstens 5 %, von der mittleren Schichtdicke des Trägermaterials (T) abweicht.

Zudem oder alternativ kann das Trägermaterial als ein geflochtener Garn, ein Gewebe, ein geflochtener Zopf oder eine Gitterstruktur ausgebildet sein.

Fibersilikat ist ein hochtemperaturbeständiges Material, das sich insbesondere als Flechtwerk oder Garn durch eine geringe Dichte und damit eine geringe massenbezogene Belastung des zu schützenden Gutes auszeichnet. Alternativ ist auch der Einsatz eines Basaltgewebes als das Trägermaterial denkbar.

Überschreitet die mittlere Schichtdicke des Trägermaterials den Wert von 4 mm, wird das Brandschutzformteil zu steif und lässt sich nicht mehr um den zu schützenden Gegenstand wickeln. Unterschreitet die mittlere Schichtdicke des Trägermaterials den Wert von 0,5 mm, ist/sind die Isolierwirkung des Trägermaterials und/oder die mechanische Stabilität möglicherweise unzureichend.

Das Brandschutzmaterial kann ein erstes Beschichtungsmaterial aufweisen, wobei das erste Beschichtungsmaterial auf dem Trägermaterial aufgebracht oder in dem Trägermaterial enthalten ist.

Das erste Beschichtungsmaterial kann ein- oder beidseitig auf dem Trägermaterial aufgetragen sein, wobei eine einseitige Auftragung bevorzugt ist. Das erste Beschichtungsmaterial kann auf der inneren und/oder auf der äußeren Umfangsfläche bzw. Mantelfläche des Brandschutzformteils aufgetragen sein, vorzugsweise auf der inneren Umfangsfläche des Brandschutzformteils.

Das Brandschutzmaterial kann ferner einen Primer aufweisen, wobei der Primer vorzugsweise eine Grundierung, einen Härter und einen Verdünner enthält oder daraus besteht. Dabei enthält die Grundierung:
Xylol (CAS-Nr. 1330-20-7), vorzugsweise in einem Massenanteil von 12,5 bis 20 %;
Kohlenwasserstoffe, C9, Aromate (CAS-Nr. 64742-95-6), vorzugsweise in einem Massenanteil von 5 bis 12,5 %;
Reaktionsprodukt: Bisphenol-A-Epichlorhydrinharze mit durchschnittlichem Molekulargewicht 700 bis 1100 (CAS-Nr. 25068-38-6), vorzugsweise in einem Massenanteil von 5 bis 12,5 %;
Butan-l-ol (CAS-Nr. 71-36-3), vorzugsweise in einem Massenanteil von 5 bis 10 %;
Trizinkbis(orthophosphat) (CAS-Nr. 7779-90-0), vorzugsweise in einem Massenanteil von 5 bis 12,5 %;
Ethylbenzol (CAS-Nr. 100-41-4), vorzugsweise in einem Massenanteil von 1 bis 5 %;
4-Hydroxy-4-methyl-pentan-2-on (CAS-Nr. 123-42-2), vorzugsweise in einem Massenanteil von 1 bis 5 %;
Lösungsmittelnaphtha (Erdöl), leicht aromatisiert (CAS-Nr. 64742-95-6), vorzugsweise in einem Massenanteil von 0,1 bis 0,25 %; und
Siliciumdioxid (CAS-Nr. 7631-86-9), vorzugsweise in einem Massenanteil von 1 bis 5 %.

Dabei enthält der Härter:
Hexamethylen-1,6-diisocyanat, Homopolymer (CAS-Nr. 28182-81-2), vorzugsweise in einem Massenanteil von wenigstens 40 %;
Kohlenwasserstoffe, C9, Aromate (CAS-Nr. 64742-95-6), vorzugsweise in einem Massenanteil von 25 bis 40 %;
Hexamethylen-1,6-diisocyanat (CAS-Nr. 822-06-0), vorzugsweise in einem Massenanteil von 0,25 bis 0,5 %;
Dimethylbis[(1-oxoneodecyl)oxy]stannan (CAS-Nr. 68928-76-7), vorzugsweise in einem Massenanteil von 0,1 bis 0,25 %; und
n-Butylacetat (CAS-Nr. 123-86-4), vorzugsweise in einem Massenanteil von 1 bis 5 %.

Dabei enthält der Verdünner:
Xylol (CAS-Nr. 1330-20-7), vorzugsweise in einem Massenanteil von wenigstens 40 %;
Butan-l-ol (CAS-Nr. 71-36-3), vorzugsweise in einem Massenanteil von 20 bis 25 %;
Ethylbenzol (CAS-Nr. 100-41-4), vorzugsweise in einem Massenanteil von 12,5 bis 20 %; und
n-Butylacetat (CAS-Nr. 123-86-4), vorzugsweise in einem Massenanteil von 20 bis 25 %.

Der jeweilige Massenanteil der Bestandteile der Grundierung, des Härters und des Verdünners beziehen sich vorzugsweise auf die Masse des Primers. Das Massenverhältnis der Grundierung zum Härter beträgt vorzugsweise 4 bis 6, vorzugsweise 5, zu 1.

Der Erfinder hat überraschend festgestellt, dass durch das Vorhandensein eines Primers eine gute Haftung des ersten Beschichtungsmaterials auf dem Trägermaterial erzielt wird.

Ferner ist beobachtet worden, dass selbst nach dem Aufbringen des Primers auf das erste Beschichtungsmaterial, das sich bereits auf dem Trägermaterial befindet, eine gute Haftung des ersten Beschichtungsmaterials auf dem Trägermaterial erzielbar ist. Dies liegt vermutlich daran, dass der Primer von außen durch das erste Beschichtungsmaterial diffundiert und seine Haftwirkung zwischen dem ersten Beschichtungsmaterial und dem Trägermaterial entfaltet.

Das erste Beschichtungsmaterial bläht sich bei Hitzeeinwirkung auf bzw. schäumt auf und entfaltet auf diese Weise eine Hitzeschutzwirkung. Eine Beeinträchtigung der Hitzeschutzwirkung des ersten Beschichtungsmaterials durch den Primer findet dabei nicht statt. Überraschenderweise bewirkt der Primer mit der erfindungsgemäßen Zusammensetzung keine oder keine relevante chemische Veränderung des ersten Beschichtungsmaterials. So bewirkt der erfindungsgemäße Primer im Gegensatz zu anderen Primern keine oder keine nennenswerte Zunahme der Steifigkeit des ersten Beschichtungsmaterials, wobei das Biegen des Brandschutzmaterials erschwert würde.

Zudem vermeidet das Vorhandensein des Primers die Entstehung von Rissen im ersten Beschichtungsmaterial oder vermindert die Bildung von Rissen erheblich, wenn das Brandschutzmaterial zum erfindungsgemäßen Brandschutzformteil, d.h., zu einer Hülle mit Polygongestalt für Kabel oder Leitungen gebogen oder gekrümmt wird. Hierdurch wird ein Eindringen von Feuchtigkeit mit den erwähnten negativen Folgen vermieden oder zumindest vermindert. Folglich behält das Brandschutzformteil bei seinem Einsatz als Umhüllung eines Kabels oder einer Leitung auch bei Feuchtigkeitseinfluss seine Brandschutzeigenschaften. Damit ist das erfindungsgemäße Brandschutzformteil bei Einsatz im Außenbereich witterungsbeständig und bei Einsatz im Innenbereich unempfindlich gegenüber z.B. Löschmaterial, wie Wasser aus einer Sprinkleranlage.

In einer weiteren Ausführungsform kann das erste Beschichtungsmaterial ein Einkomponentenmaterial enthalten oder daraus bestehen. Dabei enthält das Einkomponentenmaterial (1K) vorzugsweise folgende Stoffe:
Triphenylphosphat (CAS-Nr. 115-86-6), vorzugsweise in einem Massenanteil von < 1 %;
Nonylphenolethoxylat (CAS-Nr. 9016-45-9), vorzugsweise in einem Massenanteil von < 1 %;
Ammoniumhydroxid (CAS-Nr. 1336-21-6), vorzugsweise in einem Massenanteil von < 1 %;
Pyrithionzink (CAS-Nr. 13463-41-7), vorzugsweise in einem Massenanteil von 0,1 bis 0,2 %;
Terbutryn (CAS-Nr. 886-50-0), vorzugsweise in einem Massenanteil von 0,1 bis 0,2 %; und
Zinkoxid (CAS-Nr. 1314-13-2), vorzugsweise in einem Massenanteil von 0,1 bis 0,2 %;
wobei sich der jeweilige Massenanteil vorzugsweise auf die Masse des Einkomponentenmaterials (1K) bezieht.

In einer weiteren Ausführungsform kann das Brandschutzformteil ferner ein zweites Beschichtungsmaterial aufweisen. Das zweite Beschichtungsmaterial kann auf dem Primer oder auf einem Gemisch aus dem Primer und dem ersten Beschichtungsmaterial aufgebracht sein. Dabei kann das zweite Beschichtungsmaterial ein erstes Zweikomponentenmaterial, ein zweites Zweikomponentenmaterial und vorzugsweise den Verdünner enthalten oder daraus bestehen.

Das erste Zweikomponentenmaterial enthält vorzugsweise folgende Stoffe:
Xylol (CAS-Nr. 1330-20-7), vorzugsweise in einem Massenanteil von 1 bis 5 %;
Ethylbenzol (CAS-Nr. 100-41-4), vorzugsweise in einem Massenanteil von 1 bis 5 %;
leichte, aromatische Lösungsmittelnaphtha (Erdöl) (CAS-Nr. 64742-95-6), vorzugsweise in einem Massenanteil von 0,5 bis 5 %;
1,3,3-Trimethyl-N-(2-methylpropyliden)-5-[(2-methylpropyliden)amino]cyclohexanmetylamin (CAS-Nr. 54914-37-3), vorzugsweise in einem Massenanteil von 0,25 bis 0,5 %;
Dimethylbis[(1-oxoneodecyl)oxy]stannan (CAS-Nr. 68928-76-7), vorzugsweise in einem Massenanteil von 0,1 bis 0,25 %;
n-Butylacetat (CAS-Nr. 123-86-4), vorzugsweise in einem Massenanteil von 12,5 bis 15 %;
2-Methoxy-1-methylethylacetat (CAS-Nr. 108-65-6), vorzugsweise in einem Massenanteil von 1 bis 5; und
Ethyl-3-ethoxypropionat (CAS-Nr. 763-69-9), vorzugsweise in einem Massenanteil von 1 bis 5 %.

Das zweite Zweikomponentenmaterial enthält vorzugsweise folgende Stoffe:
Hexamethylen-1,6-diisocyanat Homopolmyer (CAS-Nr. 28182-81-2), vorzugsweise in einem Massenanteil von wenigstens 40 %;
Aromate, Kohlenwasserstoffe, C9 (CAS-Nr. 64742-95-6), vorzugsweise in einem Massenanteil von 25 bis 40 %;
Hexamethylen-1,6-diisocyanat (CAS Nr. 822-06-0), vorzugsweise in einem Massenanteil von 0,25 bis 0,5 %;
Dimethylbis[(1-oxoneodecyl)oxy]stannan (CAS-Nr. 68928-76-7), vorzugsweise in einem Massenanteil von 0,1 bis 0,25 %; und
n-Butylacetat (CAS-Nr. 123-86-4), vorzugsweise in einem Massenanteil von 1 bis 5 %.

Der jeweilige Massenanteil der Bestandteile des ersten Zweikomponentenmaterials und des zweiten Zweikomponentenmaterials bezieht sich dabei vorzugsweise auf die Masse des zweiten Beschichtungsmaterials. Der Verdünner macht vorzugsweise den restlichen Massenanteil des zweiten Beschichtungsmaterials aus.

Das Vorhandensein des zweiten Beschichtungsmaterials hat den Vorteil, dass das Aufblähen bzw. Aufschäumen des ersten Beschichtungsmaterials beschleunigt wird, sodass die Brandschutzwirkung des ersten Beschichtungsmaterials schneller hergestellt wird. Weiter stellt das zweite Beschichtungsmaterial vorteilhaft eine Schutzschicht für das erste Beschichtungsmaterial dar, beispielsweise gegen mechanische Verletzungen von außen.

Der erfindungsgemäß vorgeschlagene Primer ist zudem chemisch kompatibel mit dem zweiten Beschichtungsmaterial, so dass auch das zweite Beschichtungsmaterial in seinen chemischen Eigenschaften nicht oder nicht nennenswert beeinträchtigt oder verändert wird. Vielmehr bewirkt der Primer eine Verbesserung der Haftung des zweiten Beschichtungsmaterials auf dem ersten Beschichtungsmaterial, so dass die mechanische Stabilität des Brandschutzmaterials insgesamt verbessert wird.

In einer bevorzugten Ausführungsform des Brandschutzformteils kann das erste Beschichtungsmaterial eine mittlere Schichtdicke im Bereich von 0,5 bis 4 mm, vorzugsweise 1,5 bis 2 mm, aufweisen. Dabei kann die Schichtdicke des ersten Beschichtungsmaterials an einer beliebigen Stelle vorzugsweise um höchstens 20 %, vorzugsweise um höchstens 10 %, insbesondere um höchstens 5 %, von der mittleren Schichtdicke des erstes Beschichtungsmaterials abweichen.

Ist die mittlere Schichtdicke des ersten Beschichtungsmaterials zu gering, kann kein ausreichender Brandschutz sichergestellt werden. Ist die mittlere Schichtdicke zu groß, kann die Brandschutzwirkung nicht weiter verbessert werden und Beschichtungsmaterial wird verschwendet. Für das erste Beschichtungsmaterial ist eine mittlere Schichtdicke im Bereich von 1,5 bis 2 mm optimal, da hiermit eine hohe Isolierwirkung bei verhältnismäßig geringem Materialeinsatz erzielt werden kann.

In einer bevorzugten Ausführungsform des Brandschutzformteils kann das zweite Beschichtungsmaterial eine mittlere Schichtdicke im Bereich von 0,5 bis 4 mm vorzugsweise 1,5 bis 2 mm, aufweisen. Alternativ kann das erste Beschichtungsmaterial und das zweite Beschichtungsmaterial zusammen eine mittlere Schichtdicke im Bereich von 1 bis 4 mm aufweisen. Vorzugsweise kann dabei die Schichtdicke des zweiten Beschichtungsmaterials an einer beliebigen Stelle um höchstens 20 %, vorzugsweise um höchstens 10 %, insbesondere um höchstens 5 %, von der mittleren Schichtdicke des zweiten Beschichtungsmaterials abweichen. Oder es kann die Schichtdicke der Kombination aus dem ersten Beschichtungsmaterial und dem zweiten Beschichtungsmaterial an einer beliebigen Stelle um höchstens 20 %, vorzugsweise um höchstens 10 %, insbesondere um höchstens 5 %, von der mittleren Schichtdicke der Kombination aus dem ersten Beschichtungsmaterial und dem zweiten Beschichtungsmaterial abweichen.

Ist die mittlere Schichtdicke des zweiten Beschichtungsmaterials zu gering, kann kein ausreichender Brandschutz sichergestellt werden. Ist die mittlere Schichtdicke zu groß, kann die Brandschutzwirkung nicht weiter verbessert werden und Beschichtungsmaterial wird verschwendet. Für das zweite Beschichtungsmaterial ist eine mittlere Schichtdicke im Bereich von 1,5 bis 2 mm optimal, da hiermit eine hohe Isolierwirkung bei verhältnismäßig geringem Materialeinsatz erzielt werden kann.

Das erfindungsgemäße Brandschutzformteil kann bevorzugt durch das nachfolgend beschriebene Verfahren hergestellt werden, wobei das Verfahren wenigstens die Schritte aufweist:
(a) Bereitstellen eines Trägermaterials;
(b) Aufbringen eines ersten Beschichtungsmaterials auf das Trägermaterial;
   wobei das Aufbringen des ersten Beschichtungsmaterials vorzugsweise durch Tauchen, Rollen oder Spritzen erfolgt; und
   vorzugsweise Abbinden lassen für wenigstens 1 Stunde (1 h), vorzugsweise wenigstens 2 Stunden; und
(c) Aufbringen eines Primers auf das in Schritt (b) erhaltene, beschichtete Trägermaterial; und
   vorzugsweise Abbinden lassen für wenigstens 1 Stunde, vorzugsweise wenigstens 2 Stunden;
   wodurch das Brandschutzmaterial erhalten wird; und
(d) Formen des in Schritt (c) erhaltenen Brandschutzmaterials derart, dass dieses die Gestalt eines länglichen Hohlkörpers aufweist, wobei das Brandschutzmaterial in der Querschnittsansicht die Gestalt eines Polygons, vorzugsweise eines Sterns, insbesondere eines gleichseitigen Sterns, aufweist. Dabei weist das Polygon nach innen weisende Ecken und nach außen weisende Ecken auf, wobei die Anzahl der nach innen weisenden Ecken eine natürliche Zahl ≥ 2, vorzugsweise zwischen 2 und 64, beträgt; wobei die Anzahl der nach außen weisenden Ecken eine natürliche Zahl ≥ 3, vorzugsweise zwischen 3 und 64, beträgt; und wobei die Anzahl der nach außen weisenden Ecken größer oder gleich der Anzahl der nach innen weisenden Ecken ist;
   wodurch das Brandschutzformteil erhalten wird.

Dabei ist der Primer vorzugsweise der in Anspruch 5 definierte Primer. Das Trägermaterial ist vorzugsweise das in Anspruch 2 definierte Trägermaterial. Zudem ist das erste Beschichtungsmaterial vorzugsweise das in wenigstens einem der Ansprüche 5, 6 oder 8 definierte, erste Beschichtungsmaterial.

Das erfindungsgemäße Verfahren zeichnet sich durch eine einfache Handhabung und eine hohe Flexibilität aus.

In einer weiteren Ausführungsform kann das Verfahren vor dem Schritt (d) ferner den Schritt aufweisen:
(e) Aufbringen eines zweiten Beschichtungsmaterials auf das in Schritt (c) erhaltene Brandschutzmaterial; und
vorzugsweise Abbinden lassen für wenigstens 1 Stunde, vorzugsweise wenigstens 2 Stunden.

Falls im erfindungsgemäßen Verfahren der vorstehend beschriebene Schritt (e) durchgeführt wird, lautet der Schritt (d) des vorstehend beschriebenen Verfahrens entsprechend:
(d) Formen des in Schritt (e) erhaltenen Brandschutzmaterials derart, dass dieses die Gestalt eines länglichen Hohlkörpers aufweist, wobei das Brandschutzmaterial in der Querschnittsansicht die Gestalt eines Polygons, vorzugsweise eines Sterns, insbesondere eines gleichseitigen Sterns, aufweist. Dabei weist das Polygon nach innen weisende Ecken und nach außen weisende Ecken auf, wobei die Anzahl der nach innen weisenden Ecken eine natürliche Zahl ≥ 2, vorzugsweise zwischen 2 und 64, beträgt; wobei die Anzahl der nach außen weisenden Ecken eine natürliche Zahl ≥ 3, vorzugsweise zwischen 3 und 64, beträgt; und wobei die Anzahl der nach außen weisenden Ecken größer oder gleich der Anzahl der nach innen weisenden Ecken ist;
wodurch das Brandschutzformteil erhalten wird.

Dabei ist das zweite Beschichtungsmaterial vorzugsweise das in wenigstens einem der Ansprüche 7 oder 9 definierte, zweite Beschichtungsmaterial.

Das erfindungsgemäße Brandschutzformteil eignet sich insbesondere zum Schutz von Kabeln und Leitungen, also zum Umhüllen von rohrförmigen Gegenständen mit einem verhältnismäßig kleinen Durchmesser, insbesondere im Bereich von 10 bis 50 mm. Bei derartigen Umhüllungen ist das Brandschutzformteil insbesondere geeignet, auch Krümmungen mit kleinen Radien ausbilden. Dabei wird die Rissbildung insoweit unterdrückt, dass die Brandschutzwirkung des erfindungsgemäßen Brandschutzmaterials auch bei äußerem Einfluss von Feuchtigkeit, wie z.B. Niederschlag im Freien oder Beaufschlagung mit Spritzwasser in geschlossenen Räumen, aufrechterhalten wird.

In einer vorteilhaften Ausführungsform kann das erste Beschichtungsmaterial ein Einkomponentenmaterial enthalten oder daraus bestehen. Dabei enthält das Einkomponentenmaterial vorzugsweise folgende Stoffe:
Triphenylphosphat (CAS-Nr. 115-86-6), vorzugsweise in einem Massenanteil von < 1 %;
Nonylphenolethoxylat (CAS-Nr. 9016-45-9), vorzugsweise in einem Massenanteil von < 1 %;
Ammoniumhydroxid (CAS-Nr. 1336-21-6), vorzugsweise in einem Massenanteil von < 1 %;
Pyrithionzink (CAS-Nr. 13463-41-7), vorzugsweise in einem Massenanteil von 0,1 bis 0,2 %;
Terbutryn (CAS-Nr. 886-50-0), vorzugsweise in einem Massenanteil von 0,1 bis 0,2 %; und
Zinkoxid (CAS-Nr. 1314-13-2), vorzugsweise in einem Massenanteil von 0,1 bis 0,2 %.

Dabei kann sich der jeweilige Massenanteil vorzugsweise auf die Masse des Einkomponentenmaterials beziehen.

Wenn das erste Beschichtungsmaterial das Einkomponentenmaterial wie vorstehend beschrieben enthält oder daraus besteht, zeichnet es sich durch gute Aufbläh- bzw. Aufschäumeigenschaften und damit durch eine gute Brandschutzwirkung aus.

Erfindungsgemäß kann eine optimale Anzahl der nach außen weisenden Ecken auch dadurch bestimmt werden, dass ein von den Schenkeln der jeweiligen, nach außen weisenden Ecke eingeschlossener Winkel α (Innenwinkel) innerhalb eines vorbestimmten Bereichs liegt. So kann der von den Schenkeln wenigstens einer, vorzugsweise aller, nach außen weisenden Ecke eingeschlossene Winkel α zwischen 10 und 60 °, vorzugsweise 20 bis 40 °, betragen. Ist der Winkel α zu klein, besteht die Gefahr, dass das Brandschutzformteil oder seine Beschichtung an der Kante (nach außen weisende Ecke in der Querschnittsansicht) reißt oder neigt eher dort zu Beschädigungen oder Störung der Funktion. Ist der Winkel α zu groß, ist die mechanische Stabilität des Brandschutzformteils zu gering und die Menge des aufbringbaren Brandschutzmaterials oder Beschichtungsmaterials ist zu gering.

Die erfindungsgemäße Aufgabe wird ferner durch die Verwendung nach Anspruch 11 gelöst. Dabei wird die Verwendung eines Polygons, vorzugsweise eines Sterns, insbesondere eines gleichseitigen Sterns, als Gestalt für einen Querschnitt eines Brandschutzformteils vorgeschlagen. Dabei weist das Polygon nach innen weisende Ecken und nach außen weisende Ecken auf. Die Anzahl der nach innen weisenden Ecken ist eine natürliche Zahl ≥ 2, vorzugsweise zwischen 2 und 32. Die Anzahl der nach außen weisenden Ecken ist eine natürliche Zahl ≥ 3, vorzugsweise zwischen 3 und 32. Die Anzahl der nach außen weisenden Ecken ist größer oder gleich der Anzahl der nach innen weisenden Ecken.

Gemäß einer bevorzugten Ausführungsform der erfindungsgemäßen Verwendung kann das Brandschutzformteil ein Brandschutzformteil nach einem der Ansprüche 1 bis 10 sein.

Dabei gelten die in Zusammenhang mit dem erfindungsgemäßen Brandschutzformteil offenbarten Vorteile für die erfindungsgemäße Verwendung analog.

### Weitere Offenbarung der Erfindung

Erfindungsgemäß kann die Grundierung G des Primers P insbesondere die Grundierung mit der Bezeichnung "Seevenax Grundierung 113-74" (Fa. Mankiewicz Gebr. & Co., Hamburg), der Härter H der Härter mit der Bezeichnung "Seevenax 115-74" (Fa. Mankiewicz Gebr. & Co., Hamburg) und der Verdünner V ein Verdünner der Bezeichnung "Verdünner 903-76" (Fa. Mankiewicz Gebr. & Co., Hamburg) sein.

Erfindungsgemäß kann das erste Beschichtungsmaterial S1 das Einkomponentenmaterial 1K mit folgender Zusammensetzung enthalten:
Triphenylphosphat (CAS-Nr. 115-86-6), Massenanteil von < 1 %;
Nonylphenolethoxylat (CAS-Nr. 9016-45-9), Massenanteil von < 1 %;
Ammoniumhydroxid (CAS-Nr. 1336-21-6), Massenanteil von < 1 %;
Pyrithionzink (CAS-Nr. 13463-41-7), Massenanteil von 0,1 bis 0,2 %;
Terbutryn (CAS-Nr. 886-50-0), Massenanteil von 0,1 bis 0,2 %; und
Zinkoxid (CAS-Nr. 1314-13-2), Massenanteil von 0,1 bis 0,2 %;
wobei sich der jeweilige Massenanteil auf die Masse des Einkomponentenmaterials 1K bezieht.

Erfindungsgemäß kann das zweite Beschichtungsmaterial S2 als erstes Zweikomponentenmaterial 2K1 einen Decklack der Bezeichnung "ALEXIT-Decklack 467-76 383N feuerrot 3000 matt" (Fa. Mankiewicz Gebr. & Co., Hamburg) enthalten. Ferner kann das zweite Beschichtungsmaterial S2 als zweites Zweikomponentenmaterial 2K2 einen Härter der Bezeichnung "ALEXIT-Härter / Hardener 405-74" (Fa. Mankiewicz Gebr. & Co., Hamburg) enthalten.

Der erfindungsgemäße Primer, insbesondere die Grundierung, der Härter und der Verdünner, das erste Beschichtungsmaterial, insbesondere das Einkomponentenmaterial, das zweite Beschichtungsmaterial, insbesondere das erste Zweikomponentenmaterial und das zweite Zweikomponentenmaterial, können weitere, übliche und dem Fachmann bekannte Stoffe sowie technische unvermeidbare Verunreinigungen enthalten, so dass die Summe der Inhaltsstoffe des jeweils betrachteten Materials 100 % beträgt.

Bevorzugte Ausführungsformen des erfindungsgemäßen Brandschutzformteils sind Gegenstand der Zeichnung.
- Fig. 1: ist eine schematische Querschnittsansicht einer ersten Ausführungsform des erfindungsgemäßen Brandschutzformteils;
- Fig. 2: ist eine schematische Querschnittsansicht einer zweiten Ausführungsform des erfindungsgemäßen Brandschutzformteils;
- Fig. 3: ist eine schematische Darstellung eines Inkreises und eines Umkreises der ersten Ausführungsform des erfindungsgemäßen Brandschutzformteils;
- Fig. 4: ist eine schematische Querschnittsteilansicht einer dritten Ausführungsform des erfindungsgemäßen Brandschutzformteils;
- Fig. 5: ist eine schematische Darstellung einer Mehrzahl von Inkreisen und einer Mehrzahl von Umkreisen der dritten Ausführungsform des erfindungsgemäßen Brandschutzformteils;
- Fig. 6: ist eine schematische Ansicht eines Zustandes des erfindungsgemäßen Brandschutzformteils vor und nach einer Brand- oder Hitzeeinwirkung; und
- Fig. 7: (Fig. 7a bis 7g) ist eine Darstellung einer Auswahl an Ausgestaltungen der Kontur exemplarischer Ausführungsformen des erfindungsgemäßen Brandschutzformteils.

Fig. 1 ist eine schematische Querschnittsansicht einer ersten Ausführungsform des erfindungsgemäßen Brandschutzformteils F. Das Brandschutzformteil F enthält ein Brandschutzmaterial B oder besteht aus diesem. Die erste Ausführungsform des erfindungsgemäßen Brandschutzformteils F weist die Gestalt eines gleichseitigen Sterns mit sechs nach außen weisenden Ecken EA bzw. Spitzen P und sechs nach innen weisenden Ecken EI auf. Dabei sind die nach außen weisenden Ecken EA auf einem einzigen Umkreis U angeordnet. Die nach innen weisenden Ecken EI sind auf einem einzigen Inkreis I angeordnet. Der Abstand zwischen dem Inkreis I und dem Umkreis U ist mit der Differenz D angegeben, welche einer Kammhöhe der jeweiligen Spitze P entspricht. Die beiden Schenkel einer nach außen weisenden Ecke EA schließen den Winkel α ein.

Fig. 2 ist eine schematische Querschnittsansicht einer zweiten Ausführungsform des erfindungsgemäßen Brandschutzformteils F. Das Brandschutzformteil F enthält ein Brandschutzmaterial B oder besteht aus diesem. Die zweite Ausführungsform des erfindungsgemäßen Brandschutzformteils F weist die Gestalt eines Sterns mit acht nach außen weisenden Ecken EA bzw. Spitzen P und acht nach innen weisenden Ecken EI auf. Dabei sind die nach außen weisenden Ecken EA auf einem einzigen Umkreis U angeordnet. Dagegen sind vier der nach innen weisenden Ecken EI auf einem ersten Inkreis I1 und vier auf einem zweiten, weiter außen liegenden Inkreis I2 angeordnet. Die beiden Schenkel einer nach außen weisenden Ecke EA schließen den Winkel α ein.

Fig. 3 zeigt schematisch den zur ersten Ausführungsform des erfindungsgemäßen Brandschutzformteils gehörenden Inkreis I und Umkreis U. Dabei berechnet sich die Kammhöhe der jeweiligen Spitze P als der Betrag der Differenz D des Radius' RU des Umkreises U und des Radius' RI des Inkreises I.

Fig. 4 ist eine schematische Querschnittsteilansicht einer dritten Ausführungsform des erfindungsgemäßen Brandschutzformteils F. Das Brandschutzformteil F enthält ein Brandschutzmaterial B oder besteht aus diesem. Die dritte Ausführungsform des erfindungsgemäßen Brandschutzformteils F weist die Gestalt eines Sterns mit 24 nach außen weisenden Ecken EA bzw. Spitzen P und 24 nach innen weisenden Ecken EI auf. Dabei sind 12 der nach außen weisenden Ecken EA auf einem ersten Umkreis U1 und 12 auf einem zweiten, weiter außen liegenden Umkreis U2 angeordnet. Zudem sind 12 der nach innen weisenden Ecken EI auf einem ersten Inkreis I1 und 12 auf einem zweiten, weiter außen liegenden Inkreis I2 angeordnet.

Fig. 5 zeigt schematisch die zur dritten Ausführungsform des erfindungsgemäßen Brandschutzformteils F gehörenden Inkreise I1; I2 und Umkreise U1; U2 an. Dabei berechnet sich die maximale Kammhöhe als der Betrag der Differenz D des Radius' RU2 des äußersten Umkreises U2 und des Radius' RI1 des innersten Inkreises I1.

Fig. 6 zeigt schematisch den Zustand des erfindungsgemäßen Brandschutzformteils F vor (linke Seite) und nach einer Brand- oder Hitzeeinwirkung (rechte Seite) an. Hier ist zu erkennen, dass sich infolge der Wärmeeinwirkung die Gestalt des Brandschutzformteils F aufgrund des Aufblähens des Brandschutzmaterials B oder eines Bestandteils des Brandschutzmaterials B (nicht dargestellt) von der Polygon- oder Sternform zu einer Gestalt, welche kreisförmig oder im Wesentlichen kreisförmig ist, ändert (vgl. rechte Seite). Dabei ist der Radius RF des Brandschutzformteils F nach der Brand- oder Hitzeeinwirkung größer als der Radius RU des Umkreises U. Folglich nimmt das Brandschutzformteil F nach der Brand- oder Hitzeeinwirkung ein signifikant größeres Volumen als vor der Brand- oder Hitzeeinwirkung ein.

Fig. 7 ist eine schematische Darstellung einer Auswahl an Ausgestaltungen der Kontur exemplarischer Ausführungsformen des erfindungsgemäßen Brandschutzformteils. So kann die Querschnittansicht des erfindungsgemäßen Brandschutzformteils beispielsweise ein Polygon mit drei nach außen weisenden Ecken (EA = 3) und drei nach innen weisenden Ecken (EI = 3) (Fig. 7a), ein Polygon mit EA = 4/ EI = 4 (Fig. 7b), ein Polygon mit EA = 6/ EI = 6 (Fig. 7c), ein Polygon mit EA = 6/ EI = 6 (Fig. 7d), ein Polygon mit EA = 7/ EI = 7 (Fig. 7e), ein Polygon mit EA = 8/ EI = 8 (Fig. 7f) oder ein Polygon mit EA = 16/ EI = 16 (Fig. 7g) sein.

### Brandschutzprüfung des erfindungsgemäßen Brandschutzformteils

Von einer bauaufsichtlich anerkannten Prüf-, Überwachungs- und Zertifizierungsstelle wurde eine Brandschutzprüfung eines Kabels in Anlehnung an IEC 60331-21: 1999-04 durchgeführt. Dabei wurde das Kabel einmal ohne Umhüllung und einmal umhüllt mit dem erfindungsgemäßen Brandschutzformteil geprüft. Zweck der Prüfung war es, den Isolationsgehalt des Kabels ohne bzw. mit Umhüllung aus dem erfindungsgemäßen Brandschutzmaterial unter Flammeneinwirkung zu bestimmen. Dabei weist das untersuchte Brandschutzformteil die folgende Zusammensetzung auf: Fibersilikat als Trägermaterial, einen Primer der Zusammensetzung (einschließlich Mengenangaben) gemäß Anspruch 5, ein erstes Beschichtungsmaterial (einschließlich Mengenangaben) gemäß Anspruch 6 und ein zweites Beschichtungsmaterial (einschließlich Mengenangaben) gemäß Anspruch 7.

Bedingungen: Probekabel: Sienopyr FR (L)M2XH 4x10 schwarz 0.6/1kV (Hersteller: PRYSMIAN Kabel und Systeme GmbH), Nennspannung bis 0,6/1 kV, Prüfspannung 1000 V AC (Phase - Phase), Prüfdauer: 90 min.

### Versuchsdurchführung Brandschutzprüfung

Das jeweilige Probekabel von 1,2 m Länge wurde gerade gerichtet und zwischengelagert. Im Test #1 wurde das Kabel ohne Brandschutzmaterial geprüft. Im Test #2 wurde das Kabel einlagig umhüllt mit dem erfindungsgemäßen Brandschutzformteil geprüft. Im Test #3 wurde das Kabel in eine Kabelrinne eingebracht, wobei die Kabelrinne mit dem erfindungsgemäßen Brandschutzformteil einlagig umhüllt wurde. Das Probekabel wurde in die Kabelrinne auf der dem Brenner zugewandten Seite positioniert (Test #3). Der elektrische Anschluss der Probekabel erfolgte entsprechend der IEC 60331-21. Die vier Adern des Kabels wurden mit L1, L2, L3 und N verbunden. Die Spannung zwischen den Phasen betrug 1000 V AC. Die Kabelhalterung bzw. Kabelrinne wurde geerdet. Der Stromfluss je Leiter von 0,25 A wurde durch vier Lastwiderstände realisiert. Der Isolationserhalt mit einem LED-Tableau angezeigt. Das Kabel wurde über einen Zeitraum von 90 Minuten bzw. bis zum Kurzschluss mit einem Brenner entsprechend IEC 60331-11 beflammt. Die Temperatur der Flamme (750 bis 800 °C) entsprach ebenfalls vorgenannter Norm. Der Prüfung wurde in der Box entsprechend IEC 61034-1 durchgeführt. Alle weiteren Vorgaben der o. g. Norm wurden ebenfalls eingehalten. Spätestens nach 90 Minuten wurde der Brenner abgestellt.

**Tabelle 6: Versuchsauswertung Brandschutzprüfung:**

| Test | Beschreibung | Kurzschluss oder Leiterbruch während 90 min Beflammung | Isolationserhalt gemäß Norm erfüllt |
|---|---|---|---|
| #1 | Kabel ohne Brandschutzmaterial | ja, nach 9:45 min | nein |
| #2 | Kabel einlagig umhüllt mit erfindungsgemäßem Brandschutzformteil | nein | ja |
| #3 | Kabel in Kabelrinne, mit Kabelrinne einlagig umhüllt mit erfindungsgemäßem Brandschutzformteil | nein | ja |

### Ergebnisse Brandschutzprüfung

Test #1: Das Probekabel ohne Brandschutzmaterial hat die Anforderungen der Prüfung nicht erfüllt. Bereits nach 9:45 Minuten wurden durch einen Kurzschluss die Sicherungen ausgelöst.
Test #2: Das Probekabel, das mit dem erfindungsgemäßen Brandschutzformteil einlagig umhüllt war, hat die Anforderungen der Prüfung in Anlehnung an IEC 60331-21: 1999-04 (90 min) erfüllt, da während der 90 minütigen Beflammung und der Abkühlphase von 15 min. weder die Sicherungen noch Leuchten ausfielen.
Test #3: Das Probekabel, das in eine Kabelrinne eingelegt war, welche mit dem erfindungsgemäßen Brandschutzformteil einlagig umhüllt war, hat die Anforderungen der Prüfung in Anlehnung an IEC 60331-21: 1999-04 (90 min) erfüllt, da während der 90-minütigen Beflammung und der Abkühlphase von 15 min. weder die Sicherungen noch Leuchten ausfielen.

### Lebensdaueranalyse des erfindungsgemäßen Brandschutzformteils bei Außenbedingungen

Gegenstand der Untersuchung ist die Lebensdaueranalyse des erfindungsgemäßen Brandschutzformteils bei Außenbedingungen gemäß den von der European Organisation for Technical Assessment (EOTA) in folgenden Referenzdokumenten zur Beurteilung von Brandschutzprodukten festgelegten Kriterien und Verfahren:
- ETAG 026-2 Version August 2011 Fire Stopping and Fire Sealing Products. Part 2: Penetration Seals
- EOTA Technical Report 024 Version July 2009 Characterisation, Aspects of Durability and Factory Production Control for Reactive Materials, Components and Products

Die Bewertung ist vom Instituto de Tecnologia de la Construcción de Cataluña; (ITeC) vorgenommen worden. Die Versuche sind in einem akkreditierten Labor durchgeführt worden.

### Hintergrund und Bedingungen der Lebensdaueranalyse

Im Rahmen der Lebensdaueranalyse wurde ein erfindungsgemäßes Brandschutzformteil mit der identischen Zusammensetzung wie das vorstehend, bei der Brandschutzprüfung beschriebene und untersuchte Brandschutzmaterial untersucht. Die Einsatzwitterungsbedingungen entsprechen dem in den vorstehend angegebenen Referenzdokumenten definierten Typ X (Verwendung im Freien), insbesondere EOTA TR 024 Abschnitt 4.2.3. Die Bewertung dieser Kategorie berücksichtigt folgende Einflussgrößen und in der angegebenen Reihenfolge:
- UV-Exposition
- Regen
- Temperaturen zwischen -20°C und 70°C
- Hohe Luftfeuchtigkeit

Die Methoden zur Bewertung der Lebensdauer basieren auf einer Produktlebensdauer von 10 Jahren.

### Methodik der Lebensdaueranalyse

Ziel der Analyse ist der Nachweis, ob eine wesentliche Beeinträchtigung der Brandschutzeigenschaften des erfindungsgemäßen Brandschutzformteils infolge der klimatischen Einflüsse eintritt. Zu diesem Zweck werden Gewebeproben beschleunigten Alterungszyklen ausgesetzt, wie nachfolgend beschrieben. Anschließend werden die thermische Effizienz dieser gealterten Gewebeproben sowie der Kontrollproben des erfindungsgemäßen Brandschutzformteils, die nicht den Alterungszyklen ausgesetzt worden sind, ermittelt, um die Ergebnisse zwischen beiden Probearten zu vergleichen. Zur Prüfung der thermischen Effizienz wird das Brandschutzformteil auf Stahlplatten gelegt und die Proben der externen Feuerkurve gemäß EN 1363-23 ausgesetzt, um die Temperaturerhöhung der vom Gewebe geschützten Stahlplatten zu bestimmen. Es werden die Zeit, bis die Stahlplatten eine Temperatur von 280 °C und 400 °C erreichen, und die Ausdehnungshöhe bestimmt. Vor der Prüfung der thermischen Effizienz werden an den gealterten Proben die Dicke, die flächenbezogene Masse und das Aussehen bestimmt, sowohl vor als nach den Alterungszyklen.

Die für die beschleunigte Alterung vorgesehenen Proben sind den Bedingungen für den Typ X gemäß EOTA TR 024 Abschnitt 4.2.3 ausgesetzt worden. Die Alterung ist in zwei aufeinanderfolgenden Phasen durchgeführt worden:

### Phase 1: UV-Kammer

Exposition der Proben in UV-Kammer während 28 Tage unter den Bedingungen gemäß EN ISO 4892-3 mit einer Kombination A.2 mit Lampen vom Typ 1A (siehe Tabelle 1 der Norm) und gemäß Zyklus Nr. 3 (siehe Tabelle 4) (vgl. EN ISO 4892-3: 2006 Plastics. Methods of exposure to laboratory light sources. Part 3: Fluorescent UV lamps (ISO 4892-3:2006).

Die Exposition besteht aus 112 ununterbrochenen Zyklen, ein Zyklus umfasst:
- 5 h Trockenphase (50 ± 3)°C und relative Luftfeuchte unter 15 %
- 1 h Wasserbesprühung bei einer Kammertemperatur von (25 ± 3)°C

Die UV-Strahlung (45 W/m², 290 nm bis 400 nm) wird während aller Zyklen aufrechterhalten.

### Phase 2: Klimakammer

Die Exposition der Proben in der Klimakammer während 14 Tage erfolgte gemäß dem in nachstehender Tabelle 2 definierten, hydrothermischen Zyklus.

**Tabelle 7: Hydrothermische Zyklen (rF = relative Luftfeuchtigkeit).**

| Tag | Phase | | | |
|---|---|---|---|---|
| | 1 (6 h) | 2 (6 h) | 3 (6 h) | 4 (6 h) |
| 1 und 2 | (20 ± 3)°C, Sättigung rF | (70 ± 3)°C, (20 ± 5)% rF | (20 ± 3)°C, Sättigung rF | (70 ± 3)°C, (20 ± 5)% rF |
| 3 und 4 | (20 ± 3)°C, Sättigung rF | (30 ± 3)°C, (40 ± 5)% rF | (40 ± 3)°C, Sättigung rF | (30 ± 3)°C, (40 ± 5)% rF |
| 5, 6 und 7 | (- 20 ± 3)°C | (40 ± 3)°C, Sättigung rF | (- 20 ± 3)°C | (40 ± 3)°C, Sättigung rF |

Der hydrothermische Zyklus wird zweimal durchgeführt, bis eine kontinuierliche Exposition von 14 Tagen erreicht wird.

### Ergebnisse der Lebensdaueranalyse

In der Tabelle 3 sind die Auswirkungen infolge der beschleunigten Alterung der gealterten Proben vor und nach den Expositionszyklen wie vorstehend beschrieben aufgeführt.

**Tabelle 8: Auswirkungen der Alterung**

| Eigenschaft | Proben vor Prüfung | Proben nach UV-Kammer | Proben nach hydrothermischen Zyklen | Gesamtverlust |
|---|---|---|---|---|
| flächenbezogene Masse (kg/m²) | 2,407 | 2,357 | 2,350 | 2,36 % |
| Dicke¹ (mm) | 1,64 | 1,62 | 1,47 | 10,3 % |
| Aussehen | - | vereinzeltes Auftreten von Stellen mit weißem Pulver auf der Deckschicht nach der Alterung in der UV-Kammer | | |

| | | | | |
|---|---|---|---|---|
| ¹ Aufgrund der heterogenen Natur und der Rauheit der Produktoberfläche besteht eine große Dispersion bei der Bestimmung der einzelnen Dicken. Es sind Mittelwerte angesetzt worden, allerdings sind die Ergebnisse als Richtwerte zu betrachten. | | | | |

Anschließend werden die gealterten Proben (nach den Zyklen gemäß Tabelle 2) und die Kontrollproben (die nicht den Alterungszyklen ausgesetzt worden sind) einer Prüfung zur thermischen Effizienz unterzogen, um die Schutzzeiten beider Probenarten zu vergleichen.

**Tabelle 9: Prüfung der thermischen Effizienz (alle Werte sind Mittelwerte aus 10 untersuchten Proben)**

| Proben | Zeit¹ (Minuten) bis zum Erreichen der Bewertungstemperatur | | Endausdehnungshöhe² (mm) | Ausdehnungsverhältnis³ |
|---|---|---|---|---|
| | T = 280 °C | T = 400 °C | | |
| Kontrolle | 27,6 | 63,2 | 27,4 | 18,9 |
| gealtert | 26,9 | 58,1 | 28,5 | 20,0 |

| | | | | |
|---|---|---|---|---|
| ¹ Um die Ergebnisse der Kontrollproben und der gealterten Proben vergleichen zu können, sind die Ergebnisse mit der flächenbezogenen Masse korrigiert worden, wobei ein linearer Ansatz angenommen wurde. ² Sowohl die Werte zur Ausdehnungshöhe wie das Ausdehnungsverhältnis sind infolge der hohe Dispersion der Einzelwerte als Richtwerte zu verstehen. ³ Verhältnis zwischen Endausdehnungshöhe und Dicke vor der Prüfung | | | | |

### Auswertung der Lebensdaueranalyse

Gemäß den in den vorstehend angegebenen Referenzdokumenten werden folgende Bewertungskriterien definiert:
(a) Die mittlere Zeit zum Erreichen der Bewertungstemperatur der gealterten Proben darf nicht kleiner sein als 85 % der mittleren Zeit bei den Kontrollproben.
(b) Die Einzelzeit zum Erreichen der Bewertungstemperatur aller gealterten Proben darf nicht kleiner sein als 80 % der mittleren Zeit bei den Kontrollproben.

Die Bewertungsergebnisse gemäß diesen Kriterien sind in Tabelle 5 aufgeführt.

**Tabelle 10: Verhalten der gealterten Proben**

| Bewertungskriterium | Bewertungstemperatur | | Bewertung |
|---|---|---|---|
| | T = 280 °C | ' T = 400 °C | |
| (a) mittlere Zeiten | 97,4 % | 92,0 % | Kriterium wird erfüllt |
| (b) Einzelzeiten | alle Proben > 89 % | 1 Probe = 78 %, alle übrigen Proben > 86 % | Kriterium wird erfüllt (siehe nachstehenden Kommentar) |

Der Mittelwert der zum Erreichen der Bewertungstemperatur der gealterten Proben (vorstehendes Bewertungskriterium (a)) erforderlichen Zeit beträgt bei beiden Bewertungstemperaturen wenigstens 92 %, womit das Bewertungskriterium (a) erfüllt ist.

Bei der Betrachtung der Einzelzeiten (vorstehendes Bewertungskriterium (b)) erreichen alle Proben die Bewertungstemperatur in Höhe von 280 °C in jeweils wenigstens 89 % der mittleren Zeit der Kontrollproben. Bezüglich der Bewertungstemperatur von 400 °C liegen alle Proben bis auf eine einzige bei > 86 %. Damit wird auch das Bewertungskriterium (b) mit einer Ausnahme problemlos erfüllt. Die einzige Probe, die das Bewertungskriterium (b) nicht erfüllt, weist eine flächenbezogene Masse von 2,26 kg/m² (2,21 kg/m² nach Alterung) auf. Dies ist der niedrigste Wert aller Proben. Der flächenbezogene Masseverlust des Produkts infolge der Alterungszyklen ist akzeptabel.

Somit ist kein negativer Alterungseinfluss hinsichtlich der Enddicke der Proben nach der Prüfung der thermischen Effizienz (Endausdehnungshöhe) festzustellen. Die Dickenbestimmungen sind infolge der ungleichmäßigen Produktoberfläche als Richtwerte zu verstehen, sowohl für das anfängliche Gewebe als auch für das expandierte Brandschutzmaterial nach der Prüfung der thermischen Effizienz.

Demzufolge ist das untersuchte, erfindungsgemäße Brandschutzformteil zur Verwendung bei Witterungsbedingungen vom Typ X (Verwendung im Freien) bei einer geplanten Lebensdauer von 10 Jahren als geeignet zu betrachten.

Zusammenfassend wird festgestellt, dass das erfindungsgemäße Brandschutzformteil sowohl die Voraussetzungen der Brandschutzprüfung als auch der Lebensdaueranalyse erfüllt. Somit bietet das erfindungsgemäße Brandschutzformteil bei der Verwendung zum Umhüllen eines Kabels, einer Leitung, eines Konstruktionsteils oder einer systemgebundenen Einbaukomponente aufgrund seiner Polygongestalt in der Querschnittsansicht einen verbesserten Brandschutz. Weiter verbessern lässt sich die Brandschutzwirkung auch bei witterungsbedingtem Einsatz durch Verwendung des Primers, mittels dessen eine Rissbildung in der Beschichtung des Brandschutzformteils beim Ausbilden von Radien, insbesondere engen Radien, wirksam vermieden wird.

### Ansprüche

**1.** Brandschutzformteil (F) zum Umhüllen eines Kabels, einer Leitung oder eines Konstruktionsteils eines Gebäudes;
   wobei das Brandschutzformteil (F) vorzugsweise die Gestalt eines länglichen Hohlkörpers aufweist;
   wobei das Brandschutzformteil (F) in der Querschnittsansicht die Gestalt eines Polygons (P), vorzugsweise eines Sterns, insbesondere eines gleichseitigen Sterns, aufweist;
   wobei das Polygon (P) nach innen weisende Ecken (EI) und nach außen weisende Ecken (EA) aufweist;
   wobei die Anzahl der nach innen weisenden Ecken (EI) eine natürliche Zahl ≥ 2, vorzugsweise zwischen 2 und 32, beträgt;
   wobei die Anzahl der nach außen weisenden Ecken (EA) eine natürliche Zahl ≥ 3, vorzugsweise zwischen 3 und 32, beträgt;
   wobei die Anzahl der nach außen weisenden Ecken (EA) größer oder gleich der Anzahl der nach innen weisenden Ecken (EI) ist; und
   wobei das Brandschutzformteil (F) ein Brandschutzmaterial (B) aufweist oder aus einem Brandschutzmaterial (B) besteht.
**2.** Brandschutzformteil (F) nach Anspruch 1, dadurch gekennzeichnet, dass das Polygon (P) wenigstens einen Inkreis (I) und wenigstens einen Umkreis (U) aufweist;
   wobei die nach innen weisenden Ecken (EI) auf dem Inkreis (I) oder auf einer Mehrzahl von Inkreisen (I1, I2, ...) angeordnet sind; und
   wobei die nach außen weisenden Ecken (EA) auf dem Umkreis (U) oder auf einer Mehrzahl von Umkreisen (U1, U2, ...) angeordnet sind.
**3.** Brandschutzformteil (F) nach Anspruch 2, dadurch gekennzeichnet, dass der Betrag der Differenz (D) des Radius' (RU) des äußersten Umkreises (U) und des Radius' (RI) des innersten Inkreises (I) zwischen 5 und 50 mm, vorzugsweise zwischen 8 und 25 mm, insbesondere zwischen 10 und 20 mm, beträgt; und/oder
   wobei der Radius (RU) des äußersten Umkreises (U) vorzugsweise zwischen 9 und 200 mm, vorzugsweise 15 bis 150 mm, beträgt; und/oder
   wobei der Radius (RI) des innersten Inkreises (I) vorzugsweise zwischen 5 und 100 mm, weiter vorzugsweise zwischen 10 und 60 mm, insbesondere zwischen 10 und 50 mm, beträgt.
**4.** Brandschutzformteil (F) nach einem der Ansprüche 1 bis 3, dadurch gekennzeichnet, dass das Brandschutzmaterial (B) ein Trägermaterial (T) aufweist; wobei das Trägermaterial (T) ein Fibersilikat, vorzugsweise ein Calciumsilikat und/oder ein Siliziumsilikat, enthält oder daraus besteht; und/oder
   wobei das Trägermaterial (T) vorzugsweise eine mittlere Schichtdicke im Bereich von 0,5 bis 4 mm aufweist; und/oder
   wobei vorzugsweise die Schichtdicke an einer beliebigen Stelle des Trägermaterials um höchstens 20 %, vorzugsweise um höchstens 10 %, insbesondere um höchstens 5 %, von der mittleren Schichtdicke des Trägermaterials (T) abweicht; und/oder das Trägermaterial (T) als ein geflochtener Garn, ein Gewebe, ein geflochtener Zopf oder eine Gitterstruktur ausgebildet ist.
**5.** Brandschutzformteil (F) nach einem der Ansprüche 1 bis 4, dadurch gekennzeichnet, dass das Brandschutzmaterial (B) ferner ein erstes Beschichtungsmaterial (S1) aufweist;
   wobei das erste Beschichtungsmaterial (S1) auf dem Trägermaterial (T) aufgebracht oder in dem Trägermaterial (T) enthalten ist;
   wobei das Brandschutzmaterial (B) ferner einen Primer (P) aufweist;
   wobei der Primer (P) vorzugsweise eine Grundierung (G), einen Härter (H) und einen Verdünner (V) enthält oder daraus besteht;
   wobei die Grundierung (G) enthält:
   Xylol (CAS-Nr. 1330-20-7), vorzugsweise in einem Massenanteil von 12,5 bis 20 %;
   Kohlenwasserstoffe, C9, Aromate (CAS-Nr. 64742-95-6), vorzugsweise in einem Massenanteil von 5 bis 12,5 %;
   Reaktionsprodukt: Bisphenol-A-Epichlorhydrinharze mit durchschnittlichem Molekulargewicht 700 bis 1100 (CAS-Nr. 25068-38-6), vorzugsweise in einem Massenanteil von 5 bis 12,5 %;
   Butan-1-ol (CAS-Nr. 71-36-3), vorzugsweise in einem Massenanteil von 5 bis 10 %;
   Trizinkbis(orthophosphat) (CAS-Nr. 7779-90-0), vorzugsweise in einem Massenanteil von 5 bis 12,5 %;
   Ethylbenzol (CAS-Nr. 100-41-4), vorzugsweise in einem Massenanteil von 1 bis 5 %;
   4-Hydroxy-4-methyl-pentan-2-on (CAS-Nr. 123-42-2), vorzugsweise in einem Massenanteil von 1 bis 5 %;
   Lösungsmittelnaphtha (Erdöl), leicht aromatisiert (CAS-Nr. 64742-95-6), vorzugsweise in einem Massenanteil von 0,1 bis 0,25 %; und
   Siliciumdioxid (CAS-Nr. 7631-86-9), vorzugsweise in einem Massenanteil von 1 bis 5 %;
   wobei der Härter (H) enthält:
   Hexamethylen-1,6-diisocyanat, Homopolymer (CAS-Nr. 28182-81-2), vorzugsweise in einem Massenanteil von wenigstens 40 %;
   Kohlenwasserstoffe, C9, Aromate (CAS-Nr. 64742-95-6), vorzugsweise in einem Massenanteil von 25 bis 40 %;
   Hexamethylen-1,6-diisocyanat (CAS-Nr. 822-06-0), vorzugsweise in einem Massenanteil von 0,25 bis 0,5 %;
   Dimethylbis[(1-oxoneodecyl)oxy]stannan (CAS-Nr. 68928-76-7), vorzugsweise in einem Massenanteil von 0,1 bis 0,25 %; und
   n-Butylacetat (CAS-Nr. 123-86-4), vorzugsweise in einem Massenanteil von 1 bis 5 %;
   wobei der Verdünner (V) enthält:
   Xylol (CAS-Nr. 1330-20-7), vorzugsweise in einem Massenanteil von 40 bis weniger als 100 %;
   Butan-l-ol (CAS-Nr. 71-36-3), vorzugsweise in einem Massenanteil von 20 bis 25 %;
   Ethylbenzol (CAS-Nr. 100-41-4), vorzugsweise in einem Massenanteil von 12,5 bis 20 %; und
   n-Butylacetat (CAS-Nr. 123-86-4), vorzugsweise in einem Massenanteil von 20 bis 25 %;
   wobei sich der jeweilige Massenanteil der Bestandteile der Grundierung (G), des Härters (H) und des Verdünners (V) vorzugsweise auf die Masse des Primers (P) bezieht; und
   wobei das Massenverhältnis der Grundierung (G) zum Härter (H) vorzugsweise 4 bis 6, vorzugsweise 5, zu 1 beträgt.
**6.** Brandschutzformteil (F) nach Anspruch 5, dadurch gekennzeichnet, dass das erste Beschichtungsmaterial (S1) ein Einkomponentenmaterial (1K) enthält oder daraus besteht;
   wobei das Einkomponentenmaterial (1K) vorzugsweise folgende Stoffe enthält:
   Triphenylphosphat (CAS-Nr. 115-86-6), vorzugsweise in einem Massenanteil von < 1 %;
   Nonylphenolethoxylat (CAS-Nr. 9016-45-9), vorzugsweise in einem Massenanteil von < 1 %;
   Ammoniumhydroxid (CAS-Nr. 1336-21-6), vorzugsweise in einem Massenanteil von < 1 %;
   Pyrithionzink (CAS-Nr. 13463-41-7), vorzugsweise in einem Massenanteil von 0,1 bis 0,2 %;
   Terbutryn (CAS-Nr. 886-50-0), vorzugsweise in einem Massenanteil von 0,1 bis 0,2 %; und
   Zinkoxid (CAS-Nr. 1314-13-2), vorzugsweise in einem Massenanteil von 0,1 bis 0,2 %;
   wobei sich der jeweilige Massenanteil vorzugsweise auf die Masse des Einkomponentenmaterials (1K) bezieht.
**7.** Brandschutzformteil (F) nach Anspruch 5 oder 6, dadurch gekennzeichnet, dass das Brandschutzmaterial (B) ferner ein zweites Beschichtungsmaterial (S2) aufweist;
   wobei das zweite Beschichtungsmaterial (S2) auf dem Primer (P) oder auf einem Gemisch aus dem Primer (P) und dem ersten Beschichtungsmaterial (S1) aufgebracht ist;
   wobei das zweite Beschichtungsmaterial (S2) ein erstes Zweikomponentenmaterial (2K1), ein zweites Zweikomponentenmaterial (2K2) und vorzugsweise den Verdünner (V) enthält oder daraus besteht;
   wobei das erste Zweikomponentenmaterial (2K1) vorzugsweise folgende Stoffe enthält:
   Xylol (CAS-Nr. 1330-20-7), vorzugsweise in einem Massenanteil von 1 bis 5 %;
   Ethylbenzol (CAS-Nr. 100-41-4), vorzugsweise in einem Massenanteil von 1 bis 5 %;
   leichte, aromatische Lösungsmittelnaphtha (Erdöl) (CAS-Nr. 64742-95-6), vorzugsweise in einem Massenanteil von 0,5 bis 5 %;
   1,3,3-Trimethyl-N-(2-methylpropyliden)-5-[(2-methylpropyliden)amino]cyclohexanmetylamin (CAS-Nr. 54914-37-3), vorzugsweise in einem Massenanteil von 0,25 bis 0,5 %;
   Dimethylbis[(1-oxoneodecyl)oxy]stannan (CAS-Nr. 68928-76-7), vorzugsweise in einem Massenanteil von 0,1 bis 0,25 %;
   n-Butylacetat (CAS-Nr. 123-86-4), vorzugsweise in einem Massenanteil von 12,5 bis 15 %;
   2-Methoxy-1-methylethylacetat (CAS-Nr. 108-65-6), vorzugsweise in einem Massenanteil von 1 bis 5 %; und
   Ethyl-3-ethoxypropionat (CAS-Nr. 763-69-9), vorzugsweise in einem Massenanteil von 1 bis 5 %;
   wobei das zweite Zweikomponentenmaterial (2K2) vorzugsweise folgende Stoffe enthält:
   Hexamethylen-1,6-diisocyanat Homopolmyer (CAS-Nr. 28182-81-2), vorzugsweise in einem Massenanteil von wenigstens 40 %;
   Aromate, Kohlenwasserstoffe, C9 (CAS-Nr. 64742-95-6), vorzugsweise in einem Massenanteil von 25 bis 40 %;
   Hexamethylen-1,6-diisocyanat (CAS Nr. 822-06-0), vorzugsweise in einem Massenanteil von 0,25 bis 0,5 %;
   Dimethylbis[(1-oxoneodecyl)oxy]stannan (CAS-Nr. 68928-76-7), vorzugsweise in einem Massenanteil von 0,1 bis 0,25 %; und
   n-Butylacetat (CAS-Nr. 123-86-4), vorzugsweise in einem Massenanteil von 1 bis 5 %;
   wobei sich der jeweilige Massenanteil der Bestandteile des ersten Zweikomponentenmaterials (2K1) und des zweiten Zweikomponentenmaterials (2K2) vorzugsweise auf die Masse des zweiten Beschichtungsmaterials (S2) bezieht; und
   wobei der Verdünner (V) vorzugsweise den restlichen Massenanteil des zweiten Beschichtungsmaterials (S2) ausmacht.
**8.** Brandschutzformteil (F) nach einem der Ansprüche 5 bis 7, dadurch gekennzeichnet, dass das erste Beschichtungsmaterial (S1) eine mittlere Schichtdicke im Bereich von 0,5 bis 4 mm aufweist;
   wobei vorzugsweise die Schichtdicke des ersten Beschichtungsmaterials (S1) an einer beliebigen Stelle um höchstens 20 %, vorzugsweise um höchstens 10 %, insbesondere um höchstens 5 %, von der mittleren Schichtdicke des erstes Beschichtungsmaterials (S1) abweicht.
**9.** Brandschutzformteil (F) nach Anspruch 7 oder 8, dadurch gekennzeichnet, dass das zweite Beschichtungsmaterial (S2) eine mittlere Schichtdicke im Bereich von 0,5 bis 4 mm aufweist; oder
   das erste Beschichtungsmaterial (S1) und das zweite Beschichtungsmaterial (S2) zusammen eine mittlere Schichtdicke im Bereich von 1 bis 4 mm aufweisen; und wobei vorzugsweise die Schichtdicke des zweiten Beschichtungsmaterials (S2) an einer beliebigen Stelle um höchstens 20 %, vorzugsweise um höchstens 10 %, insbesondere um höchstens 5 %, von der mittleren Schichtdicke des zweiten Beschichtungsmaterials (S2) abweicht; oder
   wobei vorzugsweise die Schichtdicke der Kombination aus dem ersten Beschichtungsmaterial (S1) und dem zweiten Beschichtungsmaterial (S2) an einer beliebigen Stelle um höchstens 20 %, vorzugsweise um höchstens 10 %, insbesondere um höchstens 5 %, von der mittleren Schichtdicke der Kombination aus dem ersten Beschichtungsmaterial (S1) und dem zweiten Beschichtungsmaterial (S2) abweicht.
**10.** Brandschutzformteil (F) nach einem der Ansprüche 1 bis 9, dadurch gekennzeichnet, dass ein von den Schenkeln wenigstens einer, vorzugsweise aller, nach außen weisenden Ecke (EA) eingeschlossener Winkel (α) zwischen 10 und 60°, vorzugsweise 20 bis 40°, beträgt.
**11.** Verwendung eines Polygons (P), vorzugsweise eines Sterns, insbesondere eines gleichseitigen Sterns, als Gestalt für einen Querschnitt eines Brandschutzformteils (F);
   wobei das Polygon (P) nach innen weisende Ecken (EI) und nach außen weisende Ecken (EA) aufweist;
   wobei die Anzahl der nach innen weisenden Ecken (EI) eine natürliche Zahl ≥ 2 vorzugsweise zwischen 2 und 32, beträgt;
   wobei die Anzahl der nach außen weisenden Ecken (EA) eine natürliche Zahl ≥ 3, vorzugsweise zwischen 3 und 32, beträgt; und
   wobei die Anzahl der nach außen weisenden Ecken (EA) größer oder gleich der Anzahl der nach innen weisenden Ecken (EI) ist.
**12.** Verwendung nach Anspruch 10, dadurch gekennzeichnet, dass das Brandschutzformteil (F) ein Brandschutzformteils (F) nach einem der Ansprüche 1 bis 10 ist.

## Patentansprüche

1. Brandschutzaufbau, wenigstens aufweisend oder bestehend aus:
eine erste Hülle;
wobei die erste Hülle einen Innenraum umgibt oder umschließt,
wobei der Innenraum geeignet ist, ein Kabel, eine Leitung oder ein Rohr oder Teilabschnitte derselben aufzunehmen;
wobei die erste Hülle wenigstens ein Material enthält oder aus diesem besteht, wobei das wenigstens eine Material ausgewählt ist aus einer Gruppe, bestehend aus: einem Polyurethan-Schaum (PUR-Schaum), einem Polyisocyanurat-Schaum (PIR-Schaum), einem Polyurethan-/Polyisocyanurat-Schaum (PUR/PIR-Schaum), einem Elastomerschaum (FEF), einem Schaumstoff auf Basis eines synthetischen Kautschuks, einem Korkmaterial, und einem Aerogel; und
eine zweite Hülle;
wobei die zweite Hülle die erste Hülle umgibt oder umschließt;
wobei die zweite Hülle ein bei Wärmeeinwirkung expandierbares Material, vorzugsweise ein Brandschutzmaterial, enthält oder aus diesem besteht;
wobei das bei Wärmeeinwirkung expandierbare Material vorzugsweise Blähgraphit, eine Kombination aus einem ersten Beschichtungsmaterial und einem Primer, oder eine Kombination aus dem ersten Beschichtungsmaterial und einem zweiten Beschichtungsmaterial und dem Primer ist.

2. Brandschutzaufbau nach Anspruch 1, ferner aufweisend:
eine dritte Hülle,
wobei die dritte Hülle die zweite Hülle umgibt oder umschließt;
wobei die dritte Hülle ein Brandschutzmaterial enthält oder aus diesem besteht.

3. Brandschutzaufbau, wenigstens aufweisend oder bestehend aus:
eine erste Hülle;
wobei die erste Hülle einen Innenraum umgibt oder umschließt,
wobei der Innenraum geeignet ist, ein Kabel, eine Leitung oder ein Rohr oder Teilabschnitte derselben aufzunehmen;
wobei die erste Hülle wenigstens ein Material enthält oder aus diesem besteht, wobei das wenigstens eine Material ausgewählt ist aus einer Gruppe, bestehend aus:
einem Polyurethan-Schaum (PUR-Schaum), einem Polyisocyanurat-Schaum (PIR-Schaum), einem Polyurethan-/Polyisocyanurat-Schaum (PUR/PIR-Schaum), einem Elastomerschaum (FEF), einem Schaumstoff auf Basis eines synthetischen Kautschuks, einem Korkmaterial, und einem Aerogel; und
wobei die erste Hülle auf deren äußerer Umfangsfläche oder auf deren innerer und äußerer Umfangsfläche eine Beschichtung aufweist, wobei die Beschichtung eine Kombination aus einem ersten Beschichtungsmaterial und einem Primer, oder eine Kombination aus dem ersten Beschichtungsmaterial und einem zweiten Beschichtungsmaterial und dem Primer enthält oder aus einer dieser Kombinationen besteht; und
wobei die Beschichtung vorzugsweise unmittelbar auf der äußeren Umfangsfläche oder unmittelbar auf der inneren und äußeren Umfangsfläche der ersten Hülle aufgebracht ist.

4. Verwendung einer ersten Hülle und einer zweite Hülle in einem Brandschutzaufbau, vorzugsweise in einem Brandschutzformteil, zur Verbesserung der Wärmeschutzwirkung;
wobei die erste Hülle einen Innenraum umgibt oder umschließt,
wobei der Innenraum geeignet ist, ein Kabel, eine Leitung oder ein Rohr oder Teilabschnitte derselben aufzunehmen;
wobei die erste Hülle wenigstens ein Material enthält oder aus diesem besteht, wobei das wenigstens eine Material ausgewählt ist aus einer Gruppe, bestehend aus:
einem Polyurethan-Schaum (PUR-Schaum), einem Polyisocyanurat-Schaum (PIR-Schaum), einem Polyurethan-/Polyisocyanurat-Schaum (PUR/PIR-Schaum), einem Elastomerschaum (FEF), einem Schaumstoff auf Basis eines synthetischen Kautschuks, einem Korkmaterial, und einem Aerogel; und
wobei die zweite Hülle die erste Hülle umgibt oder umschließt;
wobei die zweite Hülle ein bei Wärmeeinwirkung expandierbares Material enthält oder aus diesen besteht;
wobei das bei Wärmeeinwirkung expandierbare Material vorzugsweise Blähgraphit oder eine Kombination aus einem ersten Beschichtungsmaterial und einem Primer, oder eine Kombination aus dem ersten Beschichtungsmaterial und einem zweiten Beschichtungsmaterial und dem Primer ist.

5. Verwendung eines Polyurethan-Schaums (PUR-Schaum), eines Polyisocyanurat-Schaums (PIR-Schaum), eines Polyurethan-/Polyisocyanurat-Schaums (PUR/PIR-Schaum), eines Elastomerschaums (FEF), eines Schaumstoffs auf Basis eines synthetischen Kautschuks, eines Korkmaterials, oder eines Aerogels; und
eines bei Wärmeeinwirkung expandierbaren Materials in einem Brandschutzaufbau oder Brandschutzsystem zur Verbesserung der Wärmeschutzwirkung;
wobei das bei Wärmeeinwirkung expandierbare Material vorzugsweise Blähgraphit oder eine Kombination aus einem ersten Beschichtungsmaterial und einem Primer, oder eine Kombination aus dem ersten Beschichtungsmaterial und einem zweiten Beschichtungsmaterial und dem Primer ist.

6. Brandschutzkonstruktion, aufweisend:
ein Aerogel; und
eine Kombination aus einem ersten Material und einem Primer, oder eine Kombination aus dem ersten Material und einem zweiten Material und dem Primer, wobei die Kombination vorzugsweise eine Kombination aus einem ersten Beschichtungsmaterial und dem Primer, oder vorzugsweise eine Kombination aus dem ersten Beschichtungsmaterial und einem zweiten Beschichtungsmaterial und dem Primer ist.

7. Brandschutzkonstruktion nach Anspruch 6, **dadurch gekennzeichnet, dass** die Brandschutzkonstruktion wenigstens eine Schicht, insbesondere eine, zwei, drei oder vier Schichten, aufweist, welche jeweils die Kombination aus dem ersten Material und dem Primer oder die Kombination aus dem ersten Material und dem zweiten Material und dem Primer enthält, und welche jeweils zusätzlich das Aerogel in Gestalt von Partikeln, Pulver, Granulat oder Bruchstücken enthält;
wobei der Volumenanteil des Aerogels an der jeweiligen Schicht (Bezugsgröße: Gesamtvolumen der Schicht) vorzugsweise 10 bis 98 % beträgt.

8. Brandschutzkonstruktion nach Anspruch 6, **dadurch gekennzeichnet, dass** die Brandschutzkonstruktion wenigstens aufweist:
wenigstens eine Schicht, welche die Kombination aus dem ersten Material und dem Primer oder die Kombination aus dem ersten Material und dem zweiten Material und dem Primer enthält oder daraus besteht; und
wenigstens eine weitere Schicht, welche das Aerogel enthält oder daraus besteht.

9. Brandschutzkonstruktion nach einem der Ansprüche 6 bis 8, **dadurch gekennzeichnet, dass** die erfindungsgemäße Brandschutzkonstruktion ferner außen einseitig oder innen und außen beidseitig mit einem Trägermaterial armiert ist.

10. Verwendung eines Aerogels in einem Brandschutzmaterial oder in einer Brandschutzkonstruktion zur Verbesserung der Brandschutzwirkung des Brandschutzmaterials oder der Brandschutzkonstruktion.

11. Verwendung nach Anspruch 10, **dadurch gekennzeichnet, dass** das Aerogel als Schichtbestandteil eines Brandschutzmaterials oder einer Brandschutzkonstruktion, vorzugsweise in Gestalt von Partikeln, Pulver, Granulat oder Bruchstücken, verwendet wird; oder
das Aerogel in Gestalt einer Schicht in einem Brandschutzmaterial oder in einer Brandschutzkonstruktion verwendet wird.
